(19) Europäisches Patentamt

European Patent Office

Office européen des brevets

(11) **EP 4 734 425 A1**

(12) **EUROPEAN PATENT APPLICATION**

published in accordance with Art. 153(4) EPC

(43) Date of publication:
29.04.2026 Bulletin 2026/18

(21) Application number: 23948863.8

(22) Date of filing: 16.08.2023

(51) International Patent Classification (IPC):
*H04L 5/00* (2006.01)

(52) Cooperative Patent Classification (CPC):
H04L 5/00

(86) International application number:
PCT/CN2023/113412

(87) International publication number:
WO 2025/035434 (20.02.2025 Gazette 2025/08)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(71) Applicant: Huawei Technologies Co., Ltd.
Shenzhen, Guangdong 518129 (CN)

(72) Inventors:
• LIU, Lei
Shenzhen, Guangdong 518129 (CN)

• BI, Xiaoyan
Shenzhen, Guangdong 518129 (CN)
• MA, Jianglei
Shenzhen, Guangdong 518129 (CN)
• GE, Yiqun
Shenzhen, Guangdong 518129 (CN)
• SHI, Wuxian
Shenzhen, Guangdong 518129 (CN)

(74) Representative: MERH-IP Matias Erny Reichl Hoffmann
Patentanwälte PartG mbB
Paul-Heyse-Straße 29
80336 München (DE)

(54) **INFORMATION TRANSMISSION METHOD AND APPARATUS**

(57) Embodiments of this application provide an information transmission method and an apparatus. The method includes: A first device sends first indication information to a second device, where the first indication information indicates $S_1$ orthogonal vectors, and $S_1$ is a positive integer; the second device determines a first channel estimation assistance matrix based on the $S_1$ orthogonal vectors; and the second device performs channel estimation based on the first channel estimation assistance matrix. It can be learned that the second device performs channel estimation based on the first channel estimation assistance matrix, and performing channel estimation based on the first channel estimation assistance matrix can improve channel estimation precision. In addition, the method may be applied to a scenario of a sparse RS, and can improve channel estimation precision for the sparse RS.

Information transmission method 100

FIG. 6a

**Description**

**TECHNICAL FIELD**

This application relates to the field of communication technologies, and in particular, to an information transmission method and an apparatus.

**BACKGROUND**

To support a multiple-input multiple-output (multiple-input multiple-output, MIMO) technology with ultra-high-dimensional transmit/receive antenna ports and ultra-wide bandwidths, sparse reference signals (reference signal, RS) may be used for data transmission and channel state information (channel state information, CSI) collection. The sparse RSs means that resources occupied by the RSs in one or more of time domain, frequency domain, and space domain are sparsely distributed. For example, that the RS occupies sparsely distributed resources on transmit antenna ports means that the RS is sent on a small quantity of transmit antenna ports, instead of some consecutive transmit antenna ports or all transmit antenna ports. For another example, that the RS occupies sparsely distributed resources in frequency domain/time domain means that the RS is sent by using a small quantity of resources in frequency domain/time domain, instead of by using evenly and densely distributed resources in frequency domain/time domain.

How to improve channel estimation precision is a technical problem to be resolved.

**SUMMARY**

Embodiments of this application provide an information transmission method and an apparatus, to improve channel estimation precision.

According to a first aspect, this application provides an information transmission method. The method may be applied to a second device, or may be applied to a chip in a second device, or may be applied to a logical module or software that can implement all or a part of functions of a second device. The following uses the second device as an example for description. The method includes: The second device receives first indication information from a first device, where the first indication information indicates $S_1$ orthogonal vectors, and $S_1$ is a positive integer; the second device determines a first channel estimation assistance matrix based on the $S_1$ orthogonal vectors; and the second device performs channel estimation based on the first channel estimation assistance matrix.

It can be learned that the second device performs channel estimation based on the first channel estimation assistance matrix. The first channel estimation assistance matrix determined based on the $S_1$ orthogonal vectors may represent a channel feature, for example, may represent a main base of channel space. In this case, performing channel estimation based on the first channel estimation assistance matrix can improve channel estimation precision. The method may be applied to a scenario of a sparse RS, and can improve channel estimation precision for the sparse RS. In addition, the first channel estimation assistance matrix is determined based on the first indication information, and overheads of indicating the $S_1$ orthogonal vectors by the first indication information are small, so that indication overheads can be reduced.

In an optional implementation, before the second device receives the first indication information from the first device, the method further includes: The second device determines $S_2$ orthogonal vectors, where $S_2$ is a positive integer; and the second device sends second indication information to the first device, where the second indication information indicates the $S_2$ orthogonal vectors, and the $S_2$ orthogonal vectors are used by the first device to determine the $S_1$ orthogonal vectors. It can be learned that the second device may recommend the $S_2$ orthogonal vectors to the first device, and the first device may determine the $S_1$ orthogonal vectors based on the $S_2$ orthogonal vectors recommended by the second device. When the second device is a terminal device, because the terminal device has a capability of obtaining whether a channel feature changes, the terminal device may determine the recommended $S_2$ orthogonal vectors by using this capability, so that the first channel estimation assistance matrix determined based on the $S_1$ orthogonal vectors helps further improve channel estimation precision.

In an optional implementation, the method further includes: The second device receives a first coefficient matrix from the first device; and that the second device determines the first channel estimation assistance matrix based on the $S_1$ orthogonal vectors includes: determining the first channel estimation assistance matrix based on the $S_1$ orthogonal vectors and the first coefficient matrix.

In an optional implementation, that the second device determines the first channel estimation assistance matrix based on the $S_1$ orthogonal vectors includes: The second device determines $S_3$ orthogonal vectors based on the $S_1$ orthogonal vectors; and the second device determines the first channel estimation assistance matrix based on the $S_3$ orthogonal vectors. When the first device is a terminal device, because the terminal device has a capability of obtaining whether a channel feature changes, the terminal device may determine recommended $S_1$ orthogonal vectors by using this capability. In this way, the first device may determine the $S_3$ orthogonal vectors based on the $S_1$ orthogonal vectors recommended by the second device, so that the first channel estimation assistance matrix determined by the first device based on the $S_3$ orthogonal vectors helps further improve channel estimation precision.

Optionally, the method further includes: The second device receives a first coefficient matrix from the first device; and the second device determines a second coefficient matrix based on the first coefficient matrix. That the second device determines the first channel estimation assistance matrix based on the $S_3$ orthogonal vectors includes: The second device determines the first channel estimation assistance matrix based on the $S_3$ orthogonal vectors and the second coefficient matrix.

In an optional implementation, the method further includes: If the second device fails to receive the first indication information from the first device, the second device determines the first channel estimation assistance matrix based on the $S_2$ orthogonal vectors, where $S_2$ is a positive integer. In this method, the first device does not need to send the first indication information to the second device, so that indication overheads can be reduced.

In an optional implementation, the method further includes: The second device receives the first coefficient matrix from the first device. That the second device determines the first channel estimation assistance matrix based on the $S_2$ orthogonal vectors includes: The second device determines the first channel estimation assistance matrix based on the $S_2$ orthogonal vectors and the first coefficient matrix.

In an optional implementation, the method further includes: The second device determines a third coefficient matrix. That the second device determines the first channel estimation assistance matrix based on the $S_2$ orthogonal vectors includes: The second device determines the first channel estimation assistance matrix based on the $S_2$ orthogonal vectors and the third coefficient matrix. In this method, the first device does not need to send the first coefficient matrix to the second device, so that indication overheads can be reduced.

In an optional implementation, the method further includes: The second device sends a third coefficient matrix to the first device, where the third coefficient matrix is used by the first device to determine the first coefficient matrix.

In an optional implementation, the method further includes: The second device receives an RS from the first device; and the second device determines a measured channel coefficient based on the RS. That the second device performs channel estimation based on the first channel estimation assistance matrix includes: The second device determines a target channel coefficient based on the measured channel coefficient and the first channel estimation assistance matrix. It can be learned that, in a case in which the RS is sent by the first device to the second device, the second device may determine the measured channel coefficient based on the RS. The measured channel coefficient can reflect channel information on a measured resource, and the measured resource is a part of resources included in a target resource. All channel information on the target resource, namely, the target channel coefficient may be obtained based on the measured channel coefficient and the first channel estimation assistance matrix. The measured channel coefficient helps improve channel estimation precision.

In an optional implementation, the method further includes: The second device sends an RS to the first device; and the second device receives a measured channel coefficient from the first device, where the measured channel coefficient is determined by the first device based on the RS. That the second device performs channel estimation based on the first channel estimation assistance matrix includes: determining a target channel coefficient based on the measured channel coefficient and the first channel estimation assistance matrix. It can be learned that, in a case in which the RS is sent by the second device to the first device, the second device receives the measured channel coefficient fed back by the first device. The measured channel coefficient can reflect channel information on a measured resource, and the measured resource is a part of resources included in a target resource. All channel information on the target resource, namely, the target channel coefficient may be obtained based on the measured channel coefficient and the first channel estimation assistance matrix. The measured channel coefficient helps improve channel estimation precision.

In an optional implementation, the target channel coefficient is obtained by performing linear transformation on the measured channel coefficient based on the first channel estimation assistance matrix.

In an optional implementation, that the second device determines the target channel coefficient based on the measured channel coefficient and the first channel estimation assistance matrix includes: The second device determines the target channel coefficient based on a first matrix, the measured channel coefficient, and the first channel estimation assistance matrix, where the first matrix is a matrix including t vectors in the first channel estimation assistance matrix, t is a quantity of resources corresponding to the measured channel coefficient, and t is a positive integer.

In an optional implementation, the target channel coefficient is obtained by performing linear transformation on the measured channel coefficient based on the first matrix and the first channel estimation assistance matrix.

In an optional implementation, a resource corresponding to the target channel coefficient is the same as a resource corresponding to the first channel estimation assistance matrix; and a resource corresponding to the measured channel coefficient is included in the resource corresponding to the target channel coefficient.

In an optional implementation, the method further includes: The second device receives third indication information from the first device, where the third indication information indicates a first bandwidth resource; and the target channel coefficient obtained by the second device by performing channel estimation based on the first channel estimation assistance matrix is a target channel coefficient corresponding to the first bandwidth resource.

In an optional implementation, the method further includes: The second device receives third indication information from the first device, where the third indication information indicates a first bandwidth resource; and the second device determines a second bandwidth resource based on the first bandwidth resource, where the target channel coefficient obtained by the second device by performing channel estimation based on the first channel estimation assistance matrix is a target channel coefficient corresponding to the second bandwidth resource.

In an optional implementation, the method further includes: The second device performs channel estimation based on a second channel estimation assistance matrix to obtain a target channel coefficient corresponding to a third bandwidth resource, where the third bandwidth resource is different from the first bandwidth resource; the second channel estimation assistance matrix is determined based on $S_4$ orthogonal vectors; and the second channel estimation assistance matrix is the same as or different from the first channel estimation assistance matrix, and the $S_4$ orthogonal vectors are the same as or different from orthogonal vectors used to determine the first channel estimation assistance matrix.

In an optional implementation, $S_1$ is equal to 1, and the first channel estimation assistance matrix is the $S_1$ orthogonal vectors; or $S_1$ is greater than 1, the $S_1$ orthogonal vectors correspond to a same resource, and the first channel estimation assistance matrix is a sub-unitary matrix including the $S_1$ orthogonal vectors; or $S_1$ is greater than 1, the $S_1$ orthogonal vectors correspond to different resources, the first channel estimation assistance matrix is a Kronecker product of $M_1$ matrices, orthogonal vectors included in a same matrix in the $M_1$ matrices correspond to a same resource, orthogonal vectors included in different matrices in the $M_1$ matrices correspond to different resources, $M_1$ is an integer greater than 1, and $M_1$ is less than or equal to $S_1$.

In an optional implementation, $S_1$ is equal to 1, and the first channel estimation assistance matrix is determined based on the $S_1$ orthogonal vectors and the first coefficient matrix; or $S_1$ is greater than 1, the $S_1$ orthogonal vectors correspond to a same resource, and the first channel estimation assistance matrix is determined based on the first coefficient matrix and a sub-unitary matrix including the $S_1$ orthogonal vectors; or $S_1$ is greater than 1, the $S_1$ orthogonal vectors correspond to different resources, the first channel estimation assistance matrix is determined based on a Kronecker product of $M_1$ matrices and the first coefficient matrix, orthogonal vectors included in a same matrix in the $M_1$ matrices correspond to a same resource, orthogonal vectors included in different matrices in the $M_1$ matrices correspond to different resources, $M_1$ is an integer greater than 1, and $M_1$ is less than or equal to $S_1$.

In an optional implementation, $S_1$ is equal to 1, and a quantity of resources corresponding to the first channel estimation assistance matrix is equal to a quantity of resources corresponding to the $S_1$ orthogonal vectors; or $S_1$ is greater than 1, the $S_1$ orthogonal vectors correspond to the same resource, and a quantity of resources corresponding to the first channel estimation assistance matrix is equal to a quantity of resources corresponding to any one of the $S_1$ orthogonal vectors; or $S_1$ is greater than 1, the $S_1$ orthogonal vectors correspond to the different resources, a quantity of resources corresponding to the first channel estimation assistance matrix is equal to a product of $M_1$ values, and the $M_1$ values are quantities of resources corresponding to orthogonal vectors respectively included in the $M_1$ matrices.

In an optional implementation, $S_3$ is equal to 1, and the first channel estimation assistance matrix is the $S_3$ orthogonal vectors; or $S_3$ is greater than 1, the $S_3$ orthogonal vectors correspond to a same resource, and the first channel estimation assistance matrix is a sub-unitary matrix including the $S_3$ orthogonal vectors; or $S_3$ is greater than 1, the $S_3$ orthogonal vectors correspond to different resources, the first channel estimation assistance matrix is a Kronecker product of $M_2$ matrices, orthogonal vectors included in a same matrix in the $M_2$ matrices correspond to a same resource, orthogonal vectors included in different matrices in the $M_2$ matrices correspond to different resources, $M_2$ is an integer greater than 1, and $M_2$ is less than or equal to S3.

In an optional implementation, $S_3$ is equal to 1, and the first channel estimation assistance matrix is determined based on the $S_3$ orthogonal vectors and the second coefficient matrix; or $S_3$ is greater than 1, the $S_3$ orthogonal vectors correspond to a same resource, and the first channel estimation assistance matrix is determined based on the second coefficient matrix and a sub-unitary matrix including the $S_3$ orthogonal vectors; or $S_3$ is greater than 1, the $S_3$ orthogonal vectors correspond to different resources, the first channel estimation assistance matrix is determined based on a Kronecker product of $M_2$ matrices and the second coefficient matrix, orthogonal vectors included in a same matrix in the $M_2$ matrices correspond to a same resource, orthogonal vectors included in different matrices in the $M_2$ matrices correspond to different resources, $M_2$ is an integer greater than 1, and $M_2$ is less than or equal to $S_3$.

In an optional implementation, $S_3$ is equal to 1, and a quantity of resources corresponding to the first channel estimation assistance matrix is equal to a quantity of resources corresponding to the $S_3$ orthogonal vectors; or $S_3$ is greater than 1, the $S_3$ orthogonal vectors correspond to the same resource, and a quantity of resources corresponding to the first channel estimation assistance matrix is equal to a quantity of resources corresponding to any one of the $S_3$ orthogonal vectors; or $S_3$ is greater than 1, the $S_3$ orthogonal vectors correspond to the different resources, a quantity of resources corresponding to the first channel estimation assistance matrix is equal to a product of $M_2$ values, and the $M_2$ values are quantities of resources corresponding to orthogonal vectors respectively included in the $M_2$ matrices.

In an optional implementation, $S_2$ is equal to 1, and the first channel estimation assistance matrix is the $S_2$

orthogonal vectors; or $S_2$ is greater than 1, the $S_2$ orthogonal vectors correspond to a same resource, and the first channel estimation assistance matrix is a sub-unitary matrix including the $S_2$ orthogonal vectors; or $S_2$ is greater than 1, the $S_2$ orthogonal vectors correspond to different resources, the first channel estimation assistance matrix is a Kronecker product of $M_3$ matrices, orthogonal vectors included in a same matrix in the $M_3$ matrices correspond to a same resource, orthogonal vectors included in different matrices in the $M_3$ matrices correspond to different resources, $M_3$ is an integer greater than 1, and $M_3$ is less than or equal to $S_2$.

In an optional implementation, $S_2$ is equal to 1, and the first channel estimation assistance matrix is determined based on the $S_2$ orthogonal vectors and the first coefficient matrix; or $S_2$ is greater than 1, the $S_2$ orthogonal vectors correspond to a same resource, and the first channel estimation assistance matrix is determined based on the first coefficient matrix and a sub-unitary matrix including the $S_2$ orthogonal vectors; or $S_2$ is greater than 1, the $S_2$ orthogonal vectors correspond to different resources, the first channel estimation assistance matrix is determined based on a Kronecker product of $M_3$ matrices and the first coefficient matrix, orthogonal vectors included in a same matrix in the $M_3$ matrices correspond to a same resource, orthogonal vectors included in different matrices in the $M_3$ matrices correspond to different resources, $M_3$ is an integer greater than 1, and $M_3$ is less than or equal to $S_2$.

In an optional implementation, $S_2$ is equal to 1, and the first channel estimation assistance matrix is determined based on the $S_2$ orthogonal vectors and the third coefficient matrix; or $S_2$ is greater than 1, the $S_2$ orthogonal vectors correspond to a same resource, and the first channel estimation assistance matrix is determined based on the third coefficient matrix and a sub-unitary matrix including the $S_2$ orthogonal vectors; or $S_2$ is greater than 1, the $S_2$ orthogonal vectors correspond to different resources, the first channel estimation assistance matrix is determined based on a Kronecker product of $M_3$ matrices and the third coefficient matrix, orthogonal vectors included in a same matrix in the $M_3$ matrices correspond to a same resource, orthogonal vectors included in different matrices in the $M_3$ matrices correspond to different resources, $M_3$ is an integer greater than 1, and $M_3$ is less than or equal to $S_2$.

In an optional implementation, $S_2$ is equal to 1, and a quantity of resources corresponding to the first channel estimation assistance matrix is equal to a quantity of resources corresponding to the $S_2$ orthogonal vectors; or $S_2$ is greater than 1, the $S_2$ orthogonal vectors correspond to the same resource, and a quantity of resources corresponding to the first channel estimation assistance matrix is equal to a quantity of resources corresponding to any one of the $S_2$ orthogonal vectors; or $S_2$ is greater than 1, the $S_2$ orthogonal vectors correspond to the different resources, a quantity of resources corresponding to the first channel estimation assistance matrix is equal to a product of $M_3$ values, and the $M_3$ values are quantities of resources corresponding to orthogonal vectors respectively included in the $M_3$ matrices.

In an optional implementation, each of the $S_2$ orthogonal vectors corresponds to a resource of one or more of the following domains: time domain, frequency domain, and space domain; and the space domain includes one or more of the following domains: a receive horizontal direction antenna port, a receive vertical direction antenna port, a transmit horizontal direction antenna port, a transmit vertical direction antenna port, a receive antenna port, a transmit antenna port, a vertical direction antenna port, and a horizontal direction antenna port.

In an optional implementation, a dimension of each of the $S_2$ orthogonal vectors is equal to a quantity of resources corresponding to the orthogonal vector.

In an optional implementation, each of the $S_2$ orthogonal vectors is an orthogonal vector included in a discrete Fourier transform (discrete Fourier transform, DFT) matrix, a discrete cosine transform (discrete cosine transform, DCT) matrix, or a Grassmannian.

In an optional implementation, each of the $S_3$ orthogonal vectors corresponds to a resource of one or more of the following domains: time domain, frequency domain, and space domain; and the space domain includes one or more of the following domains: a receive horizontal direction antenna port, a receive vertical direction antenna port, a transmit horizontal direction antenna port, a transmit vertical direction antenna port, a receive antenna port, a transmit antenna port, a vertical direction antenna port, and a horizontal direction antenna port.

In an optional implementation, a dimension of each of the $S_3$ orthogonal vectors is equal to a quantity of resources corresponding to the orthogonal vector.

In an optional implementation, each of the $S_3$ orthogonal vectors is an orthogonal vector included in a DFT matrix, a DCT matrix, or a Grassmannian.

In an optional implementation, each of the $S_1$ orthogonal vectors corresponds to a resource of one or more of the following domains: time domain, frequency domain, and space domain; and the space domain includes one or more of the following domains: a receive horizontal direction antenna port, a receive vertical direction antenna port, a transmit horizontal direction antenna port, a transmit vertical direction antenna port, a receive antenna port, a transmit antenna port, a vertical direction antenna port, and a horizontal direction antenna port.

In an optional implementation, a dimension of each of the $S_1$ orthogonal vectors is equal to a quantity of resources corresponding to the orthogonal vector.

In an optional implementation, each of the $S_1$ orthogonal vectors is an orthogonal vector included in a DFT matrix, a DCT matrix, or a Grassmannian.

In an optional implementation, that the second indication information indicates the $S_2$ orthogonal vectors

includes: The second indication information includes the $S_2$ orthogonal vectors; or the second indication information includes an index corresponding to each of the $S_2$ orthogonal vectors; or the second indication information includes a second moment, and the second moment is used to indicate the $S_2$ orthogonal vectors.

In an optional implementation, the second indication information further indicates a dimension of each of the $S_2$ orthogonal vectors.

In an optional implementation, that the first indication information indicates the $S_1$ orthogonal vectors includes: The first indication information includes the $S_1$ orthogonal vectors; or the first indication information includes an index corresponding to each of the $S_1$ orthogonal vectors; or the first indication information includes a first moment, and the first moment is used to indicate the $S_1$ orthogonal vectors.

In an optional implementation, the first indication information further indicates a dimension of each of the $S_1$ orthogonal vectors.

According to a second aspect, this application provides an information transmission method. The method may be applied to a first device, or may be applied to a chip in a first device, or may be applied to a logical module or software that can implement all or a part of functions of a first device. The following uses the first device as an example for description. The method includes: The first device determines $S_1$ orthogonal vectors, where $S_1$ is a positive integer; and the first device sends first indication information to a second device, where the first indication information indicates the $S_1$ orthogonal vectors, and the $S_1$ orthogonal vectors are used by the second device to determine a first channel estimation assistance matrix.

It can be learned that the first device may indicate the $S_1$ orthogonal vectors to the second device, so that the second device determines the first channel estimation assistance matrix based on the $S_1$ orthogonal vectors. In this way, the second device may perform channel estimation based on the first channel estimation assistance matrix. The first channel estimation assistance matrix determined based on the $S_1$ orthogonal vectors may represent a channel feature, for example, may represent a main base of channel space. In this case, performing channel estimation based on the first channel estimation assistance matrix can improve channel estimation precision. The method may be applied to a scenario of a sparse RS, and can improve channel estimation precision for the sparse RS. In addition, the first channel estimation assistance matrix is determined based on the first indication information, and overheads of indicating the $S_1$ orthogonal vectors by the first indication information are small, so that indication overheads can be reduced.

In an optional implementation, the method further includes: The first device receives second indication information from the second device, where the second indication information indicates $S_2$ orthogonal vectors, and $S_2$ is a positive integer; and that the first device determines the $S_1$ orthogonal vectors includes: determining the $S_1$ orthogonal vectors based on the $S_2$ orthogonal vectors. It can be learned that the second device may recommend the $S_2$ orthogonal vectors to the first device, and the first device may determine the $S_1$ orthogonal vectors based on the $S_2$ orthogonal vectors recommended by the second device. When the second device is a terminal device, because the terminal device has a capability of obtaining whether a channel feature changes, the terminal device may determine the recommended $S_2$ orthogonal vectors by using this capability, so that the first channel estimation assistance matrix determined based on the $S_1$ orthogonal vectors helps further improve channel estimation precision.

In an optional implementation, the method further includes: The first device sends a first coefficient matrix to the second device, where the first channel estimation assistance matrix is determined by the second device based on the $S_1$ orthogonal vectors and the first coefficient matrix.

In an optional implementation, that the $S_1$ orthogonal vectors are used by the second device to determine the first channel estimation assistance matrix includes: The $S_1$ orthogonal vectors are used by the second device to determine $S_3$ orthogonal vectors, and the $S_3$ orthogonal vectors are used by the second device to determine the first channel estimation assistance matrix. When the first device is a terminal device, because the terminal device has a capability of obtaining whether a channel feature changes, the terminal device may determine recommended $S_1$ orthogonal vectors by using this capability. In this way, the first device may determine the $S_3$ orthogonal vectors based on the $S_1$ orthogonal vectors recommended by the second device, so that the first channel estimation assistance matrix determined by the first device based on the $S_3$ orthogonal vectors helps further improve channel estimation precision.

In an optional implementation, the method further includes: The first device sends a first coefficient matrix to the second device, where the first coefficient matrix is used by the second device to determine a second coefficient matrix; and the first channel estimation assistance matrix is determined by the second device based on the $S_3$ orthogonal vectors and the second coefficient matrix.

In an optional implementation, the method further includes: If the $S_1$ orthogonal vectors are the same as the $S_2$ orthogonal vectors indicated by the second indication information from the second device, the first device skips sending the first indication information to the second device, where $S_2$ is a positive integer; and the first channel estimation assistance matrix is determined by the second device based on the $S_2$ orthogonal vectors. In this method, the first device does not need to send the first indication information to the second device, so that indication overheads can be reduced.

In an optional implementation, the method further includes: The first coefficient matrix is different from a third coefficient matrix from the second device, and the first device sends the first coefficient matrix to the second device, where the first channel estimation assistance matrix is determined by the second device based on the $S_2$ orthogonal vectors and the first coefficient matrix.

In an optional implementation, the method further includes: The first coefficient matrix is the same as a third coefficient matrix from the second device, and the first device skips sending the first coefficient matrix to the second device, where the first channel estimation assistance matrix is determined by the second device based on the $S_2$ orthogonal vectors and the third coefficient matrix. In this method, the first device does not need to send the first coefficient matrix to the second device, so that indication overheads can be reduced.

In an optional implementation, the method further includes: The first device receives the third coefficient matrix from the second device; and the first device determines the first coefficient matrix based on the third coefficient matrix.

In an optional implementation, the method further includes: The first device sends an RS to the second device, where the RS is used by the second device to determine a measured channel coefficient, and the measured channel coefficient is used by the second device to perform channel estimation to obtain a target channel coefficient. It can be learned that the first device sends the RS to the second device, so that the second device can determine the measured channel coefficient based on the RS. The measured channel coefficient can reflect channel information on a measured resource, and the measured resource is a part of resources included in a target resource. All channel information on the target resource, namely, the target channel coefficient may be obtained based on the measured channel coefficient and the first channel estimation assistance matrix. The measured channel coefficient helps improve channel estimation precision.

In an optional implementation, the method further includes: The first device receives an RS from the second device; the first device determines a measured channel coefficient based on the RS; and the first device sends the measured channel coefficient to the second device, where the measured channel coefficient is used by the second device to perform channel estimation to obtain a target channel coefficient. It can be learned that when the RS is sent by the second device to the first device, after determining the measured channel coefficient, the first device may feed back the measured channel coefficient to the second device, so that the second device can perform channel estimation based on the measured channel coefficient and the first channel estimation assistance matrix. The measured channel coefficient can reflect channel information on a measured resource, and the measured resource is a part of resources included in a target resource. All channel information on the target resource, namely, the target channel coefficient may be obtained based on the measured channel coefficient and the first channel estimation assistance matrix. The measured channel coefficient helps improve channel estimation precision.

In an optional implementation, the target channel coefficient is obtained by performing linear transformation on the measured channel coefficient based on the first channel estimation assistance matrix.

In an optional implementation, that the measured channel coefficient is used by the second device to perform channel estimation to obtain the target channel coefficient includes: The target channel coefficient is determined by the second device based on a first matrix, the measured channel coefficient, and the first channel estimation assistance matrix; and the first matrix is a matrix including t vectors in the first channel estimation assistance matrix, t is a quantity of resources corresponding to the measured channel coefficient, and t is a positive integer.

In an optional implementation, the target channel coefficient is obtained by performing linear transformation on the measured channel coefficient based on the first matrix and the first channel estimation assistance matrix.

In an optional implementation, a resource corresponding to the target channel coefficient is the same as a resource corresponding to the first channel estimation assistance matrix; and a resource corresponding to the measured channel coefficient is included in the resource corresponding to the target channel coefficient.

In an optional implementation, the method further includes: The first device sends third indication information to the second device, where the third indication information indicates a first bandwidth resource; and the first channel estimation assistance matrix is used by the second device to perform channel estimation on the first bandwidth resource.

In an optional implementation, the method further includes: The first device sends third indication information to the second device, where the third indication information indicates a first bandwidth resource; and the third indication information is used by the second device to determine a second bandwidth resource, and the first channel estimation assistance matrix is used by the second device to perform channel estimation on the second bandwidth resource.

In an optional implementation, a target channel coefficient corresponding to a third bandwidth resource is obtained by the second device by performing channel estimation based on a second channel estimation assistance matrix, the third bandwidth resource is different from the first bandwidth resource, and the second channel estimation assistance matrix is determined based on $S_4$ orthogonal vectors; and the second channel estimation assistance matrix is the same as or different from the first channel estimation assistance matrix, and the $S_4$ orthogonal vectors are the same as or different from orthogonal vectors used by the second device to determine the first channel estimation assistance matrix.

In an optional implementation, $S_1$ is equal to 1, and the first channel estimation assistance matrix is the $S_1$ orthogonal vectors; or $S_1$ is greater than 1, the $S_1$ orthogonal vectors correspond to a same resource, and the first channel estimation assistance matrix is a sub-unitary matrix including the $S_1$ orthogonal vectors; or $S_1$ is greater than 1, the $S_1$ orthogonal vectors correspond to different resources, the first channel estimation assistance matrix is a Kronecker product

of $M_1$ matrices, orthogonal vectors included in a same matrix in the Mi matrices correspond to a same resource, orthogonal vectors included in different matrices in the $M_1$ matrices correspond to different resources, $M_1$ is an integer greater than 1, and $M_1$ is less than or equal to $S_1$.

In an optional implementation, $S_1$ is equal to 1, and the first channel estimation assistance matrix is determined based on the $S_1$ orthogonal vectors and the first coefficient matrix; or $S_1$ is greater than 1, the $S_1$ orthogonal vectors correspond to a same resource, and the first channel estimation assistance matrix is determined based on the first coefficient matrix and a sub-unitary matrix including the $S_1$ orthogonal vectors; or $S_1$ is greater than 1, the $S_1$ orthogonal vectors correspond to different resources, the first channel estimation assistance matrix is determined based on a Kronecker product of $M_1$ matrices and the first coefficient matrix, orthogonal vectors included in a same matrix in the $M_1$ matrices correspond to a same resource, orthogonal vectors included in different matrices in the $M_1$ matrices correspond to different resources, $M_1$ is an integer greater than 1, and $M_1$ is less than or equal to $S_1$.

In an optional implementation, $S_1$ is equal to 1, and a quantity of resources corresponding to the first channel estimation assistance matrix is equal to a quantity of resources corresponding to the $S_1$ orthogonal vectors; or $S_1$ is greater than 1, the $S_1$ orthogonal vectors correspond to the same resource, and a quantity of resources corresponding to the first channel estimation assistance matrix is equal to a quantity of resources corresponding to any one of the $S_1$ orthogonal vectors; or $S_1$ is greater than 1, the $S_1$ orthogonal vectors correspond to the different resources, a quantity of resources corresponding to the first channel estimation assistance matrix is equal to a product of $M_1$ values, and the $M_1$ values are quantities of resources corresponding to orthogonal vectors respectively included in the $M_1$ matrices.

In an optional implementation, $S_3$ is equal to 1, and the first channel estimation assistance matrix is the $S_3$ orthogonal vectors; or $S_3$ is greater than 1, the $S_3$ orthogonal vectors correspond to a same resource, and the first channel estimation assistance matrix is a sub-unitary matrix including the $S_3$ orthogonal vectors; or $S_3$ is greater than 1, the $S_3$ orthogonal vectors correspond to different resources, the first channel estimation assistance matrix is a Kronecker product of $M_2$ matrices, orthogonal vectors included in a same matrix in the $M_2$ matrices correspond to a same resource, orthogonal vectors included in different matrices in the $M_2$ matrices correspond to different resources, $M_2$ is an integer greater than 1, and $M_2$ is less than or equal to S3.

In an optional implementation, $S_3$ is equal to 1, and the first channel estimation assistance matrix is determined based on the $S_3$ orthogonal vectors and the second coefficient matrix; or $S_3$ is greater than 1, the $S_3$ orthogonal vectors correspond to a same resource, and the first channel estimation assistance matrix is determined based on the second coefficient matrix and a sub-unitary matrix including the $S_3$ orthogonal vectors; or $S_3$ is greater than 1, the $S_3$ orthogonal vectors correspond to different resources, the first channel estimation assistance matrix is determined based on a Kronecker product of $M_2$ matrices and the second coefficient matrix, orthogonal vectors included in a same matrix in the $M_2$ matrices correspond to a same resource, orthogonal vectors included in different matrices in the $M_2$ matrices correspond to different resources, $M_2$ is an integer greater than 1, and $M_2$ is less than or equal to $S_3$.

In an optional implementation, $S_3$ is equal to 1, and a quantity of resources corresponding to the first channel estimation assistance matrix is equal to a quantity of resources corresponding to the $S_3$ orthogonal vectors; or $S_3$ is greater than 1, the $S_3$ orthogonal vectors correspond to the same resource, and a quantity of resources corresponding to the first channel estimation assistance matrix is equal to a quantity of resources corresponding to any one of the $S_3$ orthogonal vectors; or $S_3$ is greater than 1, the $S_3$ orthogonal vectors correspond to the different resources, a quantity of resources corresponding to the first channel estimation assistance matrix is equal to a product of $M_2$ values, and the $M_2$ values are quantities of resources corresponding to orthogonal vectors respectively included in the $M_2$ matrices.

In an optional implementation, $S_2$ is equal to 1, and the first channel estimation assistance matrix is the $S_2$ orthogonal vectors; or $S_2$ is greater than 1, the $S_2$ orthogonal vectors correspond to a same resource, and the first channel estimation assistance matrix is a sub-unitary matrix including the $S_2$ orthogonal vectors; or $S_2$ is greater than 1, the $S_2$ orthogonal vectors correspond to different resources, the first channel estimation assistance matrix is a Kronecker product of $M_3$ matrices, orthogonal vectors included in a same matrix in the $M_3$ matrices correspond to a same resource, orthogonal vectors included in different matrices in the $M_3$ matrices correspond to different resources, $M_3$ is an integer greater than 1, and $M_3$ is less than or equal to $S_2$.

In an optional implementation, $S_2$ is equal to 1, and the first channel estimation assistance matrix is determined based on the $S_2$ orthogonal vectors and the first coefficient matrix; or $S_2$ is greater than 1, the $S_2$ orthogonal vectors correspond to a same resource, and the first channel estimation assistance matrix is determined based on the first coefficient matrix and a sub-unitary matrix including the $S_2$ orthogonal vectors; or $S_2$ is greater than 1, the $S_2$ orthogonal vectors correspond to different resources, the first channel estimation assistance matrix is determined based on a Kronecker product of $M_3$ matrices and the first coefficient matrix, orthogonal vectors included in a same matrix in the $M_3$ matrices correspond to a same resource, orthogonal vectors included in different matrices in the $M_3$ matrices correspond to different resources, $M_3$ is an integer greater than 1, and $M_3$ is less than or equal to $S_2$.

In an optional implementation, $S_2$ is equal to 1, and the first channel estimation assistance matrix is determined based on the $S_2$ orthogonal vectors and the third coefficient matrix; or $S_2$ is greater than 1, the $S_2$ orthogonal vectors correspond to a same resource, and the first channel estimation assistance matrix is determined based on the third coefficient matrix and a sub-unitary matrix including the $S_2$ orthogonal vectors; or $S_2$ is greater than 1, the $S_2$ orthogonal vectors correspond to different resources, the first channel estimation assistance matrix is determined based on a Kronecker product of $M_3$ matrices and the third coefficient matrix, orthogonal vectors included in a same matrix in the $M_3$ matrices correspond to a same resource, orthogonal vectors included in different matrices in the $M_3$ matrices correspond to different resources, $M_3$ is an integer greater than 1, and $M_3$ is less than or equal to $S_2$.

In an optional implementation, $S_2$ is equal to 1, and a quantity of resources corresponding to the first channel estimation assistance matrix is equal to a quantity of resources corresponding to the $S_2$ orthogonal vectors; or $S_2$ is greater than 1, the $S_2$ orthogonal vectors correspond to the same resource, and a quantity of resources corresponding to the first channel estimation assistance matrix is equal to a quantity of resources corresponding to any one of the $S_2$ orthogonal vectors; or $S_2$ is greater than 1, the $S_2$ orthogonal vectors correspond to the different resources, a quantity of resources corresponding to the first channel estimation assistance matrix is equal to a product of $M_3$ values, and the $M_3$ values are quantities of resources corresponding to orthogonal vectors respectively included in the $M_3$ matrices.

In an optional implementation, each of the $S_2$ orthogonal vectors corresponds to a resource of one or more of the following domains: time domain, frequency domain, and space domain; and the space domain includes one or more of the following domains: a receive horizontal direction antenna port, a receive vertical direction antenna port, a transmit horizontal direction antenna port, a transmit vertical direction antenna port, a receive antenna port, a transmit antenna port, a vertical direction antenna port, and a horizontal direction antenna port.

In an optional implementation, a dimension of each of the $S_2$ orthogonal vectors is equal to a quantity of resources corresponding to the orthogonal vector.

In an optional implementation, each of the $S_2$ orthogonal vectors is an orthogonal vector included in a DFT matrix, a DCT matrix, or a Grassmannian.

In an optional implementation, each of the $S_3$ orthogonal vectors corresponds to a resource of one or more of the following domains: time domain, frequency domain, and space domain; and the space domain includes one or more of the following domains: a receive horizontal direction antenna port, a receive vertical direction antenna port, a transmit horizontal direction antenna port, a transmit vertical direction antenna port, a receive antenna port, a transmit antenna port, a vertical direction antenna port, and a horizontal direction antenna port.

In an optional implementation, a dimension of each of the $S_3$ orthogonal vectors is equal to a quantity of resources corresponding to the orthogonal vector.

In an optional implementation, each of the $S_3$ orthogonal vectors is an orthogonal vector included in a DFT matrix, a DCT matrix, or a Grassmannian.

In an optional implementation, each of the $S_1$ orthogonal vectors corresponds to a resource of one or more of the following domains: time domain, frequency domain, and space domain; and the space domain includes one or more of the following domains: a receive horizontal direction antenna port, a receive vertical direction antenna port, a transmit horizontal direction antenna port, a transmit vertical direction antenna port, a receive antenna port, a transmit antenna port, a vertical direction antenna port, and a horizontal direction antenna port.

In an optional implementation, a dimension of each of the $S_1$ orthogonal vectors is equal to a quantity of resources corresponding to the orthogonal vector.

In an optional implementation, each of the $S_1$ orthogonal vectors is an orthogonal vector included in a DFT matrix, a DCT matrix, or a Grassmannian.

In an optional implementation, that the second indication information indicates the $S_2$ orthogonal vectors includes: The second indication information includes the $S_2$ orthogonal vectors; or the second indication information includes an index corresponding to each of the $S_2$ orthogonal vectors; or the second indication information includes a second moment, and the second moment is used to indicate the $S_2$ orthogonal vectors.

In an optional implementation, the second indication information further indicates a dimension of each of the $S_2$ orthogonal vectors.

In an optional implementation, that the first indication information indicates the $S_1$ orthogonal vectors includes: The first indication information includes the S: orthogonal vectors; or the first indication information includes an index corresponding to each of the $S_1$ orthogonal vectors; or the first indication information includes a first moment, and the first moment is used to indicate the $S_1$ orthogonal vectors.

In an optional implementation, the first indication information further indicates a dimension of each of the $S_1$ orthogonal vectors.

According to a third aspect, this application provides an information transmission method. The method may be applied to a second device, or may be applied to a chip in a second device, or may be applied to a logical module or software that can implement all or a part of functions of a second device. The following uses the second device as an example for description. The method includes: The second device sends second indication information to a first device, where the second indication information indicates $S_2$ orthogonal vectors; and if the second device receives first indication information from the first device, the second device determines a first channel estimation assistance matrix based on $S_1$ orthogonal vectors indicated by the first indication information; or if the second device fails to receive first indication information from the first device, the second device determines a first channel estimation assistance matrix based on the $S_2$ orthogonal vectors. The first indication information indicates the $S_1$ orthogonal vectors.

It can be learned that the second device performs channel estimation based on the first channel estimation assistance matrix. The first channel estimation assistance matrix determined based on the $S_1$ orthogonal vectors or the $S_2$ orthogonal vectors may represent a channel feature, for example, may represent a main base of channel space. In this case, performing channel estimation based on the first channel estimation assistance matrix can improve channel estimation precision. The method may be applied to a scenario of a sparse RS, and can improve channel estimation precision for the sparse RS. In addition, when the second device is a terminal device, because the terminal device has a capability of obtaining whether a channel feature changes, the terminal device may determine recommended $S_2$ orthogonal vectors by using this capability, so that the first device can determine the $S_1$ orthogonal vectors based on the $S_2$ orthogonal vectors recommended by the second device, and the determined first channel estimation assistance matrix helps further improve channel estimation precision. In addition, when the second device fails to receive the first indication information from the first device, the second device determines the first channel estimation assistance matrix based on the $S_2$ orthogonal vectors, and the first device does not need to send the first indication information. This can reduce indication overheads.

In a possible implementation, if the second device fails to receive the first indication information from the first device in a first time period, the second device determines the first channel estimation assistance matrix based on the $S_1$ orthogonal vectors indicated by the first indication information.

In an optional implementation, the method further includes: The second device receives a first coefficient matrix from the first device. That the second device determines the first channel estimation assistance matrix based on the $S_1$ orthogonal vectors indicated by the first indication information includes: The second device determines the first channel estimation assistance matrix based on the $S_1$ orthogonal vectors and the first coefficient matrix. Alternatively, that the second device determines the first channel estimation assistance matrix based on the $S_2$ orthogonal vectors includes: The second device determines the first channel estimation assistance matrix based on the $S_2$ orthogonal vectors and the first coefficient matrix.

In an optional implementation, the second device fails to receive the first coefficient matrix from the first device. That the second device determines the first channel estimation assistance matrix based on the $S_1$ orthogonal vectors indicated by the first indication information includes: The second device determines the first channel estimation assistance matrix based on the $S_1$ orthogonal vectors and a third coefficient matrix. Alternatively, the method further includes: The second device determines a third coefficient matrix; and that the second device determines the first channel estimation assistance matrix based on the $S_2$ orthogonal vectors includes: The second device determines the first channel estimation assistance matrix based on the $S_2$ orthogonal vectors and the third coefficient matrix.

In an optional implementation, the method further includes: The second device sends a third coefficient matrix to the first device, where the third coefficient matrix is used by the first device to determine the first coefficient matrix.

In an optional implementation, the method further includes: The second device receives an RS from the first device; and the second device determines a measured channel coefficient based on the RS. That the second device performs channel estimation based on the first channel estimation assistance matrix includes: The second device determines a target channel coefficient based on the measured channel coefficient and the first channel estimation assistance matrix. It can be learned that, in a case in which the RS is sent by the first device to the second device, the second device may determine the measured channel coefficient based on the RS. The measured channel coefficient can reflect channel information on a measured resource, and the measured resource is a part of resources included in a target resource. All channel information on the target resource, namely, the target channel coefficient may be obtained based on the measured channel coefficient and the first channel estimation assistance matrix. The measured channel coefficient helps improve channel estimation precision.

In an optional implementation, the method further includes: The second device sends an RS to the first device; and the second device receives a measured channel coefficient from the first device, where the measured channel coefficient is determined by the first device based on the RS. That the second device performs channel estimation based on the first channel estimation assistance matrix includes: determining a target channel coefficient based on the measured channel coefficient and the first channel estimation assistance matrix. It can be learned that, in a case in which the RS is sent by the second device to the first device, the second device receives the measured channel coefficient fed back by the first device. The measured channel coefficient can reflect channel information on a measured resource, and the measured resource is a part of resources included in a target resource. All channel information on the target resource, namely, the target channel coefficient may be obtained based on the measured channel coefficient and the first channel estimation assistance matrix. The measured channel coefficient helps improve channel estimation precision.

In an optional implementation, the target channel coefficient is obtained by performing linear transformation on the measured channel coefficient based on the first channel estimation assistance matrix.

In an optional implementation, that the second device determines the target channel coefficient based on the measured channel coefficient and the first channel estimation assistance matrix includes: The second device determines the target channel coefficient based on a first matrix, the measured channel coefficient, and the first channel estimation assistance matrix, where the first matrix is a matrix including t vectors in the first channel estimation assistance matrix, t is a quantity of resources corresponding to the measured channel coefficient, and t is a positive integer.

In an optional implementation, the target channel coefficient is obtained by performing linear transformation on the measured channel coefficient based on the first matrix and the first channel estimation assistance matrix.

In an optional implementation, a resource corresponding to the target channel coefficient is the same as a resource corresponding to the first channel estimation assistance matrix; and a resource corresponding to the measured channel coefficient is included in the resource corresponding to the target channel coefficient.

In an optional implementation, the method further includes: The second device receives third indication information from the first device, where the third indication information indicates a first bandwidth resource; and the target channel coefficient obtained by the second device by performing channel estimation based on the first channel estimation assistance matrix is a target channel coefficient corresponding to the first bandwidth resource.

In an optional implementation, the method further includes: The second device receives third indication information from the first device, where the third indication information indicates a first bandwidth resource; and the second device determines a second bandwidth resource based on the first bandwidth resource, where the target channel coefficient obtained by the second device by performing channel estimation based on the first channel estimation assistance matrix is a target channel coefficient corresponding to the second bandwidth resource.

In an optional implementation, the method further includes: The second device performs channel estimation based on a second channel estimation assistance matrix to obtain a target channel coefficient corresponding to a third bandwidth resource, where the third bandwidth resource is different from the first bandwidth resource; the second channel estimation assistance matrix is determined based on $S_4$ orthogonal vectors; and the second channel estimation assistance matrix is the same as or different from the first channel estimation assistance matrix, and the $S_4$ orthogonal vectors are the same as or different from orthogonal vectors used to determine the first channel estimation assistance matrix.

In an optional implementation, $S_1$ is equal to 1, and the first channel estimation assistance matrix is the $S_1$ orthogonal vectors; or $S_1$ is greater than 1, the $S_1$ orthogonal vectors correspond to a same resource, and the first channel estimation assistance matrix is a sub-unitary matrix including the $S_1$ orthogonal vectors; or $S_1$ is greater than 1, the $S_1$ orthogonal vectors correspond to different resources, the first channel estimation assistance matrix is a Kronecker product of $M_1$ matrices, orthogonal vectors included in a same matrix in the $M_1$ matrices correspond to a same resource, orthogonal vectors included in different matrices in the $M_1$ matrices correspond to different resources, $M_1$ is an integer greater than 1, and $M_1$ is less than or equal to $S_1$.

In an optional implementation, $S_1$ is equal to 1, and the first channel estimation assistance matrix is determined based on the $S_1$ orthogonal vectors and the first coefficient matrix; or $S_1$ is greater than 1, the $S_1$ orthogonal vectors correspond to a same resource, and the first channel estimation assistance matrix is determined based on the first coefficient matrix and a sub-unitary matrix including the $S_1$ orthogonal vectors; or $S_1$ is greater than 1, the $S_1$ orthogonal vectors correspond to different resources, the first channel estimation assistance matrix is determined based on a Kronecker product of $M_1$ matrices and the first coefficient matrix, orthogonal vectors included in a same matrix in the $M_1$ matrices correspond to a same resource, orthogonal vectors included in different matrices in the $M_1$ matrices correspond to different resources, $M_1$ is an integer greater than 1, and $M_1$ is less than or equal to $S_1$.

In an optional implementation, $S_1$ is equal to 1, and a quantity of resources corresponding to the first channel estimation assistance matrix is equal to a quantity of resources corresponding to the $S_1$ orthogonal vectors; or $S_1$ is greater than 1, the $S_1$ orthogonal vectors correspond to the same resource, and a quantity of resources corresponding to the first channel estimation assistance matrix is equal to a quantity of resources corresponding to any one of the $S_1$ orthogonal vectors; or $S_1$ is greater than 1, the $S_1$ orthogonal vectors correspond to the different resources, a quantity of resources corresponding to the first channel estimation assistance matrix is equal to a product of $M_1$ values, and the $M_1$ values are quantities of resources corresponding to orthogonal vectors respectively included in the $M_1$ matrices.

In an optional implementation, $S_2$ is equal to 1, and the first channel estimation assistance matrix is the $S_2$ orthogonal vectors; or $S_2$ is greater than 1, the $S_2$ orthogonal vectors correspond to a same resource, and the first channel estimation assistance matrix is a sub-unitary matrix including the $S_2$ orthogonal vectors; or $S_2$ is greater than 1, the $S_2$ orthogonal vectors correspond to different resources, the first channel estimation assistance matrix is a Kronecker product of $M_3$ matrices, orthogonal vectors included in a same matrix in the $M_3$ matrices correspond to a same resource, orthogonal vectors included in different matrices in the $M_3$ matrices correspond to different resources, $M_3$ is an integer greater than 1, and $M_3$ is less than or equal to $S_2$.

In an optional implementation, $S_2$ is equal to 1, and the first channel estimation assistance matrix is determined based on the $S_2$ orthogonal vectors and the first coefficient matrix; or $S_2$ is greater than 1, the $S_2$ orthogonal vectors correspond to a same resource, and the first channel estimation assistance matrix is determined based on the first coefficient matrix and a sub-unitary matrix including the $S_2$ orthogonal vectors; or $S_2$ is greater than 1, the $S_2$ orthogonal vectors correspond to different resources, the first channel estimation assistance matrix is determined based on a

Kronecker product of $M_3$ matrices and the first coefficient matrix, orthogonal vectors included in a same matrix in the $M_3$ matrices correspond to a same resource, orthogonal vectors included in different matrices in the $M_3$ matrices correspond to different resources, $M_3$ is an integer greater than 1, and $M_3$ is less than or equal to $S_2$.

In an optional implementation, $S_2$ is equal to 1, and the first channel estimation assistance matrix is determined based on the $S_2$ orthogonal vectors and the third coefficient matrix; or $S_2$ is greater than 1, the $S_2$ orthogonal vectors correspond to a same resource, and the first channel estimation assistance matrix is determined based on the third coefficient matrix and a sub-unitary matrix including the $S_2$ orthogonal vectors; or $S_2$ is greater than 1, the $S_2$ orthogonal vectors correspond to different resources, the first channel estimation assistance matrix is determined based on a Kronecker product of $M_3$ matrices and the third coefficient matrix, orthogonal vectors included in a same matrix in the $M_3$ matrices correspond to a same resource, orthogonal vectors included in different matrices in the $M_3$ matrices correspond to different resources, $M_3$ is an integer greater than 1, and $M_3$ is less than or equal to $S_2$.

In an optional implementation, $S_2$ is equal to 1, and a quantity of resources corresponding to the first channel estimation assistance matrix is equal to a quantity of resources corresponding to the $S_2$ orthogonal vectors; or $S_2$ is greater than 1, the $S_2$ orthogonal vectors correspond to the same resource, and a quantity of resources corresponding to the first channel estimation assistance matrix is equal to a quantity of resources corresponding to any one of the $S_2$ orthogonal vectors; or $S_2$ is greater than 1, the $S_2$ orthogonal vectors correspond to the different resources, a quantity of resources corresponding to the first channel estimation assistance matrix is equal to a product of $M_3$ values, and the $M_3$ values are quantities of resources corresponding to orthogonal vectors respectively included in the $M_3$ matrices.

In an optional implementation, each of the $S_2$ orthogonal vectors corresponds to a resource of one or more of the following domains: time domain, frequency domain, and space domain; and the space domain includes one or more of the following domains: a receive horizontal direction antenna port, a receive vertical direction antenna port, a transmit horizontal direction antenna port, a transmit vertical direction antenna port, a receive antenna port, a transmit antenna port, a vertical direction antenna port, and a horizontal direction antenna port.

In an optional implementation, a dimension of each of the $S_2$ orthogonal vectors is equal to a quantity of resources corresponding to the orthogonal vector.

In an optional implementation, each of the $S_2$ orthogonal vectors is an orthogonal vector included in a DFT matrix, a DCT matrix, or a Grassmannian.

In an optional implementation, each of the $S_3$ orthogonal vectors corresponds to a resource of one or more of the following domains: time domain, frequency domain, and space domain; and the space domain includes one or more of the following domains: a receive horizontal direction antenna port, a receive vertical direction antenna port, a transmit horizontal direction antenna port, a transmit vertical direction antenna port, a receive antenna port, a transmit antenna port, a vertical direction antenna port, and a horizontal direction antenna port.

In an optional implementation, a dimension of each of the $S_3$ orthogonal vectors is equal to a quantity of resources corresponding to the orthogonal vector.

In an optional implementation, each of the $S_3$ orthogonal vectors is an orthogonal vector included in a DFT matrix, a DCT matrix, or a Grassmannian.

In an optional implementation, each of the $S_1$ orthogonal vectors corresponds to a resource of one or more of the following domains: time domain, frequency domain, and space domain; and the space domain includes one or more of the following domains: a receive horizontal direction antenna port, a receive vertical direction antenna port, a transmit horizontal direction antenna port, a transmit vertical direction antenna port, a receive antenna port, a transmit antenna port, a vertical direction antenna port, and a horizontal direction antenna port.

In an optional implementation, a dimension of each of the $S_1$ orthogonal vectors is equal to a quantity of resources corresponding to the orthogonal vector.

In an optional implementation, each of the $S_1$ orthogonal vectors is an orthogonal vector included in a DFT matrix, a DCT matrix, or a Grassmannian.

In an optional implementation, that the second indication information indicates the $S_2$ orthogonal vectors includes: The second indication information includes the $S_2$ orthogonal vectors; or the second indication information includes an index corresponding to each of the $S_2$ orthogonal vectors; or the second indication information includes a second moment, and the second moment is used to indicate the $S_2$ orthogonal vectors.

In an optional implementation, the second indication information further indicates a dimension of each of the $S_2$ orthogonal vectors.

In an optional implementation, that the first indication information indicates the $S_1$ orthogonal vectors includes: The first indication information includes the $S_1$ orthogonal vectors; or the first indication information includes an index corresponding to each of the $S_1$ orthogonal vectors; or the first indication information includes a first moment, and the first moment is used to indicate the $S_1$ orthogonal vectors.

In an optional implementation, the first indication information further indicates a dimension of each of the $S_1$ orthogonal vectors.

According to a fourth aspect, this application provides an information transmission method. The method may be applied to a first device, or may be applied to a chip in a first device, or may be applied to a logical module or software that can implement all or a part of functions of a first device. The following uses the first device as an example for description. The method includes: The first device receives second indication information from a second device, where the second indication information indicates $S_2$ orthogonal vectors; and the first device determines $S_1$ orthogonal vectors, where the $S_1$ orthogonal vectors are used by the second device to determine a first channel estimation assistance matrix. If the $S_1$ orthogonal vectors are different from the $S_2$ orthogonal vectors, the first device sends first indication information to the second device. If the $S_1$ orthogonal vectors are the same as the $S_2$ orthogonal vectors, the first device skips sending first indication information to the second device. The first indication information indicates the $S_1$ orthogonal vectors.

It can be learned that the second device may perform channel estimation based on the first channel estimation assistance matrix. The first channel estimation assistance matrix may represent a channel feature, for example, may represent a main base of channel space. In this case, performing channel estimation based on the first channel estimation assistance matrix can improve channel estimation precision. The method may be applied to a scenario of a sparse RS, and can improve channel estimation precision for the sparse RS. In addition, when the second device is a terminal device, because the terminal device has a capability of obtaining whether a channel feature changes, the terminal device may determine recommended $S_2$ orthogonal vectors by using this capability, so that the first device can determine the $S_1$ orthogonal vectors based on the $S_2$ orthogonal vectors recommended by the second device, and the determined first channel estimation assistance matrix helps further improve channel estimation precision. In addition, the first device may determine, by determining whether the $S_1$ orthogonal vectors are the same as the $S_2$ orthogonal vectors, whether to send the first indication information to the second device. When the $S_1$ orthogonal vectors are the same as the $S_2$ orthogonal vectors, the first indication information may not be sent, so that indication overheads can be reduced.

In an optional implementation, the method further includes: The first device receives a third coefficient matrix from the second device; and the first device determines a first coefficient matrix, where the first coefficient matrix is used by the second device to determine the first channel estimation assistance matrix. If the first coefficient matrix is different from the third coefficient matrix, the first device sends the first coefficient matrix to the second device. If the first coefficient matrix is the same as the third coefficient matrix, the first device skips sending the first coefficient matrix to the second device. It can be learned that the first device may determine, by determining whether the first coefficient matrix is the same as the third coefficient, whether to send the first coefficient matrix to the second device, and may not send the first coefficient matrix when the first coefficient matrix is the same as the third coefficient matrix, thereby reducing indication overheads.

In an optional implementation, the method further includes: The first device sends an RS to the second device, where the RS is used by the second device to determine a measured channel coefficient, and the measured channel coefficient is used by the second device to perform channel estimation to obtain a target channel coefficient. It can be learned that the first device sends the RS to the second device, so that the second device can determine the measured channel coefficient based on the RS. The measured channel coefficient can reflect channel information on a measured resource, and the measured resource is a part of resources included in a target resource. All channel information on the target resource, namely, the target channel coefficient may be obtained based on the measured channel coefficient and the first channel estimation assistance matrix. The measured channel coefficient helps improve channel estimation precision.

In an optional implementation, the method further includes: The first device receives an RS from the second device; the first device determines a measured channel coefficient based on the RS; and the first device sends the measured channel coefficient to the second device, where the measured channel coefficient is used by the second device to perform channel estimation to obtain a target channel coefficient. It can be learned that when the RS is sent by the second device to the first device, after determining the measured channel coefficient, the first device may feed back the measured channel coefficient to the second device, so that the second device can perform channel estimation based on the measured channel coefficient and the first channel estimation assistance matrix. The measured channel coefficient can reflect channel information on a measured resource, and the measured resource is a part of resources included in a target resource. All channel information on the target resource, namely, the target channel coefficient may be obtained based on the measured channel coefficient and the first channel estimation assistance matrix. The measured channel coefficient helps improve channel estimation precision.

In an optional implementation, the target channel coefficient is obtained by performing linear transformation on the measured channel coefficient based on the first channel estimation assistance matrix.

In an optional implementation, that the measured channel coefficient is used by the second device to perform channel estimation to obtain the target channel coefficient includes: The target channel coefficient is determined by the second device based on a first matrix, the measured channel coefficient, and the first channel estimation assistance matrix; and the first matrix is a matrix including t vectors in the first channel estimation assistance matrix, t is a quantity of resources corresponding to the measured channel coefficient, and t is a positive integer.

In an optional implementation, the target channel coefficient is obtained by performing linear transformation on the measured channel coefficient based on the first matrix and the first channel estimation assistance matrix.

In an optional implementation, a resource corresponding to the target channel coefficient is the same as a resource corresponding to the first channel estimation assistance matrix; and a resource corresponding to the measured channel coefficient is included in the resource corresponding to the target channel coefficient.

In an optional implementation, the method further includes: The first device sends third indication information to the second device, where the third indication information indicates a first bandwidth resource; and the first channel estimation assistance matrix is used by the second device to perform channel estimation on the first bandwidth resource.

In an optional implementation, the method further includes: The first device sends third indication information to the second device, where the third indication information indicates a first bandwidth resource; and the third indication information is used by the second device to determine a second bandwidth resource, and the first channel estimation assistance matrix is used by the second device to perform channel estimation on the second bandwidth resource.

In an optional implementation, a target channel coefficient corresponding to a third bandwidth resource is obtained by the second device by performing channel estimation based on a second channel estimation assistance matrix, the third bandwidth resource is different from the first bandwidth resource, and the second channel estimation assistance matrix is determined based on $S_4$ orthogonal vectors; and the second channel estimation assistance matrix is the same as or different from the first channel estimation assistance matrix, and the $S_4$ orthogonal vectors are the same as or different from orthogonal vectors used by the second device to determine the first channel estimation assistance matrix.

In an optional implementation, $S_1$ is equal to 1, and the first channel estimation assistance matrix is the $S_1$ orthogonal vectors; or $S_1$ is greater than 1, the $S_1$ orthogonal vectors correspond to a same resource, and the first channel estimation assistance matrix is a sub-unitary matrix including the $S_1$ orthogonal vectors; or $S_1$ is greater than 1, the $S_1$ orthogonal vectors correspond to different resources, the first channel estimation assistance matrix is a Kronecker product of $M_1$ matrices, orthogonal vectors included in a same matrix in the $M_1$ matrices correspond to a same resource, orthogonal vectors included in different matrices in the $M_1$ matrices correspond to different resources, $M_1$ is an integer greater than 1, and $M_1$ is less than or equal to $S_1$.

In an optional implementation, $S_1$ is equal to 1, and the first channel estimation assistance matrix is determined based on the $S_1$ orthogonal vectors and the first coefficient matrix; or $S_1$ is greater than 1, the $S_1$ orthogonal vectors correspond to a same resource, and the first channel estimation assistance matrix is determined based on the first coefficient matrix and a sub-unitary matrix including the $S_1$ orthogonal vectors; or $S_1$ is greater than 1, the $S_1$ orthogonal vectors correspond to different resources, the first channel estimation assistance matrix is determined based on a Kronecker product of $M_1$ matrices and the first coefficient matrix, orthogonal vectors included in a same matrix in the $M_1$ matrices correspond to a same resource, orthogonal vectors included in different matrices in the $M_1$ matrices correspond to different resources, $M_1$ is an integer greater than 1, and $M_1$ is less than or equal to $S_1$.

In an optional implementation, $S_1$ is equal to 1, and a quantity of resources corresponding to the first channel estimation assistance matrix is equal to a quantity of resources corresponding to the $S_1$ orthogonal vectors; or $S_1$ is greater than 1, the $S_1$ orthogonal vectors correspond to the same resource, and a quantity of resources corresponding to the first channel estimation assistance matrix is equal to a quantity of resources corresponding to any one of the $S_1$ orthogonal vectors; or $S_1$ is greater than 1, the $S_1$ orthogonal vectors correspond to the different resources, a quantity of resources corresponding to the first channel estimation assistance matrix is equal to a product of $M_1$ values, and the $M_1$ values are quantities of resources corresponding to orthogonal vectors respectively included in the $M_1$ matrices.

In an optional implementation, each of the $S_2$ orthogonal vectors corresponds to a resource of one or more of the following domains: time domain, frequency domain, and space domain; and the space domain includes one or more of the following domains: a receive horizontal direction antenna port, a receive vertical direction antenna port, a transmit horizontal direction antenna port, a transmit vertical direction antenna port, a receive antenna port, a transmit antenna port, a vertical direction antenna port, and a horizontal direction antenna port.

In an optional implementation, a dimension of each of the $S_2$ orthogonal vectors is equal to a quantity of resources corresponding to the orthogonal vector.

In an optional implementation, each of the $S_2$ orthogonal vectors is an orthogonal vector included in a DFT matrix, a DCT matrix, or a Grassmannian.

In an optional implementation, each of the $S_1$ orthogonal vectors corresponds to a resource of one or more of the following domains: time domain, frequency domain, and space domain; and the space domain includes one or more of the following domains: a receive horizontal direction antenna port, a receive vertical direction antenna port, a transmit horizontal direction antenna port, a transmit vertical direction antenna port, a receive antenna port, a transmit antenna port, a vertical direction antenna port, and a horizontal direction antenna port.

In an optional implementation, a dimension of each of the $S_1$ orthogonal vectors is equal to a quantity of resources corresponding to the orthogonal vector.

In an optional implementation, each of the $S_1$ orthogonal vectors is an orthogonal vector included in a DFT matrix, a DCT matrix, or a Grassmannian.

In an optional implementation, that the second indication information indicates the $S_2$ orthogonal vectors includes: The second indication information includes the $S_2$ orthogonal vectors; or the second indication information includes an index corresponding to each of the $S_2$ orthogonal vectors; or the second indication information includes a second moment, and the second moment is used to indicate the $S_2$ orthogonal vectors.

In an optional implementation, the second indication information further indicates a dimension of each of the $S_2$ orthogonal vectors.

In an optional implementation, that the first indication information indicates the $S_1$ orthogonal vectors includes: The first indication information includes the $S_1$ orthogonal vectors; or the first indication information includes an index corresponding to each of the $S_1$ orthogonal vectors; or the first indication information includes a first moment, and the first moment is used to indicate the $S_1$ orthogonal vectors.

In an optional implementation, the first indication information further indicates a dimension of each of the $S_1$ orthogonal vectors.

According to a fifth aspect, this application further provides a communication apparatus. The communication apparatus has functions of implementing a part or all of the implementations of the first aspect, or has functions of implementing a part or all of the function implementations of the second aspect, or has functions of implementing a part or all of the function implementations of the third aspect, or has functions of implementing a part or all of the function implementations of the fourth aspect. The function may be implemented by using hardware, or may be implemented by using hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus includes a processing unit and a communication unit. The processing unit is configured to control the communication unit to receive and send data/signaling.

The communication unit is configured to receive first indication information from a first device, where the first indication information indicates $S_1$ orthogonal vectors, and $S_1$ is a positive integer; the processing unit is configured to determine a first channel estimation assistance matrix based on the $S_1$ orthogonal vectors; and the processing unit is further configured to perform channel estimation based on the first channel estimation assistance matrix.

In addition, for another optional implementation of the communication apparatus in this aspect, refer to related content of the first aspect. Details are not described herein again.

In another implementation, the communication apparatus includes a processing unit and a communication unit. The processing unit is configured to control the communication unit to receive and send data/signaling.

The processing unit is configured to determine $S_1$ orthogonal vectors, where $S_1$ is a positive integer; and the communication unit is configured to send first indication information to a second device, where the first indication information indicates the $S_1$ orthogonal vectors, and the $S_1$ orthogonal vectors are used by the second device to determine a first channel estimation assistance matrix.

In addition, for another optional implementation of the communication apparatus in this aspect, refer to related content of the second aspect. Details are not described herein again.

In another implementation, the communication apparatus includes a processing unit and a communication unit. The processing unit is configured to control the communication unit to receive and send data/signaling.

The communication unit is configured to send second indication information to a first device, where the second indication information indicates $S_2$ orthogonal vectors. The processing unit is configured to: if the communication unit receives first indication information from the first device, determine a first channel estimation assistance matrix based on $S_1$ orthogonal vectors indicated by the first indication information; or if the communication unit fails to receive first indication information from the first device, determine a first channel estimation assistance matrix based on the $S_2$ orthogonal vectors. The first indication information indicates the $S_1$ orthogonal vectors. The processing unit is further configured to perform channel estimation based on the first channel estimation assistance matrix.

In addition, for another optional implementation of the communication apparatus in this aspect, refer to related content of the third aspect. Details are not described herein again.

In another implementation, the communication apparatus includes a processing unit and a communication unit. The processing unit is configured to control the communication unit to receive and send data/signaling.

The communication unit is configured to receive second indication information from a second device, where the second indication information indicates $S_2$ orthogonal vectors. The processing unit is configured to determine $S_1$ orthogonal vectors, where the Si orthogonal vectors are used by the second device to determine a first channel estimation assistance matrix. The communication unit is further configured to: if the $S_1$ orthogonal vectors are different from the $S_2$ orthogonal vectors, send first indication information to the second device; or if the $S_1$ orthogonal vectors are the same as the $S_2$ orthogonal vectors, skip sending first indication information to the second device. The first indication information indicates the $S_1$ orthogonal vectors.

In addition, for another optional implementation of the communication apparatus in this aspect, refer to related content of the fourth aspect. Details are not described herein again.

For example, the communication unit may be a transceiver or a communication interface, the storage unit may be a memory, and the processing unit may be a processor. The processor may be configured to perform the method according to the first aspect, the second aspect, the third aspect, or the fourth aspect via a logic circuit or by running a computer program. The transceiver or the communication interface may be configured to receive and send a signal and/or data. The memory may be configured to store a computer program.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver or the communication interface may be configured to perform, for example, but not limited to, radio frequency receiving and sending. The foregoing components may be separately disposed on chips that are independent of each other, or at least a part or all of the components may be disposed on a same chip. For example, the processor may be further divided into an analog baseband processor and a digital baseband processor. The analog baseband processor and the transceiver (or the communication interface) may be integrated on a same chip, and the digital baseband processor may be disposed on an independent chip. With continuous development of integrated circuit technologies, more components may be integrated on a same chip. For example, the digital baseband processor and a plurality of application processors (for example, but not limited to, a graphics processing unit and a multimedia processor) may be integrated on a same chip. Such a chip may be referred to as a system on a chip (system on a chip, SoC). Whether the components are separately disposed on different chips or integrated and disposed on one or more chips usually depends on a requirement of a product design. Implementation forms of the foregoing components are not limited in embodiments of this application.

According to a sixth aspect, this application further provides a processor, configured to perform the foregoing methods. In processes of performing these methods, a process of sending the foregoing signal and a process of receiving the foregoing signal in the foregoing methods may be understood as a process of outputting the foregoing signal by the processor and a process of inputting the foregoing signal by the processor. When outputting the foregoing signal, the processor outputs the foregoing signal to a transceiver, so that the transceiver (or a communication interface) transmits the signal. After the foregoing signal is output by the processor, other processing may further need to be performed on the signal, and then a processed signal arrives at the transceiver (or the communication interface). Similarly, when the processor receives the foregoing input signal, the transceiver (or the communication interface) receives the signal, and inputs the signal into the processor. Further, after the transceiver (or the communication interface) receives the signal, other processing may further need to be performed on the signal, and then a processed signal is input to the processor.

Unless otherwise specified, or if operations such as sending and receiving related to the processor do not contradict an actual function or internal logic of the operations in related descriptions, all the operations may be more generally understood as operations such as outputting, receiving, and inputting of the processor, instead of operations such as sending and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in embodiments of this application.

According to a seventh aspect, this application further provides a communication system. The system includes at least one first device and at least one second device in the foregoing aspects. In another possible design, the system may further include another device that interacts with the first device and/or the second device in the solutions provided in this application.

According to an eighth aspect, this application provides a computer-readable storage medium. The computer-readable storage medium stores a computer program. When the computer program is run, the method according to any one of the first aspect, the second aspect, the third aspect, or the fourth aspect is performed.

According to a ninth aspect, this application further provides a computer program product including instructions. The computer program product includes computer program code. When the computer program code is run, the method according to any one of the first aspect, the second aspect, the third aspect, or the fourth aspect is performed.

According to a tenth aspect, this application provides a chip system. The chip system includes a processor and an interface. The interface is configured to obtain a program or instructions. The processor is configured to invoke the program or the instructions to implement the function in the first aspect, or is configured to invoke the program or the instructions to implement the function in the second aspect, or is configured to invoke the program or the instructions to implement the function in the third aspect, or is configured to invoke the program or the instructions to implement the function in the fourth aspect. In a possible design, the chip system further includes a memory. The memory is configured to store program instructions and data that are necessary for a terminal. The chip system may include a chip, or may include a chip and another discrete component.

## BRIEF DESCRIPTION OF DRAWINGS

FIG. 1 is a diagram of a communication system according to an embodiment of this application;
FIG. 2 is a diagram of another communication system according to an embodiment of this application;
FIG. 3 is a diagram of another communication system according to an embodiment of this application;
FIG. 4 is a diagram of a protocol stack according to an embodiment of this application;
FIG. 5 is a diagram of a sparse RS according to an embodiment of this application;
FIG. 6a is a schematic flowchart of an information transmission method 100 according to an embodiment of this application;
FIG. 6b is a diagram of another information transmission method according to an embodiment of this application;
FIG. 7a is a diagram of a resource corresponding to a matrix F and a resource corresponding to a matrix G according to an embodiment of this application;
FIG. 7b is a diagram of a resource corresponding to a Kronecker product of a matrix F and a matrix G according to an embodiment of this application;
FIG. 7c is a diagram of another resource corresponding to a Kronecker product of a matrix F and a matrix G according to an embodiment of this application;
FIG. 8 is a schematic flowchart of an information transmission method 200 according to an embodiment of this application;
FIG. 9 is a diagram of another information transmission method according to an embodiment of this application;
FIG. 10 is a diagram of another information transmission method according to an embodiment of this application;
FIG. 11 is a diagram of another information transmission method according to an embodiment of this application;
FIG. 12 is a diagram of another information transmission method according to an embodiment of this application;
FIG. 13a is a diagram of a bandwidth resource according to an embodiment of this application;
FIG. 13b is a diagram of another bandwidth resource according to an embodiment of this application;
FIG. 14 is a diagram of a structure of a communication apparatus according to an embodiment of this application; and
FIG. 15 is a diagram of a structure of another communication apparatus according to an embodiment of this application.

## DESCRIPTION OF EMBODIMENTS

The following describes embodiments of this application with reference to the accompanying drawings in embodiments of this application.

To better understand an information transmission method disclosed in embodiments of this application, a communication system to which embodiments of this application are applicable is first described.

Technical solutions in embodiments of this application may be applied to various communication systems, for example, a 5th generation mobile communication technology (5th generation mobile network, 5G) system like new radio (new radio, NR), and a 6th generation mobile communication technology (6th generation mobile network, 6G) system. With continuous development of communication technologies, the technical solutions in embodiments of this application may be further used in a subsequent evolved communication system, for example, a 7th generation mobile communication technology (7th generation mobile network, 7G) system. This is not limited. In addition, the technical solutions in embodiments of this application may be further applied to communication systems in networks such as the internet of vehicles, the internet of things, or the industrial internet, may be further applied to satellite communication, and may be further applied to a scenario of a homogeneous network and a heterogeneous network, a low-frequency scenario (a scenario in which a frequency is lower than 6 GHz), a high-frequency scenario (a scenario in which a frequency is higher than 6 GHz), a terahertz scenario, optical communication, and the like. A transmission point is not limited in embodiments of this application, for example, may be applied to a scenario of coordinated multipoint transmission between macro base stations, between micro base stations, and between a macro base station and a micro base station. Embodiments of this application are further applicable to a frequency division duplex (frequency division duplex, FDD) system and a time division duplex (time division duplex, TDD) system.

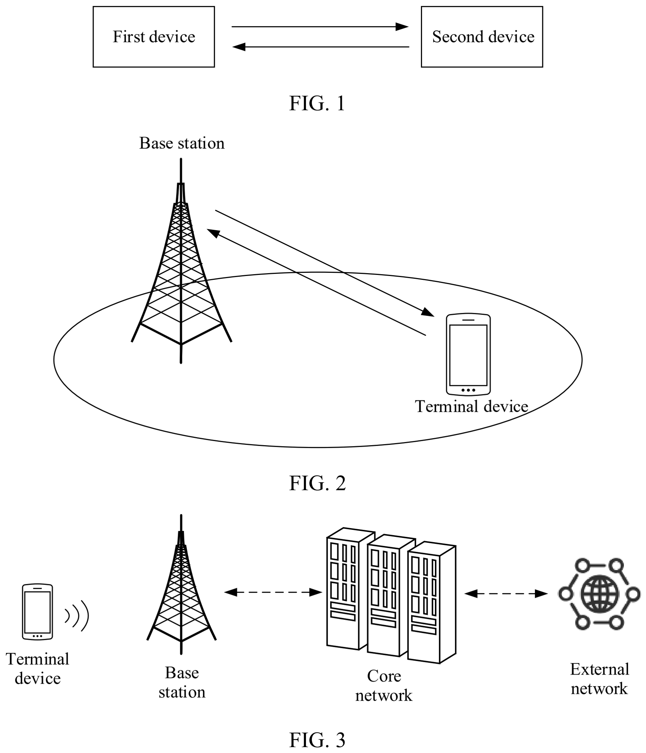

FIG. 1 is a diagram of a structure of a communication system according to an embodiment of this application. The communication system includes a first device and a second device. The first device may be a network device or a terminal device, and the second device may be a network device or a terminal device. In addition, the communication system may further include a channel for data/information transmission between the first device and the second device, for example, a transmission medium like an optical fiber, a cable, or an atmosphere. A quantity and forms of devices shown in FIG. 1 are used as an example, and do not constitute a limitation on embodiments of this application.

For example, a communication system in a scenario in which the first device is a base station and the second device is a terminal device may be shown in FIG. 2. In addition, in this scenario, the communication system shown in FIG. 2 may further include a core network and an external network, as shown in FIG. 3. The core network is mainly responsible for processing mobility management, session management, and data transmission (core functions) of a terminal user. Based on an evolved packet core (evolved packet core, EPC) (namely, a 4G core network), a 5G core network has three new enhancements: a service-based architecture, supporting network slicing, and separation of a control plane and a user plane. Compared with the 4G core network, the 5G core network evolves to a separated architecture. First, network functions are separated, and a cloud-native design idea of network functions virtualization (network functions virtualization, NFV) is absorbed to construct a network in a software-based, modular, and service-oriented mode. Second, the control plane and the user plane are separated, which frees a function of the user plane from a "centralization" constraint, so that the user plane function can be flexibly deployed on the core network or an access network.

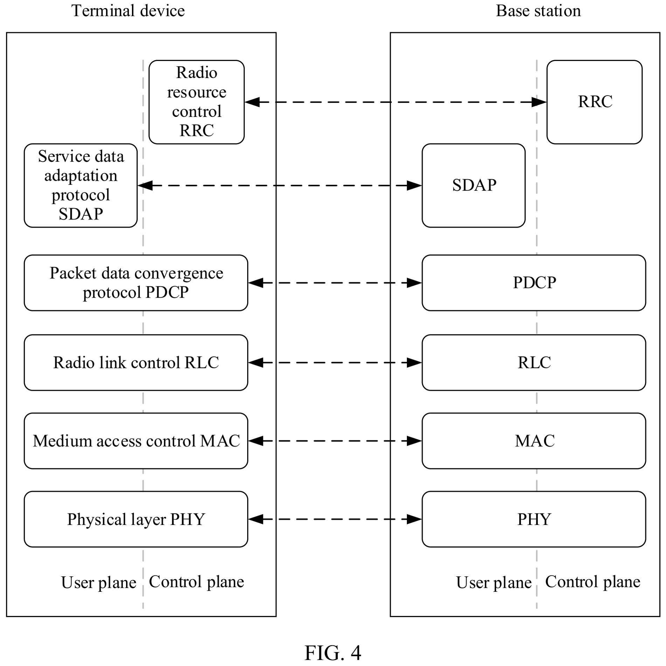

In addition, protocol stacks of the base station and the terminal device may include the following protocol layers: a physical layer (physical layer, PHY), a medium access control (medium access control, MAC) layer, a radio link control (radio link control, RLC) layer, a packet data convergence protocol (packet data convergence protocol, PDCP) layer, a radio resource control (radio resource control, RRC) layer, and a service data adaptation protocol (service data adaptation protocol, SDAP) layer. The PHY, the MAC layer, the RLC layer, and the PDCP layer belong to both a user plane (user plane) protocol layer and a control plane (control plane) protocol layer. The SDAP layer belongs to a user plane protocol layer. The RRC layer belongs to a control plane protocol layer. Protocol layers of the base station and the terminal device may be connected to each other and transfer information to each other, as shown in FIG. 4.

In embodiments of this application, the network device has a wireless transceiver function. The network device includes but is not limited to a base station (base station, BS), a radio network controller (radio network controller, RNC), a network device controller (base station controller, BSC), a network device transceiver station (base transceiver station, BTS), a home network device (for example, a home evolved NodeB, or a home NodeB, HNB), a baseband unit (baseband unit, BBU), a wireless relay node, a wireless backhaul node, a transmission and reception point (transmission and reception point, TRP; or transmission point, TP), a satellite, and the like. The base station is an apparatus that can provide a wireless communication function and that is deployed in a radio access network. The base station may also be referred to as a base station device, for example, an evolved NodeB (evolved NodeB, eNB or e-NodeB) in a long term evolution (long term evolution, LTE) system, a NodeB (NodeB), a base station (gNodeB or gNB) in a 5G system, and a base station in a 6G system. The base station may include a BBU and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components of one rack. The base station may be in the following forms: a macro base station, a micro base station (also referred to as a small cell), a pico base station, a relay station, an access point, a balloon station, and the like.

The terminal device may also be referred to as user equipment (user equipment, UE), a terminal (terminal), an access terminal, a subscriber unit (subscriber unit), a subscriber station, a mobile station, a mobile station (mobile station, MS), a remote station, a remote terminal, a mobile device, a user terminal, a user agent, or a user apparatus, and may be used in a 4G, 5G, or even 6G system. The terminal device in embodiments of this application may be a handheld device, a vehicle-mounted device, a wearable device, a computing device that has a wireless communication function, or another processing device connected to a wireless modem. The terminal device may be a terminal that has a function of connecting to a cellular base station. For example, the terminal device may be a cellular phone (cellular phone), a smartphone (smartphone), a tablet computer (Pad), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, or the like. The terminal device may alternatively be a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a wireless communication device in an intelligent factory, or the like.

A frequency band from 10 gigahertz (Gigahertz, GHz) to 13 GHz is envisaged as a promising mid-band for wide-area coverage and capacity improvement of a 6G system. A frequency of 10 GHz to 13 GHz can support an ultra-wide bandwidth. In a scenario in which a frequency is 10 GHz to 13 GHz, a base station may deploy a 1000-transmit/receive antenna array, and a terminal device may deploy a 30-transmit/receive antenna array, which are far greater than an antenna array scale in an NR system.

For the scenario in which the frequency is 10 GHz to 13 GHz, a multi-antenna technology (multiple-input multiple-output, MIMO) may be used to improve a peak throughput of a network. For example, when a multi-UE multi-antenna technology (multiple UEs multiple-input multiple-output, MU-MIMO) is used, a quantity of transmission streams may exceed 400. Due to ultra-high-dimensional transmit/receive antenna ports and ultra-massive transmission streams, a quantity of ports used for a reference signal (reference signal, RS) like a sounding reference signal (sounding reference signal, SRS), a channel state information reference signal (channel state information reference signal, CSI-RS), and a demodulation reference signal (demodulation reference signal, DMRS) increases sharply; and compared with port data used in the NR system, the port data may be increased by 10 to 30 times. If a method for obtaining CSI by designing even and dense RSs in the LTE system and the NR system is still used, ultra-high RS resource overheads are caused. Port resources used by the even and dense RSs in the LTE system and the NR system are orthogonal, each port resource is evenly and densely distributed in frequency domain, and frequency domain resource densities between ports are the same.

To support MIMO with ultra-high-dimensional transmit/receive antenna ports and an ultra-wide bandwidth, sparse RSs may be used to transmit data and collect CSI, so that RS resource overheads can be greatly reduced, and good performance can be obtained. The sparse RS means that resources occupied by the RS in one or more of time domain, frequency domain, and space domain are sparsely distributed, and the resources occupied by the sparse RS in one or more of the time domain, the frequency domain, and the space domain are evenly distributed or unevenly distributed. For example, that the RS occupies sparsely distributed resources on a transmit antenna port means that the RS is sent on a small quantity of transmit antenna ports, instead of being sent on some consecutive transmit antenna ports or on all transmit antenna ports. For another example, that the RS occupies sparsely distributed resources in frequency domain/time domain means that the RS is sent by using a small quantity of resources in frequency domain/time domain, instead of being sent by using evenly and densely distributed resources in frequency domain/time domain. In addition, the sparse RS may occupy different frequency domain resources or time domain resources for different ports, instead of occupying a same frequency domain resource or time domain resource for different ports.

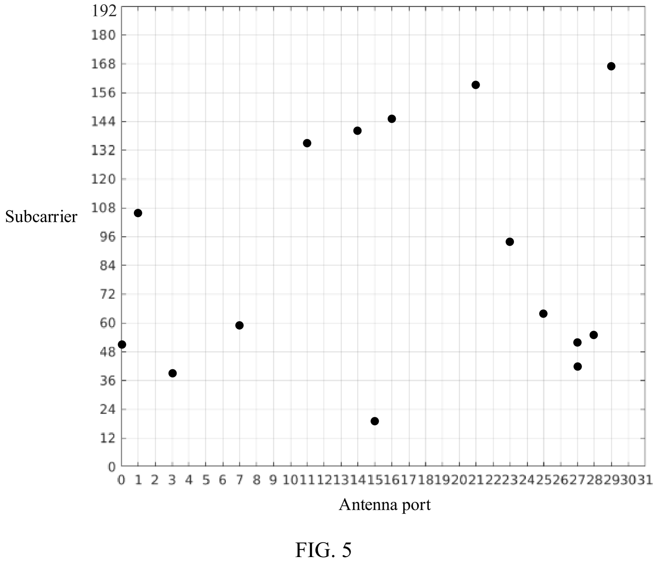

For example, FIG. 5 shows an example of distribution of a resource occupied by a sparse RS. In FIG. 5, a horizontal axis represents an antenna port, a vertical axis represents a frequency domain resource, and a location occupied by a black circle pattern represents a resource occupied by the sparse RS. It can be learned that resources occupied by the sparse RS are sparsely distributed, instead of being densely distributed.

According to the information transmission method provided in embodiments of this application, a channel estimation assistance matrix may be determined based on an orthogonal vector, so that channel estimation may be performed based on the channel estimation assistance matrix during channel estimation, thereby improving channel estimation precision. The information transmission method may be applied to a scenario of a sparse RS, and helps improve channel estimation precision for the sparse RS.

The following describes $S_1$ orthogonal vectors, $S_2$ orthogonal vectors, and $S_3$ orthogonal vectors in embodiments of this application.

1. $S_1$ orthogonal vectors

The $S_1$ orthogonal vectors may have a feature described in any one or more of the following optional implementations 1.1 to 1.4.

Implementation 1.1: Each of the $S_1$ orthogonal vectors corresponds to a resource of one or more of the following domains: time domain, frequency domain, and space domain. The space domain includes but is not limited to one or more of the following domains: a receive horizontal direction antenna port, a receive vertical direction antenna port, a transmit horizontal direction antenna port, a transmit vertical direction antenna port, a receive antenna port, a transmit antenna port, a vertical direction antenna port, and a horizontal direction antenna port. A resource corresponding to each orthogonal vector is a resource of a specific granularity. For example, a frequency domain resource granularity may be a subcarrier (subcarrier, SC), a resource block (resource block, RB), a resource block group (resource block group, RBG), a sub band, or a full band. A time domain resource granularity may be a radio frame (Frame), a subframe (Subframe), a slot (Slot), a symbol (Symbol), a mini-slot (mini-Slot), or a transmission time interval (transmission time interval, TTI). A space domain resource granularity may be a port or a port group. In addition to the resource granularities listed above, resources in embodiments of this application may alternatively use another granularity. This is not limited.

In addition, when $S_1$ is greater than 1, resources respectively corresponding to any two of the $S_1$ orthogonal vectors may be the same or different. In embodiments of this application, that two or more orthogonal vectors correspond to different resources means that resources corresponding to the two or more orthogonal vectors are partially or completely different, and that two or more orthogonal vectors correspond to a same resource means that resources corresponding to the two or more orthogonal vectors are completely the same. Details are not described below again. In addition, in embodiments of this application, a resource corresponding to an orthogonal vector may be configured, indicated, or predefined. This is not limited.

Optionally, when $S_1$ is greater than 1 and there are a plurality of orthogonal vectors corresponding to different

resources in the $S_1$ orthogonal vectors, orthogonal vectors corresponding to different resources in the $S_1$ orthogonal vectors correspond to resources in different domains. For example, $S_1$ is equal to 8. In the $S_1$ orthogonal vectors, an orthogonal vector #1 and an orthogonal vector #2 correspond to a same resource and both correspond to a time domain resource, an orthogonal vector #3 and an orthogonal vector #4 correspond to a same resource and both correspond to a frequency domain resource, an orthogonal vector #5 and an orthogonal vector #6 correspond to a same resource and both correspond to a vertical direction antenna port, and an orthogonal vector #7 and an orthogonal vector #8 correspond to a same resource and both correspond to a horizontal direction antenna port.

Implementation 1.2: A dimension of each of the $S_1$ orthogonal vectors is equal to a quantity of resources corresponding to the orthogonal vectors. It may be understood that an element in each of the $S_1$ orthogonal vectors one-to-one corresponds to a resource corresponding to the orthogonal vector. For example, a frequency domain resource granularity is a subcarrier, a time domain resource granularity is a slot, and an orthogonal vector corresponds to seven subcarriers and three slots. It can be learned that the orthogonal vector corresponds to 10 resources. In this case, a dimension of the orthogonal vector is 10, and 10 elements in the orthogonal vector one-to-one correspond to the 10 resources. Specifically, if the orthogonal vector is a column vector, a quantity of rows of the orthogonal vector is 10; or if the orthogonal vector is a row vector, a quantity of columns of the orthogonal vector is 10.

In addition, when $S_1$ is greater than 1, quantities of resources respectively corresponding to any two of the $S_1$ orthogonal vectors may be the same or different. It can be learned that dimensions of any two of the $S_1$ orthogonal vectors may be the same or different.

Implementation 1.3: Each of the $S_1$ orthogonal vectors may be an orthogonal vector included in a DFT matrix, or may be an orthogonal vector included in a DCT matrix, or may be an orthogonal vector included in a one-dimensional Grassmannian (Grassmannian).

Implementation 1.4: The $S_1$ orthogonal vectors belong to at least one predefined set, and each of the at least one set includes at least one orthogonal vector.

It may be understood that one set may be predefined in advance, and dimensions of different orthogonal vectors in a plurality of orthogonal vectors included in the set may be the same or different. The $S_1$ orthogonal vectors belong to the set. Optionally, in addition to that one set may be predefined in advance, an index corresponding to each orthogonal vector in the set may be further predefined. In this case, an index corresponding to each of the $S_1$ orthogonal vectors may be an index corresponding to each of the $S_1$ orthogonal vectors in the predefined set. For example, one set is predefined, and the set includes an orthogonal vector #1 to an orthogonal vector #k (k is a positive integer greater than or equal to $S_1$). $S_1$ orthogonal vectors may be selected from the orthogonal vector #1 to the orthogonal vector #k, and the $S_1$ orthogonal vectors belong to the predefined set. In addition, it is further predefined that indexes respectively corresponding to the orthogonal vector #1 to the orthogonal vector #k in the set are an index #1 to an index #k. If the selected $S_1$ orthogonal vectors are the orthogonal vector #1, the orthogonal vector #2, and the orthogonal vector #3, an index corresponding to the orthogonal vector #1 is the index #1, an index corresponding to the orthogonal vector #2 is the index #2, and an index corresponding to the orthogonal vector #3 is the index #3.

Alternatively, a plurality of sets may be predefined in advance, and each of the plurality of sets includes at least one orthogonal vector. The $S_1$ orthogonal vectors belong to at least one of the plurality of predefined sets. The plurality of predefined sets may be classified according to a rule. For example, the plurality of predefined sets may be classified based on dimensions of orthogonal vectors. Orthogonal vectors included in different sets in the plurality of predefined sets correspond to different dimensions, and orthogonal vectors included in a same set correspond to a same dimension. Optionally, in addition to that a plurality of sets may be predefined in advance, an index corresponding to each orthogonal vector included in each of the plurality of sets may be further predefined. In this case, an index corresponding to each of the $S_1$ orthogonal vectors may be an index corresponding to each of the $S_1$ orthogonal vectors in a set to which the $S_1$ orthogonal vectors belong.

For example, four sets obtained through classification based on resources corresponding to orthogonal vectors are predefined. A set #1 includes $k_1$ ($k_1$ is a positive integer) orthogonal vectors, a set #2 includes $k_2$ ($k_2$ is a positive integer) orthogonal vectors, a set #3 includes $k_3$ ($k_3$ is a positive integer) orthogonal vectors, and a set #4 includes $k_4$ ($k_4$ is a positive integer) orthogonal vectors. Orthogonal vectors included in different sets in the four sets correspond to different dimensions, and orthogonal vectors included in a same set correspond to a same dimension. If the $S_1$ orthogonal vectors include $a_1$ ($a_1$ is a positive integer less than or equal to $k_2$) orthogonal vectors in the set #2 and $a_2$ ($a_2$ is a positive integer less than or equal to $k_3$, and $a_1+a_2$ is equal to $S_1$) orthogonal vectors in the set #3, the set #2 and the set #3 are sets to which the $S_1$ orthogonal vectors belong. In addition, indexes respectively corresponding to the $k_1$ orthogonal vectors in the set #1, indexes respectively corresponding to the $k_2$ orthogonal vectors in the set #2, indexes respectively corresponding to the $k_3$ orthogonal vectors in the set #3, and indexes respectively corresponding to the $k_4$ orthogonal vectors in the set #4 are further predefined. In this case, indexes respectively corresponding to the $a_1$ orthogonal vectors in the $S_1$ orthogonal vectors are indexes corresponding to the $a_1$ orthogonal vectors in the set #2, and indexes respectively corresponding to the $a_2$ orthogonal vectors in the $S_1$ orthogonal vectors are indexes corresponding to the $a_2$ orthogonal vectors in the set #3.

2. $S_2$ orthogonal vectors

The $S_2$ orthogonal vectors may have a feature similar to that of the $S_1$ orthogonal vectors. For details, refer to the foregoing related descriptions of the $S_1$ orthogonal vectors. The following briefly describes a feature that the $S_2$ orthogonal vectors may have, as described in any one or more of the following optional implementations 2.1 to 2.4.

Implementation 2.1: Each of the $S_2$ orthogonal vectors corresponds to a resource of one or more of the following domains: time domain, frequency domain, and space domain. The space domain includes but is not limited to one or more of the following domains: a receive horizontal direction antenna port, a receive vertical direction antenna port, a transmit horizontal direction antenna port, a transmit vertical direction antenna port, a receive antenna port, a transmit antenna port, a vertical direction antenna port, and a horizontal direction antenna port. A resource corresponding to each orthogonal vector is a resource of a specific granularity. For specific descriptions of a resource granularity, refer to the related descriptions in Implementation 1.1. Details are not described again.

In addition, when $S_2$ is greater than 1, resources respectively corresponding to any two of the $S_2$ orthogonal vectors may be the same or different. Optionally, when $S_2$ is greater than 1 and there are a plurality of orthogonal vectors corresponding to different resources in the $S_2$ orthogonal vectors, orthogonal vectors corresponding to different resources in the $S_2$ orthogonal vectors correspond to resources in different domains.

Implementation 2.1 is similar to Implementation 1.1. For specific descriptions, refer to the related descriptions of Implementation 1.1. Details are not described again.

Implementation 2.2: A dimension of each of the $S_2$ orthogonal vectors is equal to a quantity of resources corresponding to the orthogonal vector. It may be understood that an element in each of the $S_2$ orthogonal vectors one-to-one corresponds to a resource corresponding to the orthogonal vector. Implementation 2.2 is similar to Implementation 1.2. For specific descriptions, refer to the related descriptions of Implementation 1.2. Details are not described again.

Implementation 2.3: Each of the $S_2$ orthogonal vectors may be an orthogonal vector included in a DFT matrix, or may be an orthogonal vector included in a DCT matrix, or may be an orthogonal vector included in a one-dimensional Grassmannian.

Implementation 2.4: The $S_2$ orthogonal vectors belong to at least one predefined set, and each of the at least one set includes at least one orthogonal vector.

It may be understood that one set may be predefined in advance, and dimensions of different orthogonal vectors in a plurality of orthogonal vectors included in the set may be the same or different. The $S_2$ orthogonal vectors belong to the set. Optionally, in addition to that one set may be predefined in advance, an index corresponding to each orthogonal vector in the set may be further predefined. In this case, an index corresponding to each of the $S_2$ orthogonal vectors may be an index corresponding to each of the $S_2$ orthogonal vectors in the predefined set.

Alternatively, a plurality of sets may be predefined in advance, and each of the plurality of sets includes at least one orthogonal vector. The $S_2$ orthogonal vectors belong to at least one of the plurality of predefined sets. Optionally, in addition to that a plurality of sets may be predefined in advance, an index corresponding to each orthogonal vector included in each of the plurality of sets may be further predefined. In this case, an index corresponding to each of the $S_2$ orthogonal vectors may be an index corresponding to each of the $S_2$ orthogonal vectors in a set to which the $S_2$ orthogonal vectors belong.

Implementation 2.4 is similar to Implementation 1.4. For specific descriptions, refer to the related descriptions of Implementation 1.4. Details are not described again. Optionally, when one set is predefined in advance, the set to which the $S_2$ orthogonal vectors belong and the set to which the $S_1$ orthogonal vectors belong in Implementation 1.4 are both the predefined sets. When a plurality of sets are predefined in advance, the set to which the $S_2$ orthogonal vectors belong and the set to which the $S_1$ orthogonal vectors belong in Implementation 1.4 may be the same or different.

3. $S_3$ orthogonal vectors

The $S_3$ orthogonal vectors may have a feature similar to that of the $S_1$ orthogonal vectors. For details, refer to the foregoing related descriptions of the $S_1$ orthogonal vectors. The following briefly describes a feature that the $S_3$ orthogonal vectors may have, as described in any one or more of the following optional implementations 3.1 to 3.4.

Implementation 3.1: Each of the $S_3$ orthogonal vectors corresponds to a resource of one or more of the following domains: time domain, frequency domain, and space domain. The space domain includes but is not limited to one or more of the following domains: a receive horizontal direction antenna port, a receive vertical direction antenna port, a transmit horizontal direction antenna port, a transmit vertical direction antenna port, a receive antenna port, a transmit antenna port, a vertical direction antenna port, and a horizontal direction antenna port. A resource corresponding to each orthogonal vector is a resource of a specific granularity. For specific descriptions of a resource granularity, refer to the related descriptions in Implementation 1.1. Details are not described again.

In addition, when $S_3$ is greater than 1, resources respectively corresponding to any two of the $S_3$ orthogonal vectors may be the same or different. Optionally, when $S_3$ is greater than 1 and there are a plurality of orthogonal vectors corresponding to different resources in the $S_3$ orthogonal vectors, orthogonal vectors corresponding to different resources in the $S_3$ orthogonal vectors correspond to resources in different domains.

Implementation 3.1 is similar to Implementation 1.1. For specific descriptions, refer to the related descriptions of Implementation 1.1. Details are not described again.

Implementation 3.2: A dimension of each of the $S_3$ orthogonal vectors is equal to a quantity of resources corresponding to the orthogonal vector. It may be understood that an element in each of the $S_3$ orthogonal vectors one-to-one corresponds to a resource corresponding to the orthogonal vector. Implementation 3.2 is similar to Implementation 1.2. For specific descriptions, refer to the related descriptions of Implementation 1.2. Details are not described again.

Implementation 3.3: Each of the $S_3$ orthogonal vectors may be an orthogonal vector included in a DFT matrix, or may be an orthogonal vector included in a DCT matrix, or may be an orthogonal vector included in a one-dimensional Grassmannian.

Implementation 3.4: The $S_3$ orthogonal vectors belong to at least one predefined set, and each of the at least one set includes at least one orthogonal vector.

It may be understood that one set may be predefined in advance, and dimensions of different orthogonal vectors in a plurality of orthogonal vectors included in the set may be the same or different. The $S_3$ orthogonal vectors belong to the set. Optionally, in addition to that one set may be predefined in advance, an index corresponding to each orthogonal vector in the set may be further predefined. In this case, an index corresponding to each of the $S_3$ orthogonal vectors may be an index corresponding to each of the $S_3$ orthogonal vectors in the predefined set.

Alternatively, a plurality of sets may be predefined in advance, and each of the plurality of sets includes at least one orthogonal vector. The $S_3$ orthogonal vectors belong to at least one of the plurality of predefined sets. Optionally, in addition to that a plurality of sets may be predefined in advance, an index corresponding to each orthogonal vector included in each of the plurality of sets may be further predefined. In this case, an index corresponding to each of the $S_3$ orthogonal vectors may be an index corresponding to each of the $S_3$ orthogonal vectors in a set to which the $S_3$ orthogonal vectors belong.

Implementation 3.4 is similar to Implementation 1.4. For specific descriptions, refer to the related descriptions of Implementation 1.4. Details are not described again. Optionally, when one set is predefined in advance, the set to which the $S_3$ orthogonal vectors belong, the set to which the $S_1$ orthogonal vectors belong in Implementation 1.4, and the set to which the $S_2$ orthogonal vectors belong in Implementation 2.4 are all the predefined sets. When a plurality of sets are predefined in advance, any two of the set to which the $S_3$ orthogonal vectors belong, the set to which the $S_1$ orthogonal vectors belong in Implementation 1.4, and the set to which the $S_2$ orthogonal vectors belong in Implementation 2.4 may be the same or different.

The following describes embodiments of this application with reference to the accompanying drawings.

An embodiment of this application provides an information transmission method 100. In the information transmission method 100, a first device sends first indication information to a second device, where the first indication information indicates $S_1$ orthogonal vectors. The second device determines a first channel estimation assistance matrix based on the $S_1$ orthogonal vectors, and performs channel estimation based on the first channel estimation assistance matrix.

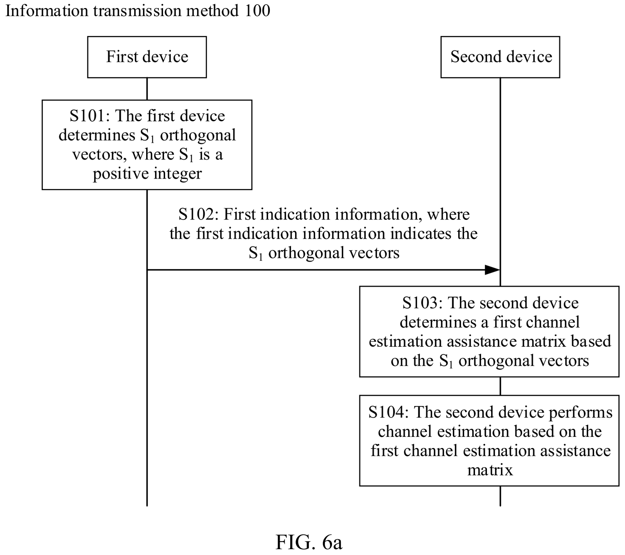

FIG. 6a is a schematic flowchart of the information transmission method 100 according to an embodiment of this application. In the diagram, an example in which the first device and the second device are used as execution bodies of the schematic interaction is used to show a corresponding method. However, the execution bodies of the schematic interaction are not limited in this application. For example, the first device in the figure may also be a chip, a chip system, or a processor that supports the first device in implementing a corresponding method, or may be a logical module or software that can implement all or a part of functions of the first device. The second device in the figure may also be a chip, a chip system, or a processor that supports the second device in implementing a corresponding method, or may be a logical module or software that can implement all or a part of functions of the second device. The information transmission method 100 includes the following steps.

S101: The first device determines the $S_1$ orthogonal vectors, where $S_1$ is a positive integer.

In an optional implementation, the $S_1$ orthogonal vectors may be represented in a form of a set. That the first device determines the $S_1$ orthogonal vectors may include: The first device determines $M_1$ orthogonal vector sets, where each of the $M_1$ orthogonal vector sets includes at least one orthogonal vector, and the $M_1$ orthogonal vector sets include the $S_1$ orthogonal vectors in total.

When $S_1$ is equal to 1, $M_1$ is equal to 1. The orthogonal vector set includes one orthogonal vector. When $S_1$ is greater than 1 and resources corresponding to different orthogonal vectors in the $S_1$ orthogonal vectors are the same, $M_1$ is equal to 1. The $S_1$ orthogonal vectors included in the orthogonal vector set correspond to a same resource. When $S_1$ is greater than 1 and there are a plurality of orthogonal vectors corresponding to different resources in the $S_1$ orthogonal vectors, $M_1$ is an integer greater than 1, and $M_1$ is less than or equal to $S_1$. Orthogonal vectors included in different orthogonal vector sets in the $M_1$ orthogonal vector sets correspond to different resources, and orthogonal vectors included in a same orthogonal vector set correspond to a same resource.

For example, $S_1$ is equal to 7. In the $S_1$ orthogonal vectors, an orthogonal vector #1, an orthogonal vector #2, and an orthogonal vector #3 correspond to a same resource, an orthogonal vector #4 and an orthogonal vector #5 correspond to a same resource, and the resource corresponding to the orthogonal vector #1, the orthogonal vector #2, and the orthogonal vector #3, the resource corresponding to the orthogonal vector #4 and the orthogonal vector #5, and a resource corresponding to an orthogonal vector #6 are different from each other. In this case, $M_1$ is equal to 3. In the $M_1$ orthogonal vector sets, an orthogonal vector set #1 includes the orthogonal vector #1, the orthogonal vector #2, and the orthogonal vector #3, an orthogonal vector set #2 includes the orthogonal vector #4 and the orthogonal vector #5, and an orthogonal vector set #3 includes the orthogonal vector #6.

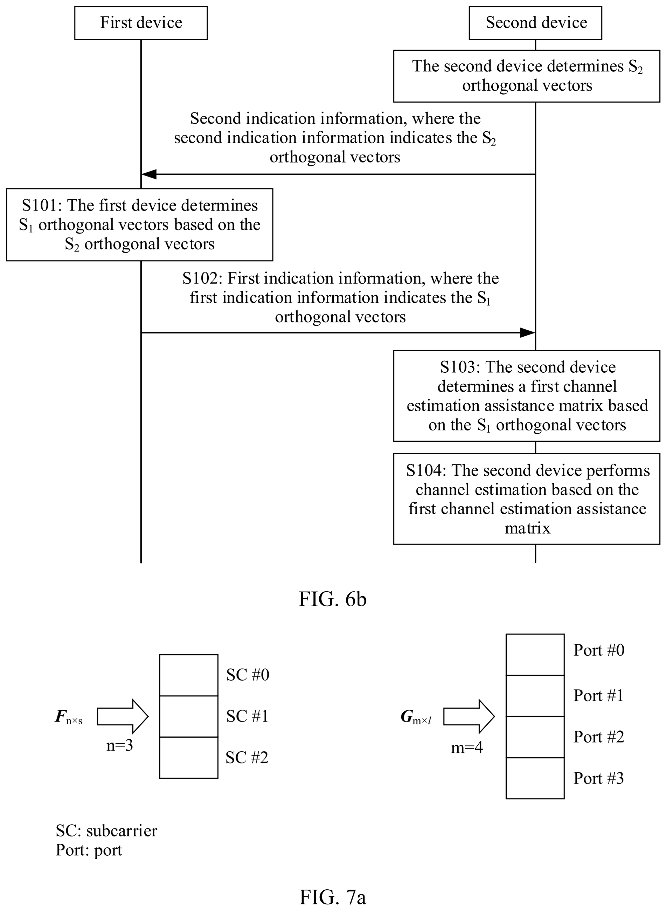

In an optional implementation, the $S_1$ orthogonal vectors may be determined by the first device based on $S_2$ orthogonal vectors indicated by second indication information from the second device, where $S_2$ is a positive integer. The $S_1$ orthogonal vectors may be the same as or different from the $S_2$ orthogonal vectors. Correspondingly, with reference to FIG. 6b, the method may further include: The second device determines the $S_2$ orthogonal vectors, and sends the second indication information to the first device, where the second indication information indicates the $S_2$ orthogonal vectors. In this case, that the first device determines the $S_1$ orthogonal vectors in step S101 may be as follows: The first device determines the $S_1$ orthogonal vectors based on the $S_2$ orthogonal vectors. It can be learned that the second device may recommend the $S_2$ orthogonal vectors to the first device, and the first device may determine the $S_1$ orthogonal vectors based on the $S_2$ orthogonal vectors recommended by the second device. When the second device is a terminal device, because the terminal device has a capability of obtaining whether a channel feature changes, the terminal device may determine the recommended $S_2$ orthogonal vectors by using this capability, so that the first channel estimation assistance matrix determined based on the $S_1$ orthogonal vectors helps further improve channel estimation precision.

In an optional manner, that the first device determines the $S_1$ orthogonal vectors based on the $S_2$ orthogonal vectors may include: The first device selects the $S_1$ orthogonal vectors from the $S_2$ orthogonal vectors. In this case, $S_1$ is less than or equal to $S_2$. In another optional manner, $S_1$ is greater than 1, a part of the $S_1$ orthogonal vectors are selected by the first device from the $S_2$ orthogonal vectors, and the other part of the orthogonal vectors are determined by the first device in another manner. For example, the other part of the orthogonal vectors may be selected by the first device from a set predefined in advance. For the set predefined in advance, refer to the foregoing related descriptions. Details are not described again.

In an optional manner, that the second indication information indicates the $S_2$ orthogonal vectors includes: The second indication information includes the $S_2$ orthogonal vectors. In this way, the first device may directly learn of the $S_2$ orthogonal vectors from the second indication information. For example, $S_2$ is equal to 6, and the $S_2$ orthogonal vectors are the orthogonal vector #1 to the orthogonal vector #6. In this case, the second indication information may include the orthogonal vector #1 to the orthogonal vector #6.

In another optional manner, that the second indication information indicates the $S_2$ orthogonal vectors includes: The second indication information includes an index corresponding to each of the $S_2$ orthogonal vectors. In this case, the first device may determine, based on the indexes in the second indication information, the $S_2$ orthogonal vectors corresponding to the indexes.

In still another optional manner, that the second indication information indicates the $S_2$ orthogonal vectors includes: The second indication information includes a second moment, and the second moment is used to indicate the $S_2$ orthogonal vectors. Orthogonal vectors used to determine the channel estimation assistance matrix in a process of performing channel estimation closest to the second moment are the same as the $S_2$ orthogonal vectors. It can be learned that the second device may notify the first device of the second moment. In this case, the first device may determine the orthogonal vectors used to determine the channel estimation assistance matrix in the process of performing channel estimation closest to the second moment. These orthogonal vectors are the $S_2$ orthogonal vectors, and the first device may determine the $S_1$ orthogonal vectors based on these orthogonal vectors. For example, $S_2$ is equal to 6, and the $S_2$ orthogonal vectors determined by the second device are the orthogonal vector #1 to the orthogonal vector #6. In addition, the orthogonal vectors used to determine the channel estimation assistance matrix in the process of performing channel estimation closest to a moment #1 are also the orthogonal vector #1 to the orthogonal vector #6. In this case, the second indication information may include the moment #1 (namely, the second moment). In addition, the second indication information includes the second moment instead of directly including the $S_2$ orthogonal vectors, so that indication overheads can be reduced.

In an optional implementation, the second indication information further indicates a dimension of each of the $S_2$ orthogonal vectors. For example, the second indication information may further include the dimension of each of the $S_2$ orthogonal vectors.

In an optional implementation, the $S_2$ orthogonal vectors may be represented in a form of a set. That the second device determines the $S_2$ orthogonal vectors may include: The second device determines $M_3$ orthogonal vector sets, where each of the $M_3$ orthogonal vector sets includes at least one orthogonal vector, and the $M_3$ orthogonal vector sets include the $S_2$ orthogonal vectors in total.

When $S_2$ is equal to 1, $M_3$ is equal to 1. The orthogonal vector set includes one orthogonal vector. When $S_2$ is

greater than 1 and resources corresponding to different orthogonal vectors in the $S_2$ orthogonal vectors are the same, $M_3$ is equal to 1. The $S_2$ orthogonal vectors included in the orthogonal vector set correspond to a same resource. When $S_2$ is greater than 1 and there are a plurality of orthogonal vectors corresponding to different resources in the $S_2$ orthogonal vectors, $M_3$ is an integer greater than 1, and $M_3$ is less than or equal to $S_2$. Orthogonal vectors included in different orthogonal vector sets in the $M_3$ orthogonal vector sets correspond to different resources, and orthogonal vectors included in a same orthogonal vector set correspond to a same resource.

In addition, in a case in which the $S_2$ orthogonal vectors are represented in a form of a set, in addition to the foregoing optional manner in which the second indication information indicates the $S_2$ orthogonal vectors, an optional manner in which the second indication information indicates the $S_2$ orthogonal vectors may alternatively be as follows: The second indication information indicates the $M_3$ orthogonal vector sets.

S102: The first device sends the first indication information to the second device, where the first indication information indicates the $S_1$ orthogonal vectors. Correspondingly, the second device receives the first indication information from the first device.

In an optional implementation, that the first indication information indicates the $S_1$ orthogonal vectors includes: The first indication information includes the $S_1$ orthogonal vectors; or the first indication information includes an index corresponding to each of the $S_1$ orthogonal vectors; or the first indication information includes a first moment, and the first moment is used to indicate the $S_1$ orthogonal vectors. Orthogonal vectors used to determine the channel estimation assistance matrix in a process of performing channel estimation closest to the first moment are the same as the $S_1$ orthogonal vectors. The first indication information includes the first moment instead of directly including the $S_1$ orthogonal vectors, so that indication overheads can be reduced. In addition, that the first indication information indicates the $S_1$ orthogonal vectors is similar to that the second indication information indicates the $S_2$ orthogonal vectors. For specific descriptions, refer to the foregoing related descriptions of the second indication information. Details are not described again.

In addition, overheads of indicating the $S_1$ orthogonal vectors by the first indication information are small. For example, $S_1$ is equal to 8. A binary system is used as an example, overheads of including the $S_1$ orthogonal vectors by the first indication information may be shown in Table 1. Overheads of indicating the $S_2$ orthogonal vectors by the second indication information mentioned above are also small, and are similar to those of the first indication information. Details are not described again.

Table 1

| Manner | Resource quantity | Quantity of orthogonal vectors | Overheads |
|---|---|---|---|
| The first indication information includes the $S_1$ orthogonal vectors | Quantity of subcarriers=192<br><br>Quantity of transmit antenna ports=1024 | Quantity of orthogonal vectors corresponding to a same frequency domain resource=4<br><br>Quantity of orthogonal vectors corresponding to a same space domain resource=4 | 4×8 bits+4×10 bits=72 bits (bits) |
| | Quantity of subcarriers=192<br><br><br>Quantity of transmit antenna ports=1024<br>A uniform planar array (uniform planar array, UPA) is as follows: A quantity of antenna ports per column per polarization dimension=32, a quantity of columns=16, and a quantity of polarization dimensions=2 | Quantity of orthogonal vectors corresponding to a same frequency domain resource=4<br><br>Quantity of orthogonal vectors corresponding to a transmit horizontal antenna port=2<br><br>Quantity of orthogonal vectors corresponding to a transmit vertical antenna port=2<br><br>RS patterns (namely, RS resource distributions) in two offset dimensions are the same | 4×8 bits+2×5 bits+2×4 bits=50 bits |

It can be learned from Table 1 that overheads of indicating the eight orthogonal vectors by the first indication information are small. In addition, compared with a manner in which four vectors correspond to a same space domain resource, in this manner, the four orthogonal vectors are further refined into: two orthogonal vectors corresponding to the transmit horizontal antenna port and the other two orthogonal vectors corresponding to the transmit vertical antenna port. This manner can further reduce the overheads of indicating the eight orthogonal vectors by the first indication information.

Optionally, in a scenario in which the $S_1$ orthogonal vectors are represented in a form of a set, in addition to the foregoing optional manner in which the first indication information indicates the $S_1$ orthogonal vectors, an optional manner in which the first indication information indicates the $S_1$ orthogonal vectors may alternatively be as follows: The first indication information indicates the $M_1$ orthogonal vector sets. For the $M_1$ orthogonal vector sets, refer to the foregoing related descriptions. Details are not described again.

In an optional implementation, the first indication information further indicates a dimension of each of the $S_1$ orthogonal vectors. For example, the first indication information may further include the dimension of each of the $S_1$ orthogonal vectors.

In an optional implementation, the first indication information and/or the second indication information may be configured by using radio resource control (radio resource control, RRC), or may be indicated by downlink control information (downlink control information, DCI) or a medium access control-control element (medium access control-control element, MAC-CE). In addition, optionally, the first indication information and/or the second indication information may be periodically updated, aperiodically updated, or semi-persistently updated.

S103: The second device determines the first channel estimation assistance matrix based on the $S_1$ orthogonal vectors.

The following describes optional implementations in which the second device determines the first channel estimation assistance matrix based on the $S_1$ orthogonal vectors, as described in the following optional implementations 4.1 to 4.4.

In Implementation 4.1, the first channel estimation assistance matrix includes the $S_1$ orthogonal vectors. Specifically, the following three cases are included:

Case 1: $S_1$ is equal to 1, and the first channel estimation assistance matrix is the $S_1$ orthogonal vectors.

It may be understood that, in Case 1, a resource corresponding to the first channel estimation assistance matrix is a resource corresponding to the $S_1$ orthogonal vectors, and a quantity of resources corresponding to the first channel estimation assistance matrix is equal to a quantity of resources corresponding to the $S_1$ orthogonal vectors. In addition, the first channel estimation assistance matrix may be the $S_1$ orthogonal vectors arranged by rows or columns. In a scenario in which a dimension of each orthogonal vector is equal to a quantity of resources corresponding to the orthogonal vector, if the first channel estimation assistance matrix is the orthogonal vector arranged by columns, a quantity of columns of the first channel estimation assistance matrix is equal to 1, and a quantity of rows of the first channel estimation assistance matrix is equal to a quantity of resources corresponding to the orthogonal vector; or if the first channel estimation assistance matrix is the orthogonal vector arranged by rows, a quantity of rows of the first channel estimation assistance matrix is equal to 1, and a quantity of columns of the first channel estimation assistance matrix is equal to a quantity of resources corresponding to the orthogonal vector.

In addition, this embodiment of this application is not limited to the manner in which the first channel estimation assistance matrix is the $S_1$ orthogonal vectors. For example, the first channel estimation assistance matrix may alternatively be a matrix including the $S_1$ orthogonal vectors and another vector, and the another vector is, for example, a zero vector or another orthogonal vector different from the $S_1$ orthogonal vectors.

Case 2: $S_1$ is greater than 1, the $S_1$ orthogonal vectors correspond to a same resource, and the first channel estimation assistance matrix is a sub-unitary matrix including the $S_1$ orthogonal vectors.

In this embodiment of this application, the $S_1$ orthogonal vectors correspond to the same resource. In other words, resources corresponding to different orthogonal vectors in the $S_1$ orthogonal vectors are the same. Details are not described below again.

It may be understood that, in Case 2, in a scenario in which a dimension of each orthogonal vector is equal to a quantity of resources corresponding to the orthogonal vector, the resources corresponding to different orthogonal vectors in the $S_1$ orthogonal vectors are the same, and it may indicate that dimensions of all orthogonal vectors in the $S_1$ orthogonal vectors are the same. In this case, the $S_1$ orthogonal vectors may form the sub-unitary matrix. In addition, a resource corresponding to the first channel estimation assistance matrix is a resource corresponding to any one of the $S_1$ orthogonal vectors, and a quantity of resources corresponding to the first channel estimation assistance matrix is equal to a quantity of resources corresponding to any one of the $S_1$ orthogonal vectors.

When the $S_1$ orthogonal vectors form the sub-unitary matrix, the $S_1$ orthogonal vectors may be arranged according to a predefined rule. For example, in a scenario in which each orthogonal vector corresponds to an index, the predefined rule may be arranging by rows in ascending or descending order of the indexes, or the predefined rule may be arranging by columns in ascending or descending order of the indexes. The arrangement rule is not limited in embodiments of this application.

For example, if the Si orthogonal vectors are arranged by columns to form the first channel estimation assistance matrix, a quantity of columns of the first channel estimation assistance matrix is equal to $S_1$, a quantity of rows of the first channel estimation assistance matrix is equal to a quantity of resources corresponding to any one of the $S_1$ orthogonal vectors, and a row vector in the first channel estimation assistance matrix one-to-one corresponds to the resource corresponding to any one of the $S_1$ orthogonal vectors. If the $S_1$ orthogonal vectors are arranged by rows to form the first channel estimation assistance matrix, a quantity of rows of the first channel estimation assistance matrix is equal to $S_1$, a quantity of columns of the first channel estimation assistance matrix is equal to a quantity of resources corresponding to any one of the $S_1$ orthogonal vectors, and a column vector in the first channel estimation assistance matrix one-to-one corresponds to the resource corresponding to any one of the $S_1$ orthogonal vectors.

For example, $S_1$ is equal to 5, different orthogonal vectors in the $S_1$ orthogonal vectors correspond to a same resource, and a quantity of corresponding resources is 6. Six elements included in each orthogonal vector one-to-one correspond to the six resources. The five $S_1$ orthogonal vectors are shown in the following Table 2.

Table 2

|  | Index | Orthogonal vector element |
|---|---|---|
| Orthogonal vector #1 | 1 | $(b_{11}, b_{12}, b_{13}, b_{14}, b_{15}, b_{16})$ |
| Orthogonal vector #2 | 2 | $(b_{21}, b_{22}, b_{23}, b_{24}, b_{25}, b_{26})$ |
| Orthogonal vector #3 | 3 | $(b_{31}, b_{32}, b_{33}, b_{34}, b_{35}, b_{36})$ |
| Orthogonal vector #4 | 4 | $(b_{41}, b_{42}, b_{43}, b_{44}, b_{45}, b_{46})$ |
| Orthogonal vector #5 | 5 | $(b_{51}, b_{52}, b_{53}, b_{54}, b_{55}, b_{56})$ |

A first channel estimation assistance matrix $U_{6 \times 5}$ obtained by arranging the orthogonal vector #1 to the orthogonal vector #5 in ascending order of indexes by columns is shown in the following formula (1). Six row vectors in $U_{6\times5}$ one-to-one correspond to six resources.

$$U_{6\times5} = \begin{bmatrix} b_{11} & b_{21} & b_{31} & b_{41} & b_{51} \\ b_{12} & b_{22} & b_{32} & b_{42} & b_{52} \\ b_{13} & b_{23} & b_{33} & b_{43} & b_{53} \\ b_{14} & b_{24} & b_{34} & b_{44} & b_{54} \\ b_{15} & b_{25} & b_{35} & b_{45} & b_{55} \\ b_{16} & b_{26} & b_{36} & b_{46} & b_{56} \end{bmatrix} \qquad (1)$$

A first channel estimation assistance matrix $U_{5\times6}$ obtained by arranging the orthogonal vector #1 to the orthogonal vector #5 in ascending order of indexes by rows is shown in the following formula (2). Six column vectors in $U_{5\times6}$ one-to-one correspond to six resources.

$$U_{5\times6} = \begin{bmatrix} b_{11} & b_{12} & b_{13} & b_{14} & b_{15} & b_{16} \\ b_{21} & b_{22} & b_{23} & b_{24} & b_{25} & b_{26} \\ b_{31} & b_{32} & b_{33} & b_{34} & b_{35} & b_{36} \\ b_{41} & b_{42} & b_{43} & b_{44} & b_{45} & b_{46} \\ b_{51} & b_{52} & b_{53} & b_{54} & b_{55} & b_{56} \end{bmatrix} \qquad (2)$$

In addition, this embodiment of this application is not limited to the manner in which the first channel estimation assistance matrix is the sub-unitary matrix including the $S_1$ orthogonal vectors. For example, the first channel estimation assistance matrix may alternatively be a matrix including the $S_1$ orthogonal vectors and another vector, and the another vector is, for example, a zero vector or another orthogonal vector different from the $S_1$ orthogonal vectors.

Case 3: $S_1$ is greater than 1, the $S_1$ orthogonal vectors correspond to different resources, and the first channel estimation assistance matrix is a Kronecker (Kronecker) product of $M_1$ matrices. Orthogonal vectors included in a same matrix in the $M_1$ matrices correspond to a same resource, orthogonal vectors included in different matrices in the $M_1$ matrices correspond to different resources, the $M_1$ matrices are determined based on the $S_1$ orthogonal vectors, $M_1$ is an integer greater than 1, and $M_1$ is less than or equal to $S_1$.

In this embodiment of this application, that the $S_1$ orthogonal vectors correspond to the different resources may be understood as that there are orthogonal vectors corresponding to different resources in the $S_1$ orthogonal vectors. Specifically, it may be represented as follows: Resources respectively corresponding to the $S_1$ orthogonal vectors are different from each other. It may alternatively be represented as follows: A part of orthogonal vectors in the $S_1$ orthogonal vectors all correspond to a same resource, and resources corresponding to a part of orthogonal vectors are different from each other. Details are not described below again. In addition, the $M_1$ matrices may be further understood as follows: Each of the $M_1$ matrices may be a matrix including orthogonal vectors corresponding to a same resource in the $S_1$ orthogonal vectors, and orthogonal vectors used to form different matrices in the $M_1$ matrices correspond to different resources.

For example, $S_1$ is equal to 6. In the $S_1$ orthogonal vectors, the orthogonal vector #1, the orthogonal vector #2, and the orthogonal vector #3 all correspond to a resource #1, both the orthogonal vector #4 and the orthogonal vector #5 correspond to a resource #2, and the orthogonal vector #6 corresponds to a resource #3, where the resource #1, the resource #2, and the resource #3 are different from each other. In this case, $M_1$ is equal to 3. In the $M_1$ matrices, a matrix #1 is a sub-unitary matrix including the orthogonal vector #1, the orthogonal vector #2, and the orthogonal vector #3, a matrix #2 is a sub-unitary matrix including the orthogonal vector #4 and the orthogonal vector #5, and a matrix #3 is the orthogonal vector #6.

Each of the $M_1$ matrices may be obtained by arranging, according to a same predefined rule, orthogonal vectors corresponding to a same resource in the $S_1$ orthogonal vectors. For the predefined arrangement rule, refer to the related descriptions in Case 2. Details are not described again. That any one of the $M_1$ matrices includes orthogonal vectors corresponding to a same resource is similar to that the first channel estimation assistance matrix includes the $S_1$ orthogonal vectors in Case 2. For details, refer to the related descriptions in Case 2. Details are not described again.

In addition, a resource corresponding to each of the $M_1$ matrices may be a resource corresponding to any orthogonal vector included in the matrix, and a quantity of resources corresponding to each of the $M_1$ matrices is equal to a quantity of resources corresponding to any orthogonal vector included in the matrix (a resource corresponding to any one of the $M_1$ matrices is similar to the resource corresponding to the first channel estimation assistance matrix in Case 2, and details are not described again). In a case in which the orthogonal vectors corresponding to the different resources in the $S_1$ orthogonal vectors correspond to resources in different domains, the quantity of resources corresponding to the first channel estimation assistance matrix is equal to a product of $M_1$ values, and the $M_1$ values are quantities of resources corresponding to orthogonal vectors respectively included in the $M_1$ matrices. It can be learned that the $M_1$ values one-to-one correspond to the $M_1$ matrices, and each of the $M_1$ values is a quantity of resources corresponding to a matrix corresponding to the value. It may be understood that different matrices in the $M_1$ matrices correspond to resources in different domains, and the resources in different domains may be randomly combined. In this way, a total of the product of the $M_1$ values of combinations may be obtained. The first channel estimation assistance matrix is the Kronecker product of the $M_1$ matrices, so that the quantity of resources corresponding to the first channel estimation assistance matrix is equal to the product of the $M_1$ values, and resources corresponding to the first channel estimation assistance matrix are resources of the product of the $M_1$ values of combinations.

In addition, for Case 3, in a scenario in which the $S_1$ orthogonal vectors are represented in a form of a set, the $M_1$ matrices one-to-one correspond to the $M_1$ orthogonal vector sets, and each of the $M_1$ matrices is a matrix including orthogonal vectors included in an orthogonal vector set corresponding to the matrix. For specific descriptions of the $M_1$ orthogonal vector sets, refer to the foregoing related descriptions. Details are not described again.

For example, $M_1$ is equal to 2. One matrix in the $M_1$ matrices includes s orthogonal vectors, and the other matrix includes $l$ orthogonal vectors, where $s+l=S_1$, a quantity of resources (namely, a dimension) corresponding to each of the s orthogonal vectors is n, and a quantity of resources (namely, a dimension) corresponding to each of the $l$ orthogonal vectors is m. For example, the orthogonal vectors are arranged by columns to obtain a matrix. A dimension of a matrix F including s orthogonal vectors (a dimension of the orthogonal vector is n) in the $M_1$ matrices is n×s (that is, a quantity of rows of F is n, and a quantity of columns is s), as shown in Formula (3). A resource corresponding to F is a resource corresponding to any one of the s orthogonal vectors. A dimension of a matrix G including $l$ orthogonal vectors (a dimension of the orthogonal vector is m) is m×$l$ (that is, a quantity of rows of G is m, and a quantity of columns is $l$), as shown in Formula (4). A resource corresponding to $G$ is a resource corresponding to any one of the $l$ orthogonal vectors. In this case, a dimension of the first channel estimation assistance matrix $U$ is (n×m)×(s×$l$) (that is, a quantity of rows of $U$ is n×m, and a quantity of columns is s×$l$), as shown in the following formula (5) or formula (6). A quantity of resources corresponding to the first channel estimation assistance matrix $U$ is equal to n×m.

$$F_{n\times s} = \begin{bmatrix} F_{11} & \cdots & F_{1s} \\ \vdots & \ddots & \vdots \\ F_{n1} & \cdots & F_{ns} \end{bmatrix} \qquad (3)$$

$$G_{m\times l} = \begin{bmatrix} G_{11} & \cdots & G_{1l} \\ \vdots & \ddots & \vdots \\ G_{m1} & \cdots & G_{ml} \end{bmatrix} \qquad (4)$$

$$U_{(n\times m)\times(s\times l)} = F_{n\times s} \otimes G_{m\times l} = \begin{bmatrix} F_{11}G_{m\times l} & \cdots & F_{1s}G_{m\times l} \\ \vdots & \ddots & \vdots \\ F_{n1}G_{m\times l} & \cdots & F_{ns}G_{m\times l} \end{bmatrix} \qquad (5)$$

$$U_{(n\times m)\times(s\times l)} = G_{m\times l} \otimes F_{n\times s} = \begin{bmatrix} G_{11}F_{n\times s} & \cdots & G_{1l}F_{n\times s} \\ \vdots & \ddots & \vdots \\ G_{m1}F_{n\times s} & \cdots & G_{ml}F_{n\times s} \end{bmatrix} \qquad (6)$$

For the first channel estimation assistance matrix $U$ shown in Formula (5), the resource corresponding to the matrix $G$ is first traversed, and then the resource corresponding to the matrix $F$ is traversed. For the first channel estimation assistance matrix $U$ shown in Formula (6), the resource corresponding to the matrix $F$ is first traversed, and then the resource corresponding to the matrix $G$ is traversed.

The following uses an example in which the resources corresponding to each of the s orthogonal vectors are an SC #0, an SC #1, and an SC #2, and the resources corresponding to each of the $l$ orthogonal vectors are a port (Port) #0, a port #1, a port #2, and a port #3 to specifically describe the first channel estimation assistance matrix $U$ shown in Formula (5) and Formula (6). In this example, n is equal to 3, and m is equal to 4. With reference to FIG. 7a, three row vectors in $F_{3\times s}$ respectively correspond to the SC #0, the SC #1, and the SC #2, and four row vectors in $G_{4\times l}$ respectively correspond to the port #0, the port #1, the port #2, and the port #3.

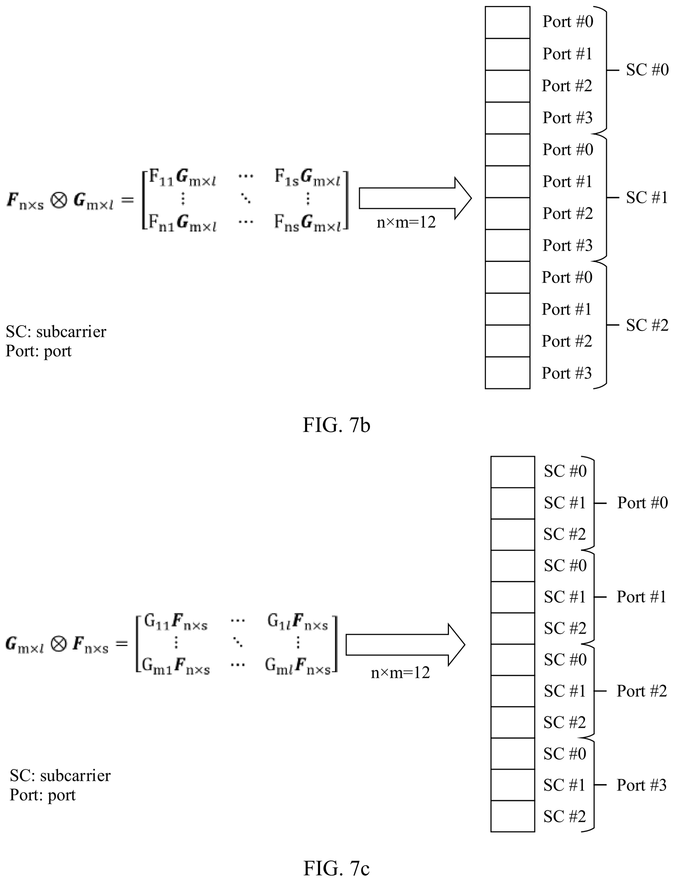

Therefore, with reference to FIG. 7b, in $U_{12\times(s\times l)}$ obtained according to Formula (5), row vectors from the first row to the fourth row respectively correspond to the port #0, the port #1, the port #2, and the port #3 and the row vectors from the first row to the fourth row all correspond to the SC #0, row vectors from the fifth row to the eighth row respectively correspond to the port #0, the port #1, the port #2, and the port #3 and the row vectors from the fifth row to the eighth row all correspond to the SC #1, and row vectors from the ninth row to the twelfth row respectively correspond to the port #0, the port #1, the port #2, and the port #3 and the row vectors from the ninth row to the twelfth row all correspond to the SC #2. It can be learned that, for $U_{12 \times (s \times l)}$ obtained according to Formula (5), the port #0, the port #1, the port #2, and the port #3 can be completely traversed based on the row vectors from the first row to the fourth row in $U_{12 \times (s \times l)}$, and the SC #0, the SC #1, and the SC #2 can be completely traversed only based on all row vectors. Therefore, for the first channel estimation assistance matrix $U$ shown in Formula (5), the resource corresponding to $G$ is first traversed, and then the resource corresponding to $F$ is traversed.

With reference to FIG. 7c, in $U_{12 \times (s \times l)}$ obtained according to Formula (6), row vectors from the first row to the third row respectively correspond to the SC #0, the SC #1, and the SC #2 and the row vectors from the first row to the third row all correspond to the port #0, row vectors from the fourth row to the sixth row respectively correspond to the SC #0, the SC #1, and the SC #2 and the row vectors from the fourth row to the sixth row all correspond to the port #1, row vectors from the seventh row to the ninth row respectively correspond to the SC #0, the SC #1, and the SC #2 and the row vectors from the seventh row to the ninth row all correspond to the port #2, and row vectors from the tenth row to the twelfth row respectively correspond to the SC #0, the SC #1, and the SC #2 and the row vectors from the tenth row to the twelfth row all correspond to the port #3. It can be learned that, for $U_{12 \times (s \times l)}$ obtained according to Formula (6), the SC #0, the SC #1, and the SC #2 can be completely traversed based on the row vectors from the first row to the third row in $U_{12 \times (s \times l)}$, and the port #0, the port #1, the port #2, and the port #3 can be completely traversed only based on all row vectors. Therefore, for the first channel estimation assistance matrix $U$ shown in Formula (6), the resource corresponding to the matrix $F$ is first traversed, and then the resource corresponding to the matrix $G$ is traversed.

In addition, this embodiment of this application is not limited to the manner in which each of the $M_1$ matrices is a matrix including an orthogonal vector in the $S_1$ orthogonal vectors. For example, the matrix #1 in the $M_1$ matrices includes $l$ orthogonal vectors in the $S_1$ orthogonal vectors. The $l$ orthogonal vectors correspond to a same resource, and the matrix #1 may alternatively be a matrix including the $l$ orthogonal vectors and another vector. The another vector is, for example, a zero vector or another orthogonal vector different from the $S_1$ orthogonal vectors.

In Implementation 4.2, the method may further include: The first device sends a first coefficient matrix to the second device; and the second device may determine the first channel estimation assistance matrix based on the $S_1$ orthogonal vectors and the first coefficient matrix. Specifically, the following three cases are included:

Case 1: $S_1$ is equal to 1, and the first channel estimation assistance matrix is determined based on the $S_1$ orthogonal vectors and the first coefficient matrix.

In this case, a resource corresponding to the first channel estimation assistance matrix is a resource corresponding to the $S_1$ orthogonal vectors, and a quantity of resources corresponding to the first channel estimation assistance matrix is equal to a quantity of resources corresponding to the $S_1$ orthogonal vectors.

Optionally, in Case 1, the first channel estimation assistance matrix may be obtained by performing matrix multiplication on the $S_1$ orthogonal vectors and the first coefficient matrix. In a scenario in which a dimension of each orthogonal vector is equal to a quantity of resources corresponding to the orthogonal vector, if the $S_1$ orthogonal vectors are arranged by columns, a quantity of rows of the first coefficient matrix is equal to 1; or if the $S_1$ orthogonal vectors are arranged by rows, a quantity of rows of the first coefficient matrix is equal to the quantity of resources corresponding to the $S_1$ orthogonal vectors.

Alternatively, the first channel estimation assistance matrix may be obtained by performing matrix division on the $S_1$ orthogonal vectors and the first coefficient matrix. In a scenario in which a dimension of each orthogonal vector is equal to a quantity of resources corresponding to the orthogonal vector, if the $S_1$ orthogonal vectors are arranged by columns, a quantity of columns of the first coefficient matrix is equal to 1; or if the $S_1$ orthogonal vectors are arranged by rows, a quantity of columns of the first coefficient matrix is equal to the quantity of resources corresponding to the $S_1$ orthogonal vectors.

For example, the $S_1$ orthogonal vectors are arranged by columns, and a dimension of the $S_1$ orthogonal vectors is n (that is, the quantity of resources corresponding to the $S_1$ orthogonal vectors is n). The first channel estimation assistance matrix $U$ may be shown in the following formula (7) or formula (8).

$$U_{n \times r} = F_{n \times 1} D_{1 \times r} \qquad (7)$$

$$U_{n \times r} = F_{n \times 1} / D_{r \times 1} \qquad (8)$$

In Formula (7) and Formula (8), $F_{n \times 1}$ is obtained by arranging the $S_1$ orthogonal vectors by columns. In Formula (7), $D_{1 \times r}$ is the first coefficient matrix, and r is the quantity of columns of the first coefficient matrix. In Formula (8), $D_{r \times 1}$ is the first coefficient matrix, and $r$ is the quantity of rows of the first coefficient matrix.

Case 2: $S_1$ is greater than 1, the $S_1$ orthogonal vectors correspond to a same resource, and the first channel estimation assistance matrix is determined based on the first coefficient matrix and a sub-unitary matrix including the $S_1$ orthogonal vectors.

In this case, a resource corresponding to the first channel estimation assistance matrix is a resource corresponding to any one of the $S_1$ orthogonal vectors, and a quantity of resources corresponding to the first channel estimation assistance matrix is equal to a quantity of resources corresponding to any one of the $S_1$ orthogonal vectors. In addition, that the $S_1$ orthogonal vectors form the sub-unitary matrix is similar to that the $S_1$ orthogonal vectors form the sub-unitary matrix in Case 2 in Implementation 4.1. For specific descriptions, refer to the related descriptions in Case 2 in Implementation 4.1. Details are not described again.

Optionally, in Case 2, the first channel estimation assistance matrix may be obtained by performing matrix multiplication on the first coefficient matrix and the sub-unitary matrix including the $S_1$ orthogonal vectors. In a scenario in which a dimension of each orthogonal vector is equal to a quantity of resources corresponding to the orthogonal vector, if the $S_1$ orthogonal vectors are arranged by columns, a quantity of rows of the first coefficient matrix is equal to $S_1$. If the $S_1$ orthogonal vectors are arranged by rows, a quantity of rows of the first coefficient matrix is equal to the quantity of resources corresponding to any one of the $S_1$ orthogonal vectors.

Alternatively, the first channel estimation assistance matrix may be obtained by performing matrix division on the first coefficient matrix and the sub-unitary matrix including the $S_1$ orthogonal vectors. In a scenario in which a dimension of each orthogonal vector is equal to a quantity of resources corresponding to the orthogonal vector, if the $S_1$ orthogonal vectors are arranged by columns, a quantity of columns of the first coefficient matrix is equal to $S_1$. If the $S_1$ orthogonal vectors are arranged by rows, a quantity of columns of the first coefficient matrix is equal to the quantity of resources corresponding to any one of the $S_1$ orthogonal vectors.

For example, the $S_1$ orthogonal vectors are arranged by columns, and a dimension of each of the $S_1$ orthogonal vectors is n (that is, a quantity of resources corresponding to each of the $S_1$ orthogonal vectors is n). The first channel estimation assistance matrix $U$ may be shown in the following formula (9) or formula (10).

$$U_{n \times r} = F_{n \times S_1} D_{S_1 \times r} \qquad (9)$$

$$U_{n \times r} = F_{n \times S_1} / D_{r \times S_1} \qquad (10)$$

In Formula (9) and Formula (10), $F_{n \times S_1}$ is the sub-unitary matrix obtained by arranging the $S_1$ orthogonal vectors by columns. In Formula (9), $D_{S_1 \times r}$ is the first coefficient matrix, and r is the quantity of columns of the first coefficient matrix. In Formula (10), $D_{r \times S_1}$ is the first coefficient matrix, and $r$ is the quantity of rows of the first coefficient matrix.

In addition, this embodiment of this application is not limited to the manner in which the first channel estimation assistance matrix is determined based on the first coefficient matrix and the sub-unitary matrix including the $S_1$ orthogonal vectors. For example, the first channel estimation assistance matrix may alternatively be determined based on the first coefficient matrix and a matrix including the $S_1$ orthogonal vectors and another vector, and the another vector is, for example, a zero vector or another orthogonal vector different from the $S_1$ orthogonal vectors.

Case 3: $S_1$ is greater than 1, the $S_1$ orthogonal vectors correspond to different resources, and the first channel estimation assistance matrix is determined based on a Kronecker product of $M_1$ matrices and the first coefficient matrix. Orthogonal vectors included in a same matrix in the $M_1$ matrices correspond to a same resource, orthogonal vectors included in different matrices in the $M_1$ matrices correspond to different resources, the $M_1$ matrices are determined based on the $S_1$ orthogonal vectors, $M_1$ is an integer greater than 1, and $M_1$ is less than or equal to $S_1$. In addition, for specific descriptions of the $M_1$ matrices and the Kronecker product of the $M_1$ matrices, refer to the related descriptions in Case 3 in Implementation 4.1. Details are not described again.

In this case, a quantity of resources corresponding to the first channel estimation assistance matrix is equal to a product of $M_1$ values, and the $M_1$ values are quantities of resources corresponding to orthogonal vectors respectively included in the $M_1$ matrices. It can be learned that the $M_1$ values one-to-one correspond to the $M_1$ matrices, and each of the $M_1$ values is a quantity of resources corresponding to a matrix corresponding to the value. For specific descriptions of the $M_1$ values, refer to the related descriptions in Case 3 in Implementation 4.1. Details are not described again.

Optionally, in Case 3, the first channel estimation assistance matrix may be obtained by performing matrix multiplication on the Kronecker product of the $M_1$ matrices and the first coefficient matrix. In a scenario in which a dimension of each orthogonal vector is equal to a quantity of resources corresponding to the orthogonal vector, if the orthogonal vectors are arranged by rows, a quantity of rows of the first coefficient matrix is equal to the product of the $M_1$ values. If the orthogonal vectors are arranged by columns, a quantity of rows of the first coefficient matrix is equal to a product of $M_1$ second values, the $M_1$ second values one-to-one correspond to the $M_1$ matrices, and each of the $M_1$ second values is equal to a quantity of orthogonal vectors included in a matrix corresponding to the second value.

Alternatively, the first channel estimation assistance matrix may be obtained by performing matrix division on the Kronecker product of the $M_1$ matrices and the first coefficient matrix. In a scenario in which a dimension of each orthogonal vector is equal to a quantity of resources corresponding to the orthogonal vector, if the orthogonal vectors are arranged by rows, a quantity of columns of the first coefficient matrix is equal to the product of the $M_1$ values. If the orthogonal vectors are arranged by columns, a quantity of columns of the first coefficient matrix is equal to a product of $M_1$ second values, the $M_1$ second values one-to-one correspond to the $M_1$ matrices, and each of the $M_1$ second values is equal to a quantity of orthogonal vectors included in a matrix corresponding to the second value.

For example, $M_1$ is equal to 2. One matrix in the $M_1$ matrices includes s orthogonal vectors, and the other matrix includes $l$ orthogonal vectors, where $s+l=S_1$, a quantity of resources (namely, a dimension) corresponding to each of the s orthogonal vectors is n, and a quantity of resources (namely, a dimension) corresponding to each of the $l$ orthogonal vectors is m. For example, the orthogonal vectors are arranged by columns. A dimension of a matrix $F$ including s orthogonal vectors in the $M_1$ matrices is n×s, as shown in Formula (11). A resource corresponding to $F$ is a resource corresponding to any one of the s orthogonal vectors. A dimension of a matrix $G$ including $l$ orthogonal vectors is m×$l$, as shown in Formula (12). A resource corresponding to $G$ is a resource corresponding to any one of the $l$ orthogonal vectors. In this case, a dimension of the Kronecker product of the $M_1$ matrices is (n×m)×(s×$l$), as shown in Formula (13) or Formula (14). A quantity of rows of the first coefficient matrix is s×$l$, and a quantity of columns of the first coefficient matrix is r.

$$F_{n \times s} = \begin{bmatrix} F_{11} & \cdots & F_{1s} \\ \vdots & \ddots & \vdots \\ F_{n1} & \cdots & F_{ns} \end{bmatrix} \qquad (11)$$

$$G_{m \times l} = \begin{bmatrix} G_{11} & \cdots & G_{1l} \\ \vdots & \ddots & \vdots \\ G_{m1} & \cdots & G_{ml} \end{bmatrix} \qquad (12)$$

$$F_{n \times s} \otimes G_{m \times l} = \begin{bmatrix} F_{11}G_{m \times l} & \cdots & F_{1s}G_{m \times l} \\ \vdots & \ddots & \vdots \\ F_{n1}G_{m \times l} & \cdots & F_{ns}G_{m \times l} \end{bmatrix} \qquad (13)$$

$$G_{m \times l} \otimes F_{n \times s} = \begin{bmatrix} G_{11}F_{n \times s} & \cdots & G_{1l}F_{n \times s} \\ \vdots & \ddots & \vdots \\ G_{m1}F_{n \times s} & \cdots & G_{ml}F_{n \times s} \end{bmatrix} \qquad (14)$$

The first channel estimation assistance matrix $U$ shown in Formula (15) may be obtained by performing matrix multiplication on the Kronecker product of the $M_1$ matrices shown in Formula (13) and the first coefficient matrix $D_{(s \times l) \times r}$, where r is the quantity of columns of the first coefficient matrix. The first channel estimation assistance matrix $U$ shown in Formula (16) may be obtained by performing matrix division on the Kronecker product of the $M_1$ matrices shown in Formula (13) and the first coefficient matrix $D_{r \times (s \times l)}$, where r is the quantity of rows of the first coefficient matrix.

$$U_{(n \times m) \times r} = (F_{n \times s} \otimes G_{m \times l})D_{(s \times l) \times r} \qquad (15)$$

$$U_{(n \times m) \times r} == (F_{n \times s} \otimes G_{m \times l})/D_{r \times (s \times l)} \qquad (16)$$

The first channel estimation assistance matrix $U$ shown in Formula (17) may be obtained by performing matrix multiplication on the Kronecker product of the $M_1$ matrices shown in Formula (14) and the first coefficient matrix $D_{(s \times l) \times r}$, where r is the quantity of columns of the first coefficient matrix. The first channel estimation assistance matrix $U$ shown in Formula (18) may be obtained by performing matrix division on the Kronecker product of the $M_1$ matrices shown in Formula (14) and the first coefficient matrix $D_{r \times (s \times l)}$, where r is the quantity of rows of the first coefficient matrix.

$$U_{(n \times m) \times r} = (G_{m \times l} \otimes F_{n \times s})D_{(s \times l) \times r} \qquad (17)$$

$$U_{(n \times m) \times r} = (G_{m \times l} \otimes F_{n \times s})/D_{r \times (s \times l)} \qquad (18)$$

For the first channel estimation assistance matrix $U$ shown in Formula (15) and Formula (16), the resource corresponding to the matrix $G$ is first traversed, and then the resource corresponding to the matrix $F$ is traversed. For the first channel estimation assistance matrix $U$ shown in Formula (17) and Formula (18), the resource corresponding to the matrix $F$ is first traversed, and then the resource corresponding to the matrix $G$ is traversed. This is similar to Formula (5) and Formula (6) in Implementation 4.1. For specific descriptions, refer to the related descriptions of Formula (5) and Formula (6) in Implementation 4.1. Details are not described again.

In addition, in an optional implementation, for Implementation 4.1 and Implementation 4.2, in a scenario in which a plurality of sets obtained through division based on resources corresponding to orthogonal vectors are predefined in advance, orthogonal vectors included in different sets in the predefined plurality of sets correspond to different resources, and orthogonal vectors included in a same set correspond to a same resource. In this case, when $S_1$ is greater than 1 and the $S_1$ orthogonal vectors belong to a same set, it may be considered that the $S_1$ orthogonal vectors meet the case described in Case 2 in Implementation 4.1 and Case 2 in Implementation 4.2, that is, the $S_1$ orthogonal vectors meet that $S_1$ is greater than 1 and the $S_1$ orthogonal vectors correspond to a same resource. When $S_1$ is greater than 1 and the $S_1$ orthogonal vectors belong to at least two sets, it may be considered that the $S_1$ orthogonal vectors meet the case described in Case 3 in Implementation 4.1 and Case 3 in Implementation 4.2, that is, the $S_1$ orthogonal vectors meet that $S_1$ is greater than 1 and the $S_1$ orthogonal vectors correspond to different resources.

In Implementation 4.3, that the second device determines the first channel estimation assistance matrix based on the $S_1$ orthogonal vectors may include: The second device determines $S_3$ orthogonal vectors based on the $S_1$ orthogonal vectors, and determines the first channel estimation assistance matrix based on the $S_3$ orthogonal vectors. The $S_3$ orthogonal vectors may be the same as or different from the $S_1$ orthogonal vectors, and $S_3$ is a positive integer.

In an optional manner, that the second device determines the $S_3$ orthogonal vectors based on the $S_1$ orthogonal vectors may include: The second device selects the $S_3$ orthogonal vectors from the $S_1$ orthogonal vectors. In this case, $S_3$ is less than or equal to $S_1$. In another optional manner, $S_3$ is greater than 1, a part of the $S_3$ orthogonal vectors are selected by the second device from the $S_1$ orthogonal vectors, and the other part of the orthogonal vectors are determined by the second device in another manner. For example, the other part of the orthogonal vectors may be selected by the second device from a set predefined in advance. For the set predefined in advance, refer to the foregoing related descriptions. Details are not described again.

Optionally, the $S_3$ orthogonal vectors may be represented in a form of a set. That the first device determines the $S_3$ orthogonal vectors may include: The first device determines $M_2$ orthogonal vector sets, where each of the $M_2$ orthogonal vector sets includes at least one orthogonal vector, and the $M_2$ orthogonal vector sets include the $S_3$ orthogonal vectors in total. When $S_3$ is equal to 1, $M_2$ is equal to 1. The orthogonal vector set includes one orthogonal vector. When $S_3$ is greater than 1 and resources corresponding to different orthogonal vectors in the $S_3$ orthogonal vectors are the same, $M_2$ is equal to 1. The $S_3$ orthogonal vectors included in the orthogonal vector set correspond to a same resource. When $S_3$ is greater than 1 and there are a plurality of orthogonal vectors corresponding to different resources in the $S_3$ orthogonal vectors, $M_2$ is an integer greater than 1, and $M_2$ is less than or equal to $S_3$. Orthogonal vectors included in different orthogonal vector sets in the $M_2$ orthogonal vector sets correspond to different resources, and orthogonal vectors included in a same orthogonal vector set correspond to a same resource. $S_3$ orthogonal vectors mentioned in other implementations below may also be represented in a form of a set. Details are not described below again.

In addition, there may be three cases in which the first device determines the first channel estimation assistance matrix based on the $S_3$ orthogonal vectors. The three cases are similar to the three cases in Implementation 4.1. For details, refer to the related descriptions in Implementation 4.1. The following briefly describes the three cases in which the first device determines the first channel estimation assistance matrix based on the $S_3$ orthogonal vectors.

Case 1: $S_3$ is equal to 1, and the first channel estimation assistance matrix is the $S_3$ orthogonal vectors. It may be understood that a resource corresponding to the first channel estimation assistance matrix is a resource corresponding to the $S_3$ orthogonal vectors, and a quantity of resources corresponding to the first channel estimation assistance matrix is equal to a quantity of resources corresponding to the $S_3$ orthogonal vectors. This case is similar to Case 1 in Implementation 4.1. For details, refer to the related descriptions of Case 1 in Implementation 4.1. Details are not described again. In addition, this embodiment of this application is not limited to the manner in which the first channel estimation assistance matrix is the $S_3$ orthogonal vectors. For example, the first channel estimation assistance matrix may alternatively be a matrix including the $S_3$ orthogonal vectors and another vector, and the another vector is, for example, a zero vector or another orthogonal vector different from the $S_1$ orthogonal vectors.

Case 2: $S_3$ is greater than 1, the $S_3$ orthogonal vectors correspond to a same resource, and the first channel estimation assistance matrix is a sub-unitary matrix including the $S_3$ orthogonal vectors. In this case, a resource corresponding to the first channel estimation assistance matrix is a resource corresponding to any one of the $S_3$ orthogonal vectors, and a quantity of resources corresponding to the first channel estimation assistance matrix is equal to a quantity of resources corresponding to any one of the $S_3$ orthogonal vectors. This case is similar to Case 2 in Implementation 4.1. For details, refer to the specific descriptions of Case 2 in Implementation 4.1. Details are not described again. In this embodiment of this application, the $S_3$ orthogonal vectors correspond to the same resource. In other words, resources corresponding to different orthogonal vectors in the $S_3$ orthogonal vectors are the same. Details are not described below again.

In addition, this embodiment of this application is not limited to the manner in which the first channel estimation assistance matrix is the sub-unitary matrix including the $S_3$ orthogonal vectors. For example, the first channel estimation assistance matrix may alternatively be a matrix including the $S_3$ orthogonal vectors and another vector, and the another vector is, for example, a zero vector or another orthogonal vector different from the $S_3$ orthogonal vectors.

Case 3: $S_3$ is greater than 1, the $S_3$ orthogonal vectors correspond to different resources, and the first channel estimation assistance matrix is a Kronecker product of $M_2$ matrices. Orthogonal vectors included in a same matrix in the $M_2$ matrices correspond to a same resource, orthogonal vectors included in different matrices in the $M_2$ matrices correspond to different resources, the $M_2$ matrices are determined based on the $S_3$ orthogonal vectors, $M_2$ is an integer greater than 1, and $M_2$ is less than or equal to $S_3$. In this case, a quantity of resources corresponding to the first channel estimation assistance matrix is equal to a product of $M_2$ values, and the $M_2$ values are quantities of resources corresponding to orthogonal vectors respectively included in the $M_2$ matrices.

In this embodiment of this application, that the $S_3$ orthogonal vectors correspond to the different resources may be understood as that there are orthogonal vectors corresponding to different resources in the $S_3$ orthogonal vectors. Specifically, it may be represented as follows: Resources respectively corresponding to the $S_3$ orthogonal vectors are different from each other. It may alternatively be represented as follows: A part of orthogonal vectors in the $S_3$ orthogonal vectors all correspond to a same resource, and resources corresponding to a part of orthogonal vectors are different from each other. Details are not described below again. In addition, the $M_2$ matrices may be further understood as follows: Each of the $M_2$ matrices may be a matrix including orthogonal vectors corresponding to a same resource in the $S_3$ orthogonal vectors, and orthogonal vectors used to form different matrices in the $M_2$ matrices correspond to different resources.

In addition, for Case 3, in a scenario in which the $S_3$ orthogonal vectors are represented in a form of a set, the $M_2$ matrices one-to-one correspond to the $M_2$ orthogonal vector sets, and each of the $M_2$ matrices is a matrix including orthogonal vectors included in an orthogonal vector set corresponding to the matrix. For specific descriptions of the $M_2$ orthogonal vector sets, refer to the foregoing related descriptions. Details are not described again.

In addition, this embodiment of this application is not limited to the manner in which each of the $M_2$ matrices is a matrix including an orthogonal vector in the $S_3$ orthogonal vectors. For example, a matrix #1 in the $M_2$ matrices includes $l$ orthogonal vectors in the $S_3$ orthogonal vectors. The $l$ orthogonal vectors correspond to a same resource, and the matrix #1 may alternatively be a matrix including the $l$ orthogonal vectors and another vector. The another vector is, for example, a zero vector or another orthogonal vector different from the $S_1$ orthogonal vectors.

This case is similar to Case 3 in Implementation 4.1. For details, refer to the specific descriptions of Case 3 in Implementation 4.1. Details are not described again.

In Implementation 4.4, the method further includes: The first device sends a first coefficient matrix to the second device; and the second device determines a second coefficient matrix based on the first coefficient matrix. That the second device determines the first channel estimation assistance matrix based on the $S_1$ orthogonal vectors includes: The second device determines $S_3$ orthogonal vectors based on the $S_1$ orthogonal vectors, and determines the first channel estimation assistance matrix based on the $S_3$ orthogonal vectors and the second coefficient matrix. The second coefficient matrix may be the same as or different from the first coefficient matrix.

Optionally, that the second device determines the second coefficient matrix based on the first coefficient matrix may include: The second device selects a part or all of elements in the first coefficient matrix as elements included in the second coefficient matrix. In this case, the second coefficient matrix includes the part of the elements in the first coefficient matrix, or the second coefficient matrix includes all of the elements in the first coefficient matrix.

In addition, there may be three cases in which the first device determines the first channel estimation assistance matrix based on the $S_3$ orthogonal vectors and the second coefficient matrix. The three cases are similar to the three cases in Implementation 4.2. For details, refer to the related descriptions in Implementation 4.2. The following briefly describes the three cases in which the first device determines the first channel estimation assistance matrix based on the $S_3$ orthogonal vectors and the second coefficient matrix.

Case 1: $S_3$ is equal to 1, and the first channel estimation assistance matrix is determined based on the $S_3$ orthogonal vectors and the second coefficient matrix.

In this case, a resource corresponding to the first channel estimation assistance matrix is a resource corresponding to the $S_3$ orthogonal vectors, and a quantity of resources corresponding to the first channel estimation assistance matrix is equal to a quantity of resources corresponding to the $S_3$ orthogonal vectors.

Optionally, in Case 1, the first channel estimation assistance matrix may be obtained by performing matrix multiplication on the $S_3$ orthogonal vectors and the first coefficient matrix. In a scenario in which a dimension of each orthogonal vector is equal to a quantity of resources corresponding to the orthogonal vector, if the $S_3$ orthogonal vectors are arranged by columns, a quantity of rows of the second coefficient matrix is equal to 1; or if the $S_3$ orthogonal vectors are arranged by rows, a quantity of rows of the second coefficient matrix is equal to the quantity of resources corresponding to the $S_3$ orthogonal vectors.

Alternatively, the first channel estimation assistance matrix may be obtained by performing matrix division on the

$S_3$ orthogonal vectors and the first coefficient matrix. In a scenario in which a dimension of each orthogonal vector is equal to a quantity of resources corresponding to the orthogonal vector, if the $S_3$ orthogonal vectors are arranged by columns, a quantity of columns of the second coefficient matrix is equal to 1; or if the $S_3$ orthogonal vectors are arranged by rows, a quantity of columns of the second coefficient matrix is equal to the quantity of resources corresponding to the $S_3$ orthogonal vectors.

Case 1 is similar to Case 1 in Implementation 4.2. For details, refer to the related descriptions of Case 1 in Implementation 4.2. Details are not described again.

Case 2: $S_3$ is greater than 1, the $S_3$ orthogonal vectors correspond to a same resource, and the first channel estimation assistance matrix is determined based on the second coefficient matrix and a sub-unitary matrix including the $S_3$ orthogonal vectors.

In this case, a resource corresponding to the first channel estimation assistance matrix is a resource corresponding to any one of the $S_3$ orthogonal vectors, and a quantity of resources corresponding to the first channel estimation assistance matrix is equal to a quantity of resources corresponding to any one of the $S_3$ orthogonal vectors.

Optionally, in Case 2, the first channel estimation assistance matrix may be obtained by performing matrix multiplication on the first coefficient matrix and the sub-unitary matrix including the $S_3$ orthogonal vectors. In a scenario in which a dimension of each orthogonal vector is equal to a quantity of resources corresponding to the orthogonal vector, if the $S_3$ orthogonal vectors are arranged by columns, a quantity of rows of the second coefficient matrix is equal to $S_3$; or if the $S_3$ orthogonal vectors are arranged by rows, a quantity of rows of the second coefficient matrix is equal to the quantity of resources corresponding to any one of the $S_3$ orthogonal vectors.

Alternatively, the first channel estimation assistance matrix may be obtained by performing matrix division on the first coefficient matrix and the sub-unitary matrix including the $S_3$ orthogonal vectors. In a scenario in which a dimension of each orthogonal vector is equal to a quantity of resources corresponding to the orthogonal vector, if the $S_3$ orthogonal vectors are arranged by columns, a quantity of columns of the second coefficient matrix is equal to $S_3$; or if the $S_3$ orthogonal vectors are arranged by rows, a quantity of columns of the second coefficient matrix is equal to the quantity of resources corresponding to any one of the $S_3$ orthogonal vectors.

In addition, this embodiment of this application is not limited to the manner in which the first channel estimation assistance matrix is the sub-unitary matrix including the $S_3$ orthogonal vectors. For example, the first channel estimation assistance matrix may alternatively be a matrix including the $S_3$ orthogonal vectors and another vector, and the another vector is, for example, a zero vector or another orthogonal vector different from the $S_3$ orthogonal vectors.

Case 2 is similar to Case 2 in Implementation 4.2. For details, refer to the related descriptions of Case 2 in Implementation 4.2. Details are not described again.

Case 3: $S_3$ is greater than 1, the $S_3$ orthogonal vectors correspond to different resources, and the first channel estimation assistance matrix is determined based on a Kronecker product of the $M_2$ matrices and the second coefficient matrix. Orthogonal vectors included in a same matrix in the $M_2$ matrices correspond to a same resource, orthogonal vectors included in different matrices in the $M_2$ matrices correspond to different resources, the $M_2$ matrices are determined based on the $S_3$ orthogonal vectors, $M_2$ is an integer greater than 1, and $M_2$ is less than or equal to $S_3$. For specific descriptions of the $M_2$ matrices and the Kronecker product of the $M_2$ matrices, refer to the related descriptions in Case 3 in Implementation 4.3. Details are not described again.

In this case, a quantity of resources corresponding to the first channel estimation assistance matrix is equal to a product of $M_2$ values, and the $M_2$ values are quantities of resources corresponding to orthogonal vectors respectively included in the $M_2$ matrices. It can be learned that the $M_2$ values one-to-one correspond to the $M_2$ matrices, and each of the $M_2$ values is a quantity of resources corresponding to a matrix corresponding to the value. For specific descriptions of the $M_2$ values, refer to the related descriptions in Case 3 in Implementation 4.3. Details are not described again.

Optionally, in Case 3, the first channel estimation assistance matrix may be obtained by performing matrix multiplication on the Kronecker product of the $M_2$ matrices and the second coefficient matrix. In a scenario in which a dimension of each orthogonal vector is equal to a quantity of resources corresponding to the orthogonal vector, if the orthogonal vectors are arranged by rows to obtain the $M_2$ matrices, a quantity of rows of the second coefficient matrix is equal to the product of the $M_2$ values, and each of the $M_2$ values is a quantity of resources corresponding to orthogonal vectors corresponding to a same resource in the $S_3$ orthogonal vectors. If the orthogonal vectors are arranged by columns to obtain the $M_2$ matrices, a quantity of rows of the second coefficient matrix is equal to a product of $M_2$ second values, the $M_2$ second values one-to-one correspond to the $M_2$ matrices, and each of the $M_2$ second values is equal to a quantity of orthogonal vectors included in a matrix corresponding to the second value.

Alternatively, the first channel estimation assistance matrix may be obtained by performing matrix division on the Kronecker product of the $M_2$ matrices and the second coefficient matrix. In a scenario in which a dimension of each orthogonal vector is equal to a quantity of resources corresponding to the orthogonal vector, if the orthogonal vectors are arranged by rows to obtain the $M_2$ matrices, a quantity of columns of the second coefficient matrix is equal to the product of the $M_2$ values, and each of the $M_2$ values is a quantity of resources corresponding to orthogonal vectors corresponding to a same resource in the $S_3$ orthogonal vectors. If the orthogonal vectors are arranged by columns to obtain the $M_2$ matrices, a

quantity of rows of the second coefficient matrix is equal to a product of $M_2$ second values, the $M_2$ second values one-to-one correspond to the $M_2$ matrices, and each of the $M_2$ second values is equal to a quantity of orthogonal vectors included in a matrix corresponding to the second value.

Case 3 is similar to Case 3 in Implementation 4.2. For details, refer to the related descriptions of Case 3 in Implementation 4.2. Details are not described again.

In addition, in an optional implementation, for Implementation 4.3 and Implementation 4.4, in a scenario in which a plurality of sets obtained through division based on resources corresponding to orthogonal vectors are predefined in advance, orthogonal vectors included in different sets in the predefined plurality of sets correspond to different resources, and orthogonal vectors included in a same set correspond to a same resource. In this case, when $S_3$ is greater than 1 and the $S_3$ orthogonal vectors belong to a same set, it may be considered that the $S_3$ orthogonal vectors meet the case described in Case 2 in Implementation 4.3 and Case 2 in Implementation 4.4, that is, the $S_3$ orthogonal vectors meet that $S_3$ is greater than 1 and the $S_3$ orthogonal vectors correspond to a same resource. When $S_3$ is greater than 1 and the $S_3$ orthogonal vectors belong to at least two sets, it may be considered that the $S_3$ orthogonal vectors meet the case described in Case 3 in Implementation 4.3 and Case 3 in Implementation 4.4, that is, the $S_3$ orthogonal vectors meet that $S_3$ is greater than 1 and the $S_3$ orthogonal vectors correspond to different resources.

In addition, in an optional implementation, in Implementation 4.2 and Implementation 4.4, before the first device sends the first coefficient matrix to the second device, the method may further include: The second device determines a third coefficient matrix, and sends the third coefficient matrix to the first device, and the first device may determine the first coefficient matrix based on the third coefficient matrix. It can be learned that the second device may recommend the third coefficient matrix to the first device, and the first device may determine the first coefficient matrix based on the third coefficient matrix recommended by the second device. When the second device is a terminal device, because the terminal device has a capability of obtaining whether a channel feature changes, the terminal device may determine the recommended third coefficient matrix by using this capability, so that the first channel estimation assistance matrix determined based on the first coefficient matrix helps further improve channel estimation precision.

Optionally, that the first device may determine the first coefficient matrix based on the third coefficient matrix may include: The first device selects a part or all of elements in the third coefficient matrix as elements included in the first coefficient matrix. In this case, the first coefficient matrix includes the part of elements in the third coefficient matrix, or the first coefficient matrix includes all of the elements in the third coefficient matrix.

In another optional implementation, if the second device fails to receive the first indication information from the first device, the second device determines the first channel estimation assistance matrix based on the $S_2$ orthogonal vectors, where $S_2$ is a positive integer. Optionally, a reason why the second device fails to receive the first indication information from the first device may be as follows: The second device determines the $S_2$ orthogonal vectors and sends the second indication information to the first device, where the second indication information is used for the $S_2$ orthogonal vectors. If the $S_1$ orthogonal vectors determined by the first device are the same as the $S_2$ orthogonal vectors, the first device may not send, to the second device, the first indication information indicating the $S_1$ orthogonal vectors.

Optionally, that the second device determines the first channel estimation assistance matrix based on the $S_2$ orthogonal vectors may be performed by the second device when the second device fails to receive the first indication information from the first device in a first time period. The first time period may be configured or predefined. For example, duration of the first time period may be configured or predefined. Optionally, in a case in which the second device sends the second indication information to the first device, a start location of the first time period may be a time at which the second device sends the second indication information to the first device or later than a time at which the second device sends the second indication information to the first device.

The following describes optional implementations in which the second device determines the first channel estimation assistance matrix based on the $S_2$ orthogonal vectors, as described in the following optional implementations 5.1 to 5.3.

In Implementation 5.1, the first channel estimation assistance matrix includes the $S_2$ orthogonal vectors. This implementation is similar to Implementation 4.1 in which the first channel estimation assistance matrix includes the $S_1$ orthogonal vectors. For specific descriptions, refer to the related descriptions of Implementation 4.1. The following briefly describes three cases included in Implementation 5.1.

Case 1: $S_2$ is equal to 1, and the first channel estimation assistance matrix is the $S_2$ orthogonal vectors.

Case 2: $S_2$ is greater than 1, the $S_2$ orthogonal vectors correspond to a same resource, and the first channel estimation assistance matrix is a sub-unitary matrix including the $S_2$ orthogonal vectors. In this embodiment of this application, the $S_2$ orthogonal vectors correspond to the same resource. In other words, resources corresponding to different orthogonal vectors in the $S_2$ orthogonal vectors are the same. Details are not described below again.

Case 3: $S_2$ is greater than 1, the $S_2$ orthogonal vectors correspond to different resources, the first channel estimation assistance matrix is a Kronecker product of $M_3$ matrices, orthogonal vectors included in a same matrix in the $M_3$ matrices correspond to a same resource, orthogonal vectors included in different matrices in the $M_3$ matrices correspond to different resources, the $M_3$ matrices are determined based on the $S_2$ orthogonal vectors, orthogonal vectors used to form different matrices in the $M_3$ matrices correspond to different resources, $M_3$ is an integer greater than 1, and $M_3$ is less than or equal to $S_2$.

In this embodiment of this application, that the $S_2$ orthogonal vectors correspond to the different resources may be understood as that there are orthogonal vectors corresponding to different resources in the $S_2$ orthogonal vectors. Specifically, it may be represented as follows: Resources respectively corresponding to the $S_2$ orthogonal vectors are different from each other. It may alternatively be represented as follows: A part of orthogonal vectors in the $S_2$ orthogonal vectors all correspond to a same resource, and resources corresponding to a part of orthogonal vectors are different from each other. Details are not described below again. In addition, the $M_3$ matrices may be further understood as follows: Each of the $M_3$ matrices may be a matrix including orthogonal vectors corresponding to a same resource in the $S_2$ orthogonal vectors, and orthogonal vectors used to form different matrices in the $M_3$ matrices correspond to different resources.

In Implementation 5.2, the method may further include: The first device sends a first coefficient matrix to the second device; and the second device may determine the first channel estimation assistance matrix based on the $S_2$ orthogonal vectors and the first coefficient matrix. This implementation is similar to Implementation 4.2 in which the first channel estimation assistance matrix is determined based on the $S_1$ orthogonal vectors and the first coefficient matrix. For specific descriptions, refer to the related descriptions of Implementation 4.2. The following briefly describes three cases included in Implementation 5.2.

Case 1: $S_2$ is equal to 1, and the first channel estimation assistance matrix is determined based on the $S_2$ orthogonal vectors and the first coefficient matrix.

Case 2: $S_2$ is greater than 1, the $S_2$ orthogonal vectors correspond to a same resource, and the first channel estimation assistance matrix is determined based on the first coefficient matrix and a sub-unitary matrix including the $S_2$ orthogonal vectors.

Case 3: $S_2$ is greater than 1, the $S_2$ orthogonal vectors correspond to different resources, the first channel estimation assistance matrix is determined based on a Kronecker product of $M_3$ matrices and the first coefficient matrix, orthogonal vectors included in a same matrix in the $M_3$ matrices correspond to a same resource, orthogonal vectors included in different matrices in the $M_3$ matrices correspond to different resources, the $M_3$ matrices are determined based on the $S_2$ orthogonal vectors, $M_3$ is an integer greater than 1, and $M_3$ is less than or equal to $S_2$.

In Implementation 5.3, the second device determines the first channel estimation assistance matrix based on the $S_2$ orthogonal vectors and a third coefficient matrix. Optionally, the second device may determine the first channel estimation assistance matrix based on the $S_2$ orthogonal vectors and the third coefficient matrix when the second device fails to receive the first coefficient matrix from the first device, and the third coefficient matrix is determined by the second device. A reason why the second device fails to receive the first coefficient matrix from the first device may be as follows: The second device sends the third coefficient matrix to the second device, the first coefficient matrix determined by the first device is the same as the third coefficient matrix, and the first device skips sending the first coefficient matrix to the second device. For specific parameters of the first coefficient matrix and the third coefficient matrix, refer to the foregoing related descriptions. Details are not described again.

Optionally, that the second device determines the first channel estimation assistance matrix based on the $S_2$ orthogonal vectors and the third coefficient matrix may be performed by the second device when the second device fails to receive the first coefficient matrix from the first device in a second time period. The second time period may be configured or predefined. For example, duration of the second time period may be configured or predefined. Optionally, in a case in which the second device sends the third coefficient matrix to the first device, a start location of the second time period may be a time at which the second device sends the third coefficient matrix to the first device or later than a time at which the second device sends the third coefficient matrix to the first device. In addition, the second time period may be the same as or different from the first time period.

Implementation 5.3 is similar to Implementation 4.2 in which the first channel estimation assistance matrix is determined based on the $S_1$ orthogonal vectors and the first coefficient matrix. For specific descriptions, refer to the related descriptions of Implementation 4.2. The following briefly describes three cases included in Implementation 5.3.

Case 1: $S_2$ is equal to 1, and the first channel estimation assistance matrix is determined based on the $S_2$ orthogonal vectors and the third coefficient matrix.

Case 2: $S_2$ is greater than 1, the $S_2$ orthogonal vectors correspond to a same resource, and the first channel estimation assistance matrix is determined based on the third coefficient matrix and a sub-unitary matrix including the $S_2$ orthogonal vectors.

Case 3: $S_2$ is greater than 1, the $S_2$ orthogonal vectors correspond to different resources, the first channel estimation assistance matrix is determined based on a Kronecker product of $M_3$ matrices and the third coefficient matrix, orthogonal vectors included in a same matrix in the $M_3$ matrices correspond to a same resource, orthogonal vectors included in different matrices in the $M_3$ matrices correspond to different resources, the $M_3$ matrices are determined based on the $S_2$ orthogonal vectors, $M_3$ is an integer greater than 1, and $M_3$ is less than or equal to $S_2$.

In addition, optionally, for Case 1 in any one of the implementations 5.1 to 5.3, a quantity of resources corresponding to the first channel estimation assistance matrix is equal to a quantity of resources corresponding to

the $S_2$ orthogonal vectors. For Case 2 in any one of the implementations 5.1 to 5.3, a quantity of resources corresponding to the first channel estimation assistance matrix is equal to a quantity of resources corresponding to any one of the $S_2$ orthogonal vectors. For Case 3 in any one of the implementations 5.1 to 5.3, a quantity of resources corresponding to the first channel estimation assistance matrix is equal to a product of $M_3$ values, and each of the $M_3$ values is a quantity of resources corresponding to orthogonal vectors corresponding to a same resource in the $S_2$ orthogonal vectors. It may be understood that the $M_3$ values one-to-one correspond to the $M_3$ matrices, and each of the $M_3$ values is equal to a quantity of resources corresponding to a matrix corresponding to the value.

Optionally, for Implementation 5.2 and Implementation 5.3, after receiving the third coefficient matrix from the second device, the first device may determine whether the third coefficient matrix is the same as the first coefficient matrix. If the third coefficient matrix is the same as the first coefficient matrix, the first device skips sending the first coefficient matrix to the second device; or if the third coefficient matrix is different from the first coefficient matrix, the first device sends the first coefficient matrix to the second device. Correspondingly, the second device may determine whether the first coefficient matrix from the first device is received within the first duration. If the first coefficient matrix from the first device is received, the second device may determine the first channel estimation assistance matrix in the manner described in Implementation 5.2. If the first coefficient matrix from the first device is not received, the second device may determine the first channel estimation assistance matrix in the manner described in Implementation 5.3. Optionally, the first coefficient matrix may be determined by the first device based on the third coefficient matrix, and the first coefficient matrix may be the same as or different from the third coefficient matrix.

Optionally, for any one of the implementations 5.1 to 5.3, in a scenario in which a plurality of sets obtained through division based on resources corresponding to orthogonal vectors are predefined in advance, orthogonal vectors included in different sets in the predefined plurality of sets correspond to different resources, and orthogonal vectors included in a same set correspond to a same resource. In this case, when $S_2$ is greater than 1 and the $S_2$ orthogonal vectors belong to a same set, it may be considered that the $S_2$ orthogonal vectors meet the case described in Case 2 in any one of the implementations 5.1 to 5.3, that is, the $S_2$ orthogonal vectors meet that $S_2$ is greater than 1 and the $S_2$ orthogonal vectors correspond to a same resource. When $S_2$ is greater than 1 and the $S_2$ orthogonal vectors belong to at least two sets, it may be considered that the $S_2$ orthogonal vectors meet the case described in Case 3 in any one of the implementations 5.1 to 5.3, that is, the $S_2$ orthogonal vectors meet that $S_2$ is greater than 1 and the $S_2$ orthogonal vectors correspond to different resources.

S104: The second device performs channel estimation based on the first channel estimation assistance matrix.

In an optional implementation, that the second device performs channel estimation based on the first channel estimation assistance matrix may include: The second device determines a target channel coefficient based on a measured channel coefficient and the first channel estimation assistance matrix. The measured channel coefficient is related to an RS, and the measured channel coefficient and the target channel coefficient may be in a vector form. That the second device determines the measured channel coefficient may include the following optional implementations 6.1 and 6.2.

In Implementation 6.1, before the second device determines the target channel coefficient based on the measured channel coefficient and the first channel estimation assistance matrix, the method may further include: The first device sends an RS to the second device, where the second device may determine the measured channel coefficient based on the RS from the first device. The RS may be, for example, a CSI-RS, a DMRS, or an SRS. When the RS is a CSI-RS or a DMRS, the first device may be a network device, and the second device may be a terminal device. When the RS is an SRS, the first device may be a terminal device, and the second device may be a network device.

In Implementation 6.2, before the second device determines the target channel coefficient based on the measured channel coefficient and the first channel estimation assistance matrix, the method may further include: The second device sends an RS to the first device, where the first device may determine the measured channel coefficient based on the RS from the first device, and send the measured channel coefficient to the second device; and correspondingly, the second device receives the measured channel coefficient from the first device. The RS may be, for example, a CSI-RS. When the RS is a CSI-RS, the first device may be a terminal device, and the second device may be a network device.

In addition, in this implementation in which the second device determines the target channel coefficient based on the measured channel coefficient and the first channel estimation assistance matrix, a resource corresponding to the target channel coefficient is the same as the resource corresponding to the first channel estimation assistance matrix, and a resource corresponding to the measured channel coefficient is included in the resource corresponding to the target channel coefficient. It can be learned that the resource corresponding to the measured channel coefficient is a part or all of the resource corresponding to the target channel coefficient, and a quantity of resources corresponding to the measured channel coefficient is less than or equal to a quantity of resources corresponding to the target channel coefficient. The resource corresponding to the measured channel coefficient belongs to a resource used for receiving the RS. It may be understood that, for the case in which the second device determines the measured channel coefficient based on Implementation 6.1, the resource corresponding to the measured channel coefficient belongs to a resource used by the second device to receive the RS from the first device. For the case in which the second device determines the measured channel coefficient based on Implementation 6.2, the resource corresponding to the measured channel coefficient belongs to a resource used by the first device to receive the RS from the second device.

The following describes optional manners in which the second device determines the target channel coefficient based on the measured channel coefficient and the first channel estimation assistance matrix, as described in the following optional implementations 7.1 and 7.2.

In Implementation 7.1, the target channel coefficient is obtained by the second device by performing linear transformation on the measured channel coefficient based on the first channel estimation assistance matrix.

In Implementation 7.2, that the second device determines the target channel coefficient based on the measured channel coefficient and the first channel estimation assistance matrix includes: The second device determines the target channel coefficient based on a first matrix, the measured channel coefficient, and the first channel estimation assistance matrix.

The first matrix is a matrix including t vectors in the first channel estimation assistance matrix, t is a quantity of resources corresponding to the measured channel coefficient, and t is a positive integer. It may be understood that a resource corresponding to the t vectors is the same as the resource corresponding to the measured channel coefficient. For example, if orthogonal vectors used to obtain the first channel estimation assistance matrix are arranged by columns, a row vector of the first channel estimation assistance matrix one-to-one corresponds to the resource corresponding to the target channel coefficient. The resource corresponding to the measured channel coefficient belongs to the resource corresponding to the target channel coefficient. The t vectors are t row vectors in the first channel estimation assistance matrix, the t row vectors one-to-one correspond to t resources, and the t resources corresponding to the t row vectors are t resources corresponding to the measured channel coefficient. If orthogonal vectors used to obtain the first channel estimation assistance matrix are arranged by rows, the t vectors are t column vectors in the first channel estimation assistance matrix, the t column vectors one-to-one correspond to t resources, and the t resources corresponding to the t column vectors are t resources corresponding to the measured channel coefficient.

Optionally, the target channel coefficient is obtained by the second device by performing linear transformation on the measured channel coefficient based on the first channel estimation assistance matrix and the first matrix.

The following uses an example described in Implementation 4.1 in which the first channel estimation assistance matrix includes the $S_1$ orthogonal vectors, the $S_1$ orthogonal vectors are arranged by columns, and the dimension of the orthogonal vectors is equal to the quantity of resources corresponding to the orthogonal vectors, to describe Implementation 6.4. In the two cases of Implementation 4.3 and Implementation 5.1, that the second device determines the target channel coefficient based on the first matrix, the measured channel coefficient, and the first channel estimation assistance matrix is similar to that in the two cases. Details are not described again.

Example 1: For Case 1 (that is, $S_1$ is equal to 1, and the first channel estimation assistance matrix is the $S_1$ orthogonal vectors) and Case 2 (that is, $S_1$ is greater than 1, the $S_1$ orthogonal vectors correspond to the same resource, and the first channel estimation assistance matrix is the sub-unitary matrix including the $S_1$ orthogonal vectors) in Implementation 4.1, the target channel coefficient $\tilde{H}$ may be shown in the following formula (19).

$$\widetilde{H_{n\times 1}} = U_{n\times S_1} \times \left(\theta_{t\times S_1}\right)^{-1} \times H_{t\times 1}^{pilot} \qquad (19),$$

where

$U_{n\times S_1}$ is the first channel estimation assistance matrix, and $H_{t\times 1}^{pilot}$ is the measured channel coefficient. $n$ is a quantity of resources corresponding to any one of the $S_1$ orthogonal vectors. t is a quantity of resources corresponding to the first matrix, and is also the quantity of resources corresponding to the measured channel coefficient. $\theta_{t\times S_1}$ is the first matrix, and is the matrix including the t row vectors in the first channel estimation assistance matrix $U_{n\times S_1}$. $(\theta_{t\times S_1})^{-1}$ is an inverse matrix of the first matrix.

Example 2: For Case 3 (that is, $S_1$ is greater than 1, the $S_1$ orthogonal vectors correspond to the different resources, and the first channel estimation assistance matrix is the Kronecker product of the $M_1$ matrices) in Implementation 4.1, an example in which the first channel estimation assistance matrix is $U_{(n\times m)\times(\times l)}$ shown in Formula (5) or Formula (6) is used, and the target channel coefficient $\tilde{H}$ may be shown in the following formula (20).

$$\widetilde{H_{(n\times m)\times 1}} = U_{(n\times m)\times(s\times l)} \times \left(\theta_{t\times(s\times l)}\right)^{-1} \times H_{t\times 1}^{pilot} \qquad (20),$$

where

$H_{t\times 1}^{pilot}$ is the measured channel coefficient. t is a quantity of resources corresponding to the first matrix, and is also the quantity of resources corresponding to the measured channel coefficient. $\theta_{t \times (s \times l)}$ is the first matrix, and is the matrix including the t row vectors in the first channel estimation assistance matrix $\boldsymbol{U}_{(n \times m) \times (s \times l)}$. $(\theta_{t \times (s \times l)})^{-1}$ is an inverse matrix of the first matrix.

The following uses an example described in Implementation 4.2 in which the first channel estimation assistance matrix is determined based on the $S_1$ orthogonal vectors and the first coefficient matrix, the $S_1$ orthogonal vectors are arranged by columns, and the dimension of the orthogonal vectors is equal to the quantity of resources corresponding to the orthogonal vectors, to describe Implementation 6.4. In the three cases of Implementation 4.4, Implementation 5.2, and Implementation 5.3, that the second device determines the target channel coefficient based on the first matrix, the measured channel coefficient, and the first channel estimation assistance matrix is similar to that in the three cases. Details are not described again.

Example 1: For Case 1 (that is, $S_1$ is equal to 1, and the first channel estimation assistance matrix is determined based on the $S_1$ orthogonal vectors and the first coefficient matrix) in Implementation 4.2, an example in which the first channel estimation assistance matrix is $\boldsymbol{U}_{n \times r}$ shown in Formula (7) or Formula (8) is used. For Case 2 in Implementation 4.2 (that is, $S_1$ is greater than 1, the $S_1$ orthogonal vectors correspond to the same resource, and the first channel estimation assistance matrix is determined based on the first coefficient matrix and the sub-unitary matrix including the $S_1$ orthogonal vectors), an example in which the first channel estimation assistance matrix is $\boldsymbol{U}_{n \times r}$ shown in Formula (9) or Formula (10) is used. The target channel coefficient $\tilde{\boldsymbol{H}}$ may be shown in the following formula (21).

$$\widetilde{H_{n \times 1}} = \boldsymbol{U}_{n \times r} \times (\boldsymbol{\theta}_{t \times r})^{-1} \times H_{t \times 1}^{pilot} \qquad (21),$$

where

$H_{t \times 1}^{pilot}$ is the measured channel coefficient. t is a quantity of resources corresponding to the first matrix, and is also the quantity of resources corresponding to the measured channel coefficient. $\theta_{t \times r}$ is the first matrix, and is the matrix including the t row vectors in the first channel estimation assistance matrix $\boldsymbol{U}_{n \times r}$. $(\theta_{t \times r})^{-1}$ is an inverse matrix of the first matrix.

Example 2: For Case 3 (that is, $S_1$ is greater than 1, the $S_1$ orthogonal vectors correspond to the different resources, and the first channel estimation assistance matrix is determined based on the Kronecker product of the $M_1$ matrices and the first coefficient matrix) in Implementation 4.2, an example in which the first channel estimation assistance matrix is $\boldsymbol{U}_{(n \times m) \times r}$ shown in Formula (15), Formula (16), Formula (17), or Formula (18) is used, and the target channel coefficient $\tilde{\boldsymbol{H}}$ may be shown in the following formula (22).

$$\widetilde{H_{(n \times m) \times 1}} = \boldsymbol{U}_{(n \times m) \times r} \times (\boldsymbol{\theta}_{t \times r})^{-1} \times H_{t \times 1}^{pilot} \qquad (22),$$

where

$H_{t \times 1}^{pilot}$ is the measured channel coefficient. t is a quantity of resources corresponding to the first matrix, and is also the quantity of resources corresponding to the measured channel coefficient. $\theta_{t \times r}$ is the first matrix, and is the matrix including the t row vectors in the first channel estimation assistance matrix $\boldsymbol{U}_{(n \times m) \times r}$. $(\theta_{t \times r})^{-1}$ is an inverse matrix of the first matrix.

In conclusion, in the information transmission method 100, the first device may send the first indication information to the second device, where the first indication information indicates the $S_1$ orthogonal vectors, and $S_1$ is a positive integer; the second device determines the first channel estimation assistance matrix based on the $S_1$ orthogonal vectors; and the second device performs channel estimation based on the first channel estimation assistance matrix. It can be learned that the second device performs channel estimation based on the first channel estimation assistance matrix. The first channel estimation assistance matrix determined based on the $S_1$ orthogonal vectors may represent a main base of channel space. In this case, performing channel estimation based on the first channel estimation assistance matrix can improve channel estimation precision. The method may be applied to a scenario of a sparse RS, and can improve channel estimation precision for the sparse RS. In addition, the first channel estimation assistance matrix is determined based on the first indication information, and overheads of indicating the $S_1$ orthogonal vectors by the first indication information are small, so that indication overheads can be reduced.

An embodiment of this application further provides an information transmission method 200. In the information transmission method 200, a second device may send, to a first device, second indication information indicating $S_2$ orthogonal vectors. The second device may determine, by determining whether first indication information from the first device is received, whether a first channel estimation assistance matrix is determined based on $S_1$ orthogonal vectors indicated by the first indication information or a first channel estimation assistance matrix is determined based on the $S_2$ orthogonal vectors.

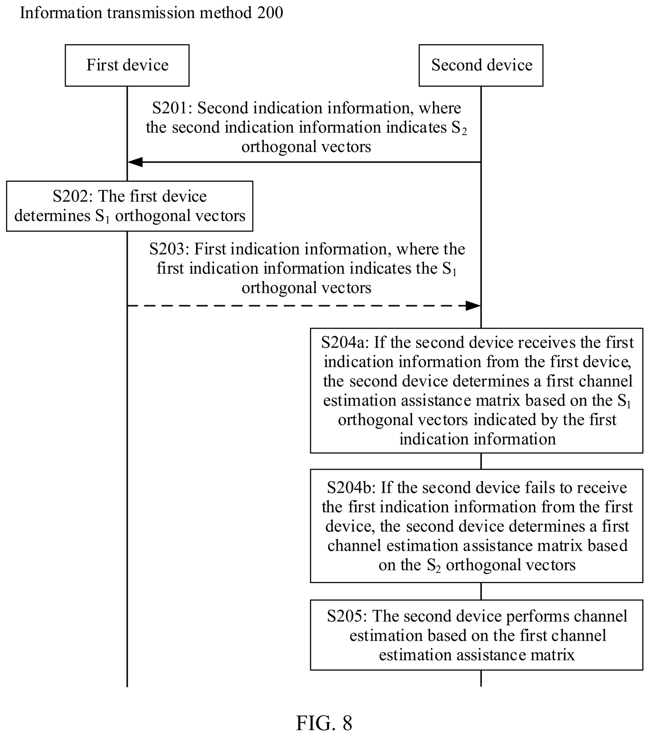

FIG. 8 is a schematic flowchart of the information transmission method 200 according to an embodiment of this application. In the diagram, an example in which the first device and the second device are used as execution bodies of the schematic interaction is used to show a corresponding method. However, the execution bodies of the schematic interaction are not limited in this application. For example, the first device in the figure may also be a chip, a chip system, or a processor that supports the first device in implementing a corresponding method, or may be a logical module or software that can implement all or a part of functions of the first device. The second device in the figure may also be a chip, a chip system, or a processor that supports the second device in implementing a corresponding method, or may be a logical module or software that can implement all or a part of functions of the second device. The information transmission method 200 includes the following steps.

S201: The second device sends the second indication information to the first device, where the second indication information indicates the $S_2$ orthogonal vectors. Correspondingly, the first device receives the second indication information from the second device. For specific descriptions of the second indication information, refer to the related descriptions in the information transmission method 100. Details are not described herein again.

S202: The first device determines the $S_1$ orthogonal vectors. The $S_1$ orthogonal vectors may be the same as or different from the $S_2$ orthogonal vectors.

In addition, the first device may determine the $S_1$ orthogonal vectors based on the $S_2$ orthogonal vectors. It may be understood that the second device recommends the $S_2$ orthogonal vectors to the first device, and the first device may determine the $S_1$ orthogonal vectors based on the $S_2$ orthogonal vectors recommended by the second device. When the second device is a terminal device, because the terminal device has a capability of obtaining whether a channel feature changes, the terminal device may determine the recommended $S_2$ orthogonal vectors by using this capability, so that the first channel estimation assistance matrix determined based on the $S_1$ orthogonal vectors helps further improve channel estimation precision.

S203: If the $S_1$ orthogonal vectors are different from the $S_2$ orthogonal vectors, the first device sends the first indication information to the second device. If the $S_1$ orthogonal vectors are the same as the $S_2$ orthogonal vectors, the first device skips sending the first indication information to the second device. The first indication information indicates the $S_1$ orthogonal vectors. For specific descriptions of the first indication information, refer to the related descriptions in the information transmission method 100. Details are not described herein again.

It can be learned that the first device may determine, by determining whether the $S_2$ orthogonal vectors are the same as the $S_1$ orthogonal vectors, whether to send, to the second device, the first indication information indicating the $S_1$ orthogonal vectors. When the $S_2$ orthogonal vectors are different from the $S_1$ orthogonal vectors, the first device may notify, by using the first indication information, the second device of the $S_1$ orthogonal vectors used to determine the first channel estimation assistance matrix. When the $S_2$ orthogonal vectors are the same as the $S_1$ orthogonal vectors, the first device skips sending the first indication information to the second device, to reduce indication overheads.

S204a: If the second device receives the first indication information from the first device, the second device determines the first channel estimation assistance matrix based on the $S_1$ orthogonal vectors indicated by the first indication information.

In an optional implementation, the first channel estimation assistance matrix includes the $S_1$ orthogonal vectors. For specific descriptions, refer to Implementation 4.1 in the information transmission method 100. Details are not described again.

In another optional implementation, the method may further include: The second device sends a third coefficient matrix to the first device, and the first device may determine a first coefficient matrix based on the third coefficient matrix, where the first coefficient matrix may be the same as or different from the third coefficient matrix. If the first coefficient matrix is different from the third coefficient matrix, and the first device sends the first coefficient matrix to the second device, the second device may determine the first channel estimation assistance matrix based on the $S_1$ orthogonal vectors and the first coefficient matrix. If the first coefficient matrix is the same as the third coefficient matrix, and the first device skips sending the first coefficient matrix to the second device, the second device may determine the first channel estimation assistance matrix based on the $S_1$ orthogonal vectors and the third coefficient matrix.

For specific descriptions of determining the first channel estimation assistance matrix based on the $S_1$ orthogonal vectors and the first coefficient matrix by the second device, refer to Implementation 4.2 in the information transmission method 100. Details are not described again.

That the second device determines the first channel estimation assistance matrix based on the $S_1$ orthogonal vectors and the third coefficient matrix is similar to that the first channel estimation assistance matrix is determined based on the $S_1$ orthogonal vectors and the first coefficient matrix. For details, refer to Implementation 4.2 in the information transmission method 100. The following briefly describes included three cases in which the second device determines the first channel estimation assistance matrix based on the $S_1$ orthogonal vectors and the third coefficient matrix.

Case 1: $S_1$ is equal to 1, and the first channel estimation assistance matrix is determined based on the $S_1$ orthogonal vectors and the third coefficient matrix. In this case, a quantity of resources corresponding to the first channel estimation assistance matrix is equal to a quantity of resources corresponding to the $S_1$ orthogonal vectors.

Case 2: $S_1$ is greater than 1, the $S_1$ orthogonal vectors correspond to a same resource, and the first channel estimation assistance matrix is determined based on the third coefficient matrix and a sub-unitary matrix including the $S_1$

orthogonal vectors. In this case, a quantity of resources corresponding to the first channel estimation assistance matrix is equal to a quantity of resources corresponding to any one of the $S_1$ orthogonal vectors.

Case 3: $S_1$ is greater than 1, the $S_1$ orthogonal vectors correspond to different resources, and the first channel estimation assistance matrix is determined based on a Kronecker product of $M_1$ matrices and the third coefficient matrix. Orthogonal vectors included in a same matrix in the $M_1$ matrices correspond to a same resource, orthogonal vectors included in different matrices in the $M_1$ matrices correspond to different resources, the $M_1$ matrices are determined based on the $S_1$ orthogonal vectors, $M_1$ is an integer greater than 1, and $M_1$ is less than or equal to $S_1$. In this case, a quantity of resources corresponding to the first channel estimation assistance matrix is equal to a product of $M_1$ values, and the $M_1$ values are quantities of resources corresponding to orthogonal vectors respectively included in the $M_1$ matrices.

S204b: If the second device fails to receive the first indication information from the first device, the second device determines the first channel estimation assistance matrix based on the $S_2$ orthogonal vectors.

In an optional implementation, the first channel estimation assistance matrix includes the $S_2$ orthogonal vectors. For specific descriptions, refer to Implementation 5.1 in the information transmission method 100. Details are not described again.

In another optional implementation, the method may further include: The second device sends a third coefficient matrix to the first device, and the first device determines a first coefficient matrix based on the third coefficient matrix, where the first coefficient matrix may be the same as or different from the third coefficient matrix. If the first coefficient matrix is different from the third coefficient matrix, and the first device sends the first coefficient matrix to the second device, the second device determines the first channel estimation assistance matrix based on the $S_2$ orthogonal vectors and the first coefficient matrix. If the first coefficient matrix is the same as the third coefficient matrix, and the first device skips sending the first coefficient matrix to the second device, the second device determines the first channel estimation assistance matrix based on the $S_2$ orthogonal vectors and the third coefficient matrix.

For specific descriptions of determining the first channel estimation assistance matrix based on the $S_2$ orthogonal vectors and the first coefficient matrix by the second device, refer to Implementation 5.2 in the information transmission method 100. Details are not described again. For specific descriptions of determining a third channel estimation assistance matrix based on the $S_2$ orthogonal vectors and the first coefficient matrix by the second device, refer to Implementation 5.3 in the information transmission method 100. Details are not described again.

In addition, optionally, in the steps S204a and S204b, the second device may determine, in a first time period, whether the first indication information from the first device is received, whether to perform the operation in step S204a or the operation in step S204b. For the first time period, refer to the related descriptions in the information transmission method 100. Details are not described again. If the second device receives the first indication information from the first device in the first time period, the second device performs the operation of determining the first channel estimation assistance matrix based on the $S_1$ orthogonal vectors in step S204a. If the second device fails to receive the first indication information from the first device in the first time period, the second device performs the operation of determining the first channel estimation assistance matrix based on the $S_2$ orthogonal vectors in step S204b.

S205: The second device performs channel estimation based on the first channel estimation assistance matrix. For specific descriptions of this step, refer to the related descriptions of S104 in the information transmission method 100. Details are not described again.

In conclusion, in the information transmission method 200, the second device may send the second indication information to the first device, where the second indication information indicates the $S_2$ orthogonal vectors; and the first device determines the $S_1$ orthogonal vectors. If the $S_1$ orthogonal vectors are different from the $S_2$ orthogonal vectors, the first device sends the first indication information to the second device, and the second device determines the first channel estimation assistance matrix based on the $S_1$ orthogonal vectors indicated by the first indication information. If the $S_1$ orthogonal vectors are the same as the $S_2$ orthogonal vectors, the first device skips sending the first indication information to the second device, and the second device determines the first channel estimation assistance matrix based on the $S_2$ orthogonal vectors. The second device performs channel estimation based on the first channel estimation assistance matrix.

It can be learned that the second device may perform channel estimation based on the first channel estimation assistance matrix. The first channel estimation assistance matrix determined based on the $S_1$ orthogonal vectors or the $S_2$ orthogonal vectors may represent a main base of channel space. In this case, performing channel estimation based on the first channel estimation assistance matrix can improve channel estimation precision. The method may be applied to a scenario of a sparse RS, and can improve channel estimation precision for the sparse RS.

In addition, when the second device is a terminal device, because the terminal device has a capability of obtaining whether a channel feature changes, the terminal device may determine recommended $S_2$ orthogonal vectors by using this capability, so that the first device can determine the $S_1$ orthogonal vectors based on the $S_2$ orthogonal vectors recommended by the second device, and the determined first channel estimation assistance matrix helps further improve channel estimation precision. In addition, the first device may determine, by determining whether the $S_1$ orthogonal vectors are the same as the $S_2$ orthogonal vectors, whether to send the first indication information to the second device.

When the $S_1$ orthogonal vectors are the same as the $S_2$ orthogonal vectors, the first indication information may not be sent, so that indication overheads can be reduced.

The following describes, with reference to specific scenarios, the information transmission method 100 and the information transmission method 200 provided in embodiments of this application by using examples.

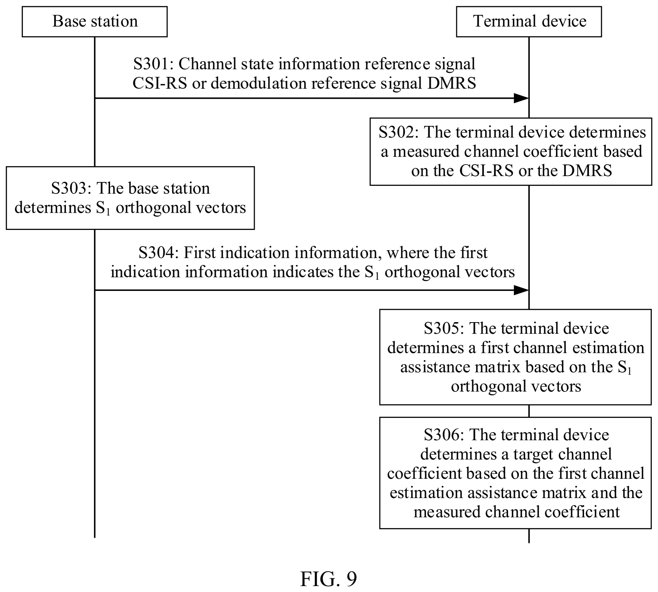

Example 1: The RS is a CSI-RS or a DMRS, the first device is a base station, and the second device is a terminal device. With reference to FIG. 9, the example information transmission method includes the following steps S301 to S306.

S301: The base station sends the CSI-RS or the DMRS to the terminal device. Correspondingly, the terminal device receives the CSI-RS or the DMRS from the base station.

S302: The terminal device determines a measured channel coefficient based on the CSI-RS or the DMRS.

S303: The base station determines $S_1$ orthogonal vectors.

S304: The base station sends first indication information to the terminal device, where the first indication information indicates the $S_1$ orthogonal vectors. Correspondingly, the terminal device receives the first indication information from the base station.

S305: The terminal device determines a first channel estimation assistance matrix based on the $S_1$ orthogonal vectors.

S306: The terminal device determines a target channel coefficient based on the first channel estimation assistance matrix and the measured channel coefficient.

A sequence of steps S301 and S302 and steps S303 to S305 is not limited in embodiments of this application. In addition, for specific descriptions of the steps S301 to S306, refer to the related descriptions in the information transmission method 100. Details are not described again.

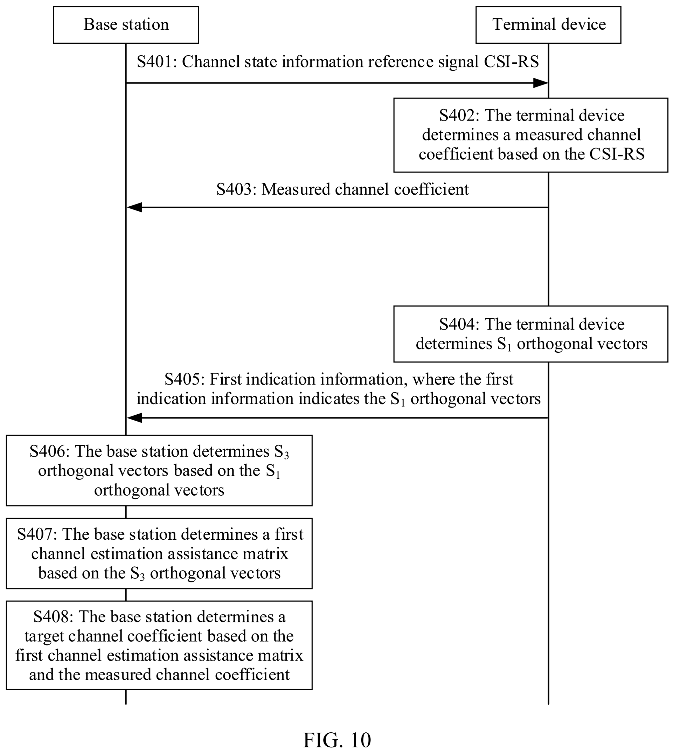

Example 2: The RS is a CSI-RS, the first device is a terminal device, and the second device is a base station. With reference to FIG. 10, the example information transmission method includes the following steps S401 to S408.

S401: The base station sends the CSI-RS to the terminal device. Correspondingly, the terminal device receives the CSI-RS from the base station.

S402: The terminal device determines a measured channel coefficient based on the CSI-RS.

S403: The terminal device sends the measured channel coefficient to the base station. Correspondingly, the base station receives the measured channel coefficient from the terminal device.

S404: The terminal device determines $S_1$ orthogonal vectors.

S405: The terminal device sends first indication information to the base station, where the first indication information indicates the $S_1$ orthogonal vectors. Correspondingly, the base station receives the first indication information from the terminal device.

S406: The base station determines $S_3$ orthogonal vectors based on the $S_1$ orthogonal vectors, where the $S_3$ orthogonal vectors may be the same as or different from the $S_1$ orthogonal vectors.

S407: The base station determines a first channel estimation assistance matrix based on the $S_3$ orthogonal vectors.

S408: The base station determines a target channel coefficient based on the first channel estimation assistance matrix and the measured channel coefficient.

A sequence of steps S401 to S403 and steps S404 to S407 is not limited in embodiments of this application. In addition, for specific descriptions of the steps S401 to S408, refer to the related descriptions in the information transmission method 100. Details are not described again.

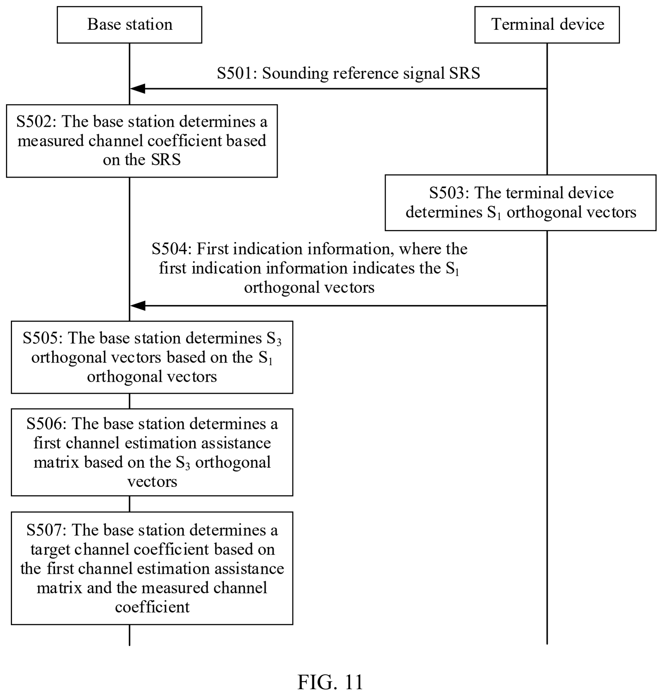

Example 3: The RS is an SRS, the first device is a terminal device, and the second device is a base station. With reference to FIG. 11, the example information transmission method includes the following steps S501 to S507.

S501: The terminal device sends the SRS to the base station. Correspondingly, the base station receives the SRS from the terminal device.

S502: The base station determines a measured channel coefficient based on the SRS.

S503: The terminal device determines $S_1$ orthogonal vectors.

S504: The terminal device sends first indication information to the base station, where the first indication information indicates the $S_1$ orthogonal vectors. Correspondingly, the base station receives the first indication information from the terminal device.

S505: The base station determines $S_3$ orthogonal vectors based on the $S_1$ orthogonal vectors, where the $S_3$ orthogonal vectors may be the same as or different from the $S_1$ orthogonal vectors.

S506: The base station determines a first channel estimation assistance matrix based on the $S_3$ orthogonal vectors.

S507: The base station determines a target channel coefficient based on the first channel estimation assistance matrix and the measured channel coefficient.

A sequence of steps S501 and S502 and steps S503 to S507 is not limited in embodiments of this application. In addition, for specific descriptions of the steps S501 to S507, refer to the related descriptions in the information transmission method 100. Details are not described again.

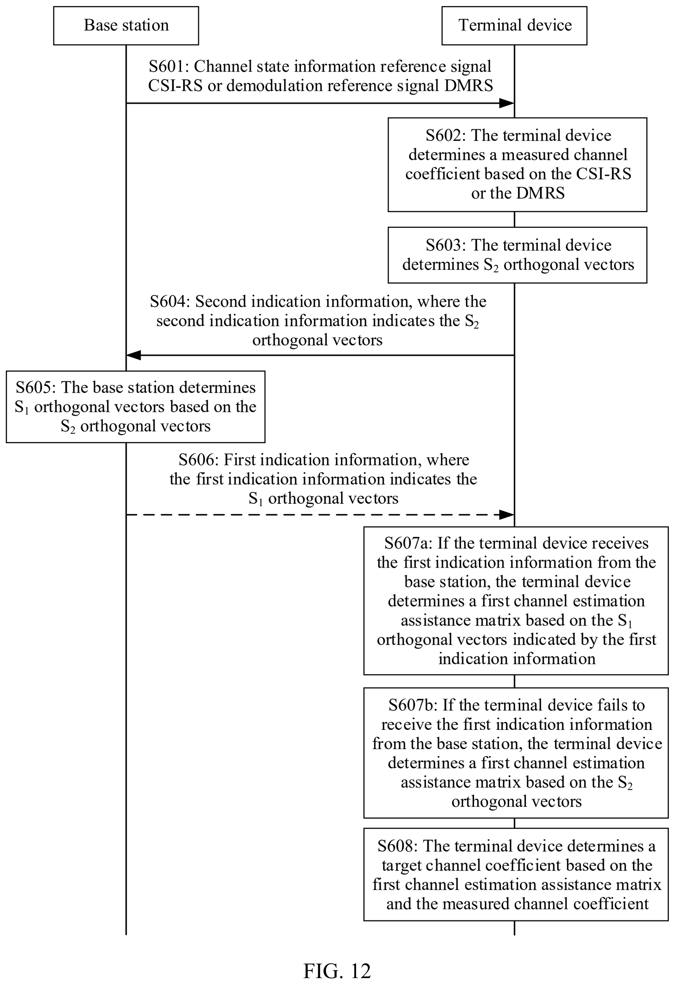

Example 4: The RS is a CSI-RS or a DMRS, the first device is a base station, and the second device is a terminal device. With reference to FIG. 12, the example information transmission method includes the following steps S601 to S606.

S601: The base station sends the CSI-RS or the DMRS to the terminal device. Correspondingly, the terminal device receives the CSI-RS or the DMRS from the base station.

S602: The terminal device determines a measured channel coefficient based on the CSI-RS or the DMRS.

S603: The terminal device determines $S_2$ orthogonal vectors.

S604: The terminal device sends second indication information to the base station, where the second indication information indicates the $S_2$ orthogonal vectors. Correspondingly, the base station receives the second indication information from the terminal device.

S605: The base station determines $S_1$ orthogonal vectors based on the $S_2$ orthogonal vectors, where the $S_1$ orthogonal vectors may be the same as or different from the $S_2$ orthogonal vectors.

S606: If the $S_1$ orthogonal vectors are different from the $S_2$ orthogonal vectors, the base station sends first indication information to the terminal device. If the $S_1$ orthogonal vectors are the same as the $S_2$ orthogonal vectors, the base station skips sending first indication information to the terminal device. The first indication information indicates the $S_1$ orthogonal vectors.

S607a: If the terminal device receives the first indication information from the base station, the terminal device determines a first channel estimation assistance matrix based on the $S_1$ orthogonal vectors indicated by the first indication information.

S607b: If the terminal device fails to receive the first indication information from the base station, the terminal device determines a first channel estimation assistance matrix based on the $S_2$ orthogonal vectors.

S608: The terminal device determines a target channel coefficient based on the first channel estimation assistance matrix and the measured channel coefficient.

A sequence of steps S601 and S602 and steps S603 to S607b is not limited in embodiments of this application. In addition, for specific descriptions of the steps S601 to S608, refer to the related descriptions in the information transmission method 200. Details are not described again.

In addition, for either of the information transmission method 100 and the information transmission method 200, the following optional implementations may be further included.

In an optional implementation, the method may further include: The first device sends third indication information to the second device, where the third indication information indicates a first bandwidth resource. The target channel coefficient obtained by the second device by performing channel estimation based on the first channel estimation assistance matrix is a target channel coefficient corresponding to the first bandwidth resource. It can be learned that the first bandwidth resource corresponds to the first channel estimation assistance matrix.

Optionally, for the case in which the first channel estimation assistance matrix includes the $S_1$ orthogonal vectors as shown in Implementation 4.1, the first bandwidth resource further corresponds to the $S_1$ orthogonal vectors, and/or the first bandwidth resource further corresponds to the first indication information indicating the $S_1$ orthogonal vectors.

For the case in which the first channel estimation assistance matrix is determined based on the $S_1$ orthogonal vectors and the first coefficient matrix as shown in Implementation 4.2, the first bandwidth resource further corresponds to the $S_1$ orthogonal vectors, and/or the first bandwidth resource further corresponds to the first indication information indicating the $S_1$ orthogonal vectors, and/or the first bandwidth resource further corresponds to the first coefficient matrix.

For the case in which the first channel estimation assistance matrix is determined based on the $S_1$ orthogonal vectors and the third coefficient matrix, the first bandwidth resource further corresponds to the $S_1$ orthogonal vectors, and/or the first bandwidth resource further corresponds to the first indication information indicating the $S_1$ orthogonal vectors, and/or the first bandwidth resource further corresponds to the third coefficient matrix.

For the case in which the first channel estimation assistance matrix is determined based on the $S_3$ orthogonal vectors as shown in Implementation 4.3, the first bandwidth resource further corresponds to the $S_3$ orthogonal vectors.

For the case in which the first channel estimation assistance matrix is determined based on the $S_3$ orthogonal vectors and the second coefficient matrix as shown in Implementation 4.4, the first bandwidth resource further corresponds to the $S_3$ orthogonal vectors.

For the case in which the first channel estimation assistance matrix includes the $S_2$ orthogonal vectors as shown in Implementation 5.1, the first bandwidth resource further corresponds to the $S_2$ orthogonal vectors, and/or the first bandwidth resource further corresponds to the second indication information indicating the $S_2$ orthogonal vectors.

For the case in which the first channel estimation assistance matrix is determined based on the $S_2$ orthogonal vectors and the first coefficient matrix as shown in Implementation 5.2, the first bandwidth resource further corresponds to the $S_2$ orthogonal vectors, and/or the first bandwidth resource further corresponds to the second indication information indicating the $S_2$ orthogonal vectors, and/or the first bandwidth resource further corresponds to the first coefficient matrix.

For the case in which the first channel estimation assistance matrix is determined based on the $S_2$ orthogonal vectors and the third coefficient matrix as shown in Implementation 5.3, the first bandwidth resource further corresponds to

the $S_2$ orthogonal vectors, and/or the first bandwidth resource further corresponds to the second indication information indicating the $S_2$ orthogonal vectors, and/or the first bandwidth resource further corresponds to the third coefficient matrix.

In another optional implementation, the method may further include: The first device sends third indication information to the second device, where the third indication information indicates a first bandwidth resource; and the second device determines a second bandwidth resource based on the first bandwidth resource. The target channel coefficient obtained by the second device by performing channel estimation based on the first channel estimation assistance matrix is a target channel coefficient corresponding to the second bandwidth resource. The second bandwidth resource may be the same as or different from the first bandwidth resource.

Optionally, for the case in which the first channel estimation assistance matrix is determined based on the $S_3$ orthogonal vectors as shown in Implementation 4.3, the second bandwidth resource further corresponds to the $S_3$ orthogonal vectors; and the first bandwidth resource corresponds to the $S_1$ orthogonal vectors, and/or the first bandwidth resource further corresponds to the first indication information indicating the $S_1$ orthogonal vectors.

For the case in which the first channel estimation assistance matrix is determined based on the $S_3$ orthogonal vectors and the second coefficient matrix as shown in Implementation 4.4, the second bandwidth resource further corresponds to the $S_3$ orthogonal vectors, and/or the second bandwidth resource further corresponds to the second coefficient matrix; and the first bandwidth resource corresponds to the $S_1$ orthogonal vectors, and/or the first bandwidth resource further corresponds to the first indication information indicating the $S_1$ orthogonal vectors.

In an optional implementation, the method further includes: The second device performs channel estimation based on a second channel estimation assistance matrix to obtain a target channel coefficient corresponding to a third bandwidth resource, where the third bandwidth resource is different from the first bandwidth resource; the second channel estimation assistance matrix is determined based on $S_4$ orthogonal vectors; and the second channel estimation assistance matrix is the same as or different from the first channel estimation assistance matrix, and the $S_4$ orthogonal vectors are the same as or different from orthogonal vectors used to determine the first channel estimation assistance matrix. The second channel estimation assistance matrix may be determined by the second device in a manner similar to that in which the first channel estimation assistance matrix is determined in the information transmission method 100 or the information transmission method 200. The $S_4$ orthogonal vectors are similar to the orthogonal vectors used to determine the first channel estimation assistance matrix in the information transmission method 100 or the information transmission method 200. Details are not described again.

In an optional implementation, the method may further include: The first device may send fourth indication information to the second device, where the fourth indication information indicates X bandwidth resources, the target channel coefficient obtained by the second device by performing channel estimation based on the first channel estimation assistance matrix is target channel coefficients respectively corresponding to Y bandwidth resources in the X bandwidth resources, X is a positive integer, and Y is a positive integer less than or equal to X. It can be learned that all the Y bandwidth resources correspond to a same first channel estimation assistance matrix, and all the Y bandwidth resources correspond to the target channel coefficient obtained based on the first channel estimation assistance matrix. In addition, for example, if Y is less than X, in X-Y bandwidth resources other than the Y bandwidth resources in the X bandwidth resources, there is a bandwidth resource corresponding to a target channel coefficient determined by performing channel estimation based on a third channel estimation assistance matrix, where the third channel estimation assistance matrix is different from the first channel estimation assistance matrix, and an orthogonal vector used to determine the third channel estimation assistance matrix is different from the orthogonal vector used to determine the first channel estimation assistance matrix. The third channel estimation assistance matrix may be determined by the second device in a manner similar to that in which the first channel estimation assistance matrix is determined in the information transmission method 100 or the information transmission method 200. The orthogonal vector used to determine the third channel estimation assistance matrix is similar to the orthogonal vector used to determine the first channel estimation assistance matrix in the information transmission method 100 or the information transmission method 200. Details are not described again.

In addition, a channel estimation result obtained by performing channel estimation on the X bandwidth resources may be obtained by combining target channel coefficients respectively corresponding to all of the X bandwidth resources.

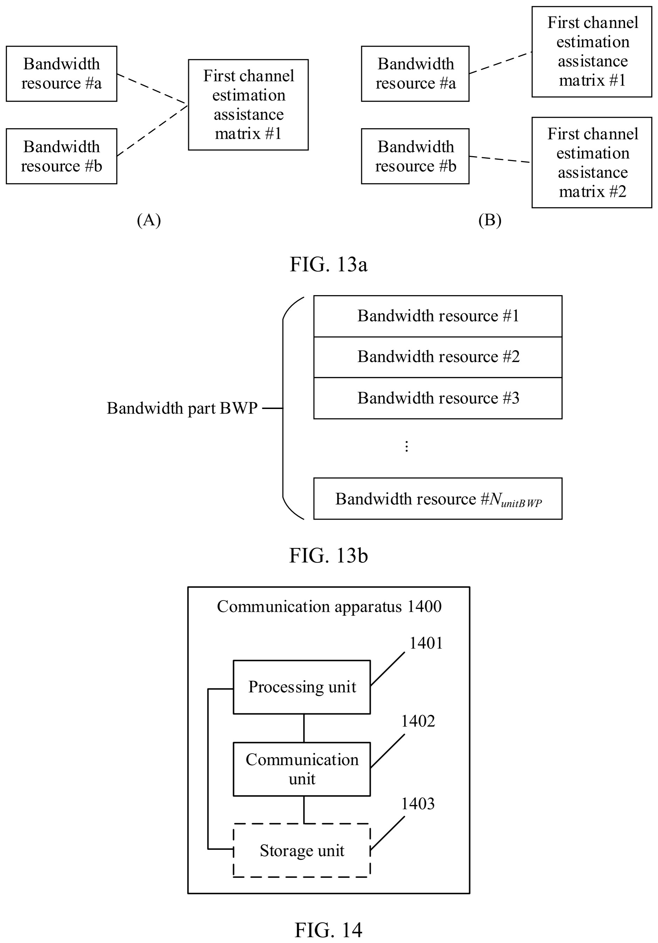

In an optional implementation, any one of the first bandwidth resource, the second bandwidth resource, the third bandwidth resource, and the X bandwidth resources mentioned above is a group of consecutive bandwidth resources in a bandwidth part (bandwidth part, BWP). Different bandwidth resources may correspond to a same first channel estimation assistance matrix. In this case, the different bandwidth resources may correspond to the target channel coefficient obtained based on the same first channel estimation assistance matrix. Alternatively, different bandwidth resources may correspond to different first channel estimation assistance matrices. In this case, the different bandwidth resources may correspond to the target channel coefficient obtained based on the different first channel estimation assistance matrices. For example, with reference to FIG. 13a, an example in which the BWP includes two bandwidth resources: a bandwidth resource #a and a bandwidth resource #b is used. As shown in a part (A) in FIG. 13a, both the bandwidth resource #a and the bandwidth resource #b correspond to a first channel estimation assistance matrix #1. It can be learned that the bandwidth resource #a and the bandwidth resource #b correspond to a same first channel estimation assistance matrix. As shown in a part (B) in FIG. 13a, the bandwidth resource #a corresponds to a first channel estimation assistance matrix #1, and the bandwidth resource #b corresponds to a first channel estimation assistance matrix #2. It can be learned that the bandwidth resource #a and the bandwidth resource #b correspond to different first channel estimation assistance matrices.

In addition, different bandwidth resources may correspond to same or different first indication information, and different bandwidth resources may correspond to same or different second indication information. For example, the first channel estimation assistance matrix #1 in FIG. 13a includes $S_1$ orthogonal vectors indicated by first indication information #1, and the first channel estimation assistance matrix #2 includes $S_1$ orthogonal vectors indicated by first indication information #2. The $S_1$ orthogonal vectors indicated by the first indication information #1 are different from the $S_1$ orthogonal vectors indicated by the first indication information #2. For the part (A) in FIG. 13a, both the bandwidth resource #a and the bandwidth resource #b correspond to the first indication information #1. For the part (B) in FIG. 13a, the bandwidth resource #a corresponds to the first indication information #1, and the bandwidth resource #b corresponds to the first indication information #2.

Optionally, a quantity of bandwidth resources that may be included in the BWP may be shown in the following formula (23). In Formula (23), a bandwidth resource is represented by a unit BWP (UnitBWP). For example, the BWP includes $N_{UnitBWP}$ bandwidth resources, as shown in FIG. 13b. The bandwidth resource #a and the bandwidth resource #b in FIG. 13a may be two of the $N_{UnitBWP}$ bandwidth resources included in the BWP shown in FIG. 13b.

$$N_{UnitBWP} = \left\lceil \left( N_{BWP,i}^{size} + \left( N_{BWP,i}^{start} \mathrm{mod} P \right) \right) / P \right\rceil \tag{23},$$

where

$N_{BWP,i}^{size}$ represents a size of an $i^{th}$ BWP configured by the network device for the terminal device; $N_{BWP,i}^{start}$ represents a number of a start RB of the $i^{th}$ BWP configured by the network device for the terminal device; P represents a size of the unit BWP, and may be represented by a quantity of RBs included in the unit BWP, where P is a positive integer; and mod represents a modulo operation, and $\lceil\ \rceil$ represents rounding up.

In $N_{UnitBWP}$ unit BWPs, a size of the first unit BWP and a size of the last unit BWP are affected by a start location and an end location of the BWP, and may not be "fully configured". In other words, the size of the first unit BWP and/or the size of the last unit BWP may not be P. A size of another unit BWP between the first unit BWP and the last unit BWP is P.

For example, in the $i^{th}$ BWP configured by the network device for the terminal device, the size $\mathrm{UnitBWP}_0^{size}$ of the first unit BWP may meet: $\mathrm{UnitBWP}_0^{size} = P - N_{BWP,i}^{start}$. When $\left( N_{BWP,i}^{size} + N_{BWP,i}^{start} \right) \mathrm{mod} P > 0$, the size $\mathrm{UnitBWP}_{last}^{size}$ of the last unit BWP may meet: $\mathrm{UnitBWP}_{last}^{size} = \frac{N_{BWP,i}^{size} + N_{BWP,i}^{start}}{P}$. When $\left( N_{BWP,i}^{size} + N_{BWP,i}^{start} \right) \mathrm{mod} P = 0$, the size of the last unit BWP is P.

In addition, optionally, each bandwidth resource included in the BWP may have a corresponding index. For example, according to Formula (23), the BWP is divided into $N_{UnitBWP}$ unit BWPs, and indexes corresponding to the $N_{UnitBWP}$ unit BWPs are an index #1 to an index #$N_{UnitBWP}$. In this case, indication information indicating a bandwidth resource may indicate the bandwidth resource by including an index corresponding to the bandwidth resource. For example, the third indication information indicating the first bandwidth resource mentioned above may include an index corresponding to the first bandwidth resource, and the fourth indication information indicating the X bandwidth resources mentioned above may include an index corresponding to each of the X bandwidth resources. For example, the BWP includes a UnitBWP #1, a UnitBWP #2, and a UnitBWP #3, the UnitBWP #1 corresponds to an index #1, the UnitBWP #2 corresponds to an index #2, and the UnitBWP #3 corresponds to an index #3. The first bandwidth resource indicated by the third indication information is the UnitBWP #2. In this case, the third indication information may include the index #2.

To implement functions in the foregoing methods provided in embodiments of this application, the first device or the second device may include a hardware structure and/or a software module, and implement the foregoing functions in a form of the hardware structure, the software module, or a combination of the hardware structure and the software module. Whether a function in the foregoing functions is implemented by using the hardware structure, the software module, or the combination of the hardware structure and the software module depends on particular applications and design constraints of the technical solutions.

As shown in FIG. 14, an embodiment of this application provides a communication apparatus 1400. The communication apparatus 1400 may be a first device or a second device, or may be a component (for example, an integrated circuit or a chip) of a first device, or may be a component (for example, an integrated circuit or a chip) of a second device. Alternatively, the communication apparatus 1400 may be another communication unit, configured to implement the methods in the method embodiments of this application. The communication apparatus 1400 may include a processing unit 1401. Optionally, the communication apparatus 1400 may further include a communication unit 1402. The processing unit 1401 is configured to control the communication unit 1402 to receive and send data/signaling. The communication unit 1402 may also be referred to as a transceiver unit. Optionally, the communication unit 1402 may include a sending unit and a receiving unit. The sending unit may be configured to send data/information, and the receiving unit may be configured to receive data/information. Optionally, the communication apparatus 1400 may further include a storage unit 1403. The storage unit 1403 may be configured to store information, data, instructions, and/or the like. The storage unit 1403 may interact with the processing unit 1401, or may interact with the communication unit 1402.

In a possible design, the communication unit 1402 is configured to receive first indication information from a first device, where the first indication information indicates $S_1$ orthogonal vectors, and $S_1$ is a positive integer. The processing unit 1401 is configured to determine a first channel estimation assistance matrix based on the $S_1$ orthogonal vectors. The processing unit 1401 is further configured to perform channel estimation based on the first channel estimation assistance matrix.

For example, the communication unit 1402 may perform the operation of receiving the first indication information in step S102 shown in FIG. 6a and FIG. 6b, and may further perform the operation of sending the second indication information shown in FIG. 6b. The processing unit 1401 may perform a related operation in the steps S103 and S104 shown in FIG. 6a and FIG. 6b, and may further perform the operation of determining the $S_2$ orthogonal vectors shown in FIG. 6b.

Optionally, the communication unit 1402 may perform the operation of receiving the CSI-RS or the DMRS in step S301 and the operation of receiving the first indication information in step S304 shown in FIG. 9. The processing unit 1401 may perform a related operation in the steps S302, S305, and S306 shown in FIG. 9.

Optionally, the communication unit 1402 may perform the operation of sending the CSI-RS in step S401, the operation of receiving the measured channel coefficient in step S403, and the operation of receiving the first indication information in step S405 shown in FIG. 10. The processing unit 1401 may perform a related operation in the steps S406 to S408 shown in FIG. 10.

Optionally, the communication unit 1402 may perform the operation of receiving the SRS in step S501 and the operation of receiving the first indication information in step S504 shown in FIG. 11. The processing unit 1401 may perform a related operation in the steps S502 and S505 to S507 shown in FIG. 11. In another possible design, the processing unit 1401 is configured to determine $S_1$ orthogonal vectors, where $S_1$ is a positive integer. The communication unit 1402 is configured to send first indication information to the second device, where the first indication information indicates the $S_1$ orthogonal vectors, and the $S_1$ orthogonal vectors are used by the second device to determine a first channel estimation assistance matrix.

For example, the communication unit 1402 may perform the operation of sending the first indication information in step S102 shown in FIG. 6a and FIG. 6b, and may further perform the operation of receiving the second indication information shown in FIG. 6b. The processing unit 1401 may perform a related operation in step S101 shown in FIG. 6a and FIG. 6b.

Optionally, the communication unit 1402 may perform the operation of sending the CSI-RS or the DMRS in step S301 and the operation of sending the first indication information in step S304 shown in FIG. 9. The processing unit 1401 may perform a related operation in step S303 in FIG. 9.

Optionally, the communication unit 1402 may perform the operation of receiving the CSI-RS in step S401, the operation of sending the measured channel coefficient in step S403, and the operation of sending the first indication information in step S405 shown in FIG. 10. The processing unit 1401 may perform a related operation in the steps S402 and S404 in FIG. 10.

Optionally, the communication unit 1402 may perform the operation of sending the SRS in step S501 and the operation of sending the first indication information in step S504 shown in FIG. 11. The processing unit 1401 may perform a related operation in step S503 in FIG. 11.

In another possible design, the communication unit 1402 is configured to send second indication information to the first device, where the second indication information indicates $S_2$ orthogonal vectors. The processing unit 1401 is configured to: if the communication unit 1402 receives first indication information from the first device, determine a first channel estimation assistance matrix based on $S_1$ orthogonal vectors indicated by the first indication information; or if the communication unit 1402 fails to receive first indication information from the first device, determine a first channel estimation assistance matrix based on the $S_2$ orthogonal vectors. The first indication information indicates the $S_1$ orthogonal vectors.

For example, the communication unit 1402 may perform the operation of sending the second indication information in step S201 and the operation of receiving the first indication information in S203 shown in FIG. 8. The processing unit 1401 may perform a related operation in the steps S204a, S204b, and S205 shown in FIG. 8.

Optionally, the communication unit 1402 may perform the operation of receiving the CSI-RS or the DMRS in step S601, the operation of sending the second indication information in step S604, and the operation of receiving the first indication information in S606 shown in FIG. 12. The processing unit 1401 may perform a related operation in the steps S602, S603, S607a, S607b, and S608 shown in FIG. 12.

In another possible design, the communication unit 1402 is configured to receive second indication information from the second device, where the second indication information indicates $S_2$ orthogonal vectors. The processing unit 1401 is configured to determine $S_1$ orthogonal vectors, where the $S_1$ orthogonal vectors are used by the second device to determine a first channel estimation assistance matrix. The communication unit 1402 is further configured to: if the $S_1$ orthogonal vectors are different from the $S_2$ orthogonal vectors, send first indication information to the second device; or if the $S_1$ orthogonal vectors are the same as the $S_2$ orthogonal vectors, skip sending first indication information to the second device. The first indication information indicates the $S_1$ orthogonal vectors.

For example, the communication unit 1402 may perform the operation of receiving the second indication information in step S201 and the operation of sending the first indication information in S203 shown in FIG. 8. The processing unit 1401 may perform a related operation in step S202 shown in FIG. 8.

Optionally, the communication unit 1402 may perform the operation of sending the CSI-RS or the DMRS in step S601, the operation of receiving the second indication information in step S604, and the operation of sending the first indication information in S606 shown in FIG. 12. The processing unit 1401 may perform a related operation in step S605 shown in FIG. 12.

This embodiment of this application and the foregoing method embodiments are based on a same concept, and bring same technical effects. For a specific principle, refer to the descriptions of the foregoing embodiments. Details are not described again.

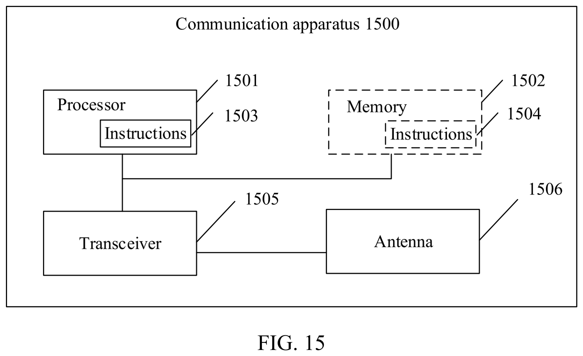

An embodiment of this application further provides a communication apparatus 1500, as shown in FIG. 15. The communication apparatus 1500 may be a first device or a second device, or may be a chip, a chip system, a processor, or the like that supports a first device in implementing the foregoing methods, or may be a chip, a chip system, a processor, or the like that supports a second device in implementing the foregoing methods. The apparatus may be configured to implement the methods described in the foregoing method embodiments. For details, refer to the descriptions in the foregoing method embodiments.

The communication apparatus 1500 may include one or more processors 1501. The processor 1501 may be configured to implement a part or all of functions of the first device or the second device via a logic circuit or by running a computer program. The processor 1501 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (central processing unit, CPU). The baseband processor may be configured to process a communication protocol and communication data. The central processing unit may be configured to: control the communication apparatus, execute a software program, and process data of the software program. The communication apparatus is, for example, a base station, a baseband chip, a terminal, a terminal chip, a central unit (distributed unit, DU), or a distributed unit (central unit, CU).

Optionally, the communication apparatus 1500 may include one or more memories 1502. The memory may store instructions 1504. The instructions may be run on the processor 1501, so that the communication apparatus 1500 performs the methods described in the foregoing method embodiments. Optionally, the memory 1502 may further store data. The processor 1501 and the memory 1502 may be separately disposed, or may be integrated together.

The memory 1502 may include but is not limited to a non-volatile memory like a hard disk drive (hard disk drive, HDD) or a solid-state drive (solid-state drive, SSD), a random access memory (random access memory, RAM), an erasable programmable read-only memory (erasable programmable ROM, EPROM), a ROM, a compact disc read-only memory (compact disc read-only memory, CD-ROM), or the like.

Optionally, the communication apparatus 1500 may further include a transceiver 1505 and an antenna 1506. The transceiver 1505 may be referred to as a transceiver unit, a transceiver device, a transceiver circuit, or the like, and is configured to implement a transceiver function. The transceiver 1505 may include a receiver and a transmitter. The receiver may be referred to as a receiving device, a receiver circuit, or the like, and is configured to implement a receiving function. The transmitter may be referred to as a transmitting device, a transmitter circuit, or the like, and is configured to implement a sending function.

In a possible design, the transceiver 1505 is configured to receive first indication information from the first device, where the first indication information indicates $S_1$ orthogonal vectors, and $S_1$ is a positive integer. The processor 1501 is configured to determine a first channel estimation assistance matrix based on the $S_1$ orthogonal vectors. The processor 1501 is further configured to perform channel estimation based on the first channel estimation assistance matrix.

For example, the transceiver 1505 may perform the operation of receiving the first indication information in step S102 shown in FIG. 6a and FIG. 6b, and may further perform the operation of sending the second indication information shown in FIG. 6b. The processor 1501 may perform a related operation in the steps S103 and S104 shown in FIG. 6a and FIG. 6b, and may further perform the operation of determining the $S_2$ orthogonal vectors shown in FIG. 6b.

Optionally, the transceiver 1505 may perform the operation of receiving the CSI-RS or the DMRS in step S301 and the operation of receiving the first indication information in step S304 shown in FIG. 9. The processor 1501 may perform a related operation in the steps S302, S305, and S306 shown in FIG. 9.

Optionally, the transceiver 1505 may perform the operation of sending the CSI-RS in step S401, the operation of receiving the measured channel coefficient in step S403, and the operation of receiving the first indication information in step S405 shown in FIG. 10. The processor 1501 may perform a related operation in the steps S406 to S408 shown in FIG. 10.

Optionally, the transceiver 1505 may perform the operation of receiving the SRS in step S501 and the operation of receiving the first indication information in step S504 shown in FIG. 11. The processor 1501 may perform a related operation in the steps S502 and S505 to S507 shown in FIG. 11.

In another possible design, the processor 1501 is configured to determine $S_1$ orthogonal vectors, where $S_1$ is a positive integer. The transceiver 1505 is configured to send first indication information to the second device, where the first indication information indicates the $S_1$ orthogonal vectors, and the $S_1$ orthogonal vectors are used by the second device to determine a first channel estimation assistance matrix.

For example, the transceiver 1505 may perform the operation of sending the first indication information in step S102 shown in FIG. 6a and FIG. 6b, and may further perform the operation of receiving the second indication information shown in FIG. 6b. The processor 1501 may perform a related operation in step S101 shown in FIG. 6a and FIG. 6b.

Optionally, the transceiver 1505 may perform the operation of sending the CSI-RS or the DMRS in step S301 and the operation of sending the first indication information in step S304 shown in FIG. 9. The processor 1501 may perform a related operation in step S303 in FIG. 9.

Optionally, the transceiver 1505 may perform the operation of receiving the CSI-RS in step S401, the operation of sending the measured channel coefficient in step S403, and the operation of sending the first indication information in step S405 shown in FIG. 10. The processor 1501 may perform a related operation in the steps S402 and S404 in FIG. 10.

Optionally, the transceiver 1505 may perform the operation of sending the SRS in step S501 and the operation of sending the first indication information in step S504 shown in FIG. 11. The processor 1501 may perform a related operation in step S503 in FIG. 11.

In another possible design, the transceiver 1505 is configured to send second indication information to the first device, where the second indication information indicates $S_2$ orthogonal vectors. The processor 1501 is configured to: if the transceiver 1505 receives first indication information from the first device, determine a first channel estimation assistance matrix based on $S_1$ orthogonal vectors indicated by the first indication information; or if the transceiver 1505 fails to receive first indication information from the first device, determine a first channel estimation assistance matrix based on the $S_2$ orthogonal vectors. The first indication information indicates the $S_1$ orthogonal vectors.

For example, the transceiver 1505 may perform the operation of sending the second indication information in step S201 and the operation of receiving the first indication information in S203 shown in FIG. 8. The processor 1501 may perform a related operation in the steps S204a, S204b, and S205 shown in FIG. 8.

Optionally, the transceiver 1505 may perform the operation of receiving the CSI-RS or the DMRS in step S601, the operation of sending the second indication information in step S604, and the operation of receiving the first indication information in S606 shown in FIG. 12. The processor 1501 may perform a related operation in the steps S602, S603, S607a, S607b, and S608 shown in FIG. 12.

In another possible design, the transceiver 1505 is configured to receive second indication information from the second device, where the second indication information indicates $S_2$ orthogonal vectors. The processor 1501 is configured to determine $S_1$ orthogonal vectors, where the $S_1$ orthogonal vectors are used by the second device to determine a first channel estimation assistance matrix. The transceiver 1505 is further configured to: if the $S_1$ orthogonal vectors are different from the $S_2$ orthogonal vectors, send first indication information to the second device; or if the $S_1$ orthogonal vectors are the same as the $S_2$ orthogonal vectors, skip sending first indication information to the second device. The first indication information indicates the $S_1$ orthogonal vectors.

For example, the transceiver 1505 may perform the operation of receiving the second indication information in step S201 and the operation of sending the first indication information in S203 shown in FIG. 8. The processor 1501 may perform a related operation in step S202 shown in FIG. 8.

Optionally, the transceiver 1505 may perform the operation of sending the CSI-RS or the DMRS in step S601, the operation of receiving the second indication information in step S604, and the operation of sending the first indication information in S606 shown in FIG. 12. The processor 1501 may perform a related operation in step S605 shown in FIG. 12.

In another possible design, the processor 1501 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1501 may store instructions 1503. When the instructions 1503 are run on the processor 1501, the communication apparatus 1500 may be enabled to perform the methods described in the foregoing method embodiments. The instructions 1503 may be fixed in the processor 1501. In this case, the processor 1501 may be implemented by using hardware.

In still another possible design, the communication apparatus 1500 may include a circuit. The circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal-oxide-semiconductor (complementary metal-oxide-semiconductor, CMOS), an N-channel metal-oxide-semiconductor (nMetal-oxide-semiconductor, NMOS), a P-channel metal-oxide-semiconductor (positive channel metal-oxide-semiconductor, PMOS), a bipolar junction transistor (bipolar junction transistor, BJT), a bipolar CMOS (BiCMOS), silicon germanium (SiGe), and gallium arsenide (GaAs).

A person skilled in the art may further understand that various illustrative logical blocks (illustrative logical blocks) and steps (steps) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the protection scope of embodiments of this application.

This embodiment of this application and the foregoing method embodiments are based on a same concept, and bring same technical effects. For a specific principle, refer to the descriptions of the foregoing method embodiments. Details are not described again.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An information transmission method, wherein the method comprises:

receiving first indication information from a first device, wherein the first indication information indicates $S_1$ orthogonal vectors, and $S_1$ is a positive integer;
determining a first channel estimation assistance matrix based on the $S_1$ orthogonal vectors; and

performing channel estimation based on the first channel estimation assistance matrix.

2. The method according to claim 1, wherein before the receiving the first indication information from the first device, the method further comprises:

determining $S_2$ orthogonal vectors, wherein $S_2$ is a positive integer; and
sending second indication information to the first device, wherein the second indication information indicates the $S_2$ orthogonal vectors, and the $S_2$ orthogonal vectors are used by the first device to determine the $S_1$ orthogonal vectors.

3. The method according to claim 1 or 2, wherein the method further comprises:

receiving a first coefficient matrix from the first device; and
the determining the first channel estimation assistance matrix based on the $S_1$ orthogonal vectors comprises:
determining the first channel estimation assistance matrix based on the $S_1$ orthogonal vectors and the first coefficient matrix.

4. The method according to claim 1 or 2, wherein the determining the first channel estimation assistance matrix based on the $S_1$ orthogonal vectors comprises:

determining $S_3$ orthogonal vectors based on the $S_1$ orthogonal vectors; and
determining the first channel estimation assistance matrix based on the $S_3$ orthogonal vectors.

5. The method according to claim 4, wherein the method further comprises:

receiving a first coefficient matrix from the first device; and
determining a second coefficient matrix based on the first coefficient matrix; and
determining the first channel estimation assistance matrix based on the $S_3$ orthogonal vectors comprises:
determining the first channel estimation assistance matrix based on the $S_3$ orthogonal vectors and the second coefficient matrix.

6. The method according to any one of claims 1 to 5, wherein the method further comprises:
if the first indication information from the first device is not received, determining the first channel estimation assistance matrix based on the $S_2$ orthogonal vectors, wherein $S_2$ is a positive integer.

7. The method according to claim 6, wherein the method further comprises: receiving the first coefficient matrix from the first device; and
the determining the first channel estimation assistance matrix based on the $S_2$ orthogonal vectors comprises:
determining the first channel estimation assistance matrix based on the $S_2$ orthogonal vectors and the first coefficient matrix.

8. The method according to claim 6, wherein the method further comprises: determining a third coefficient matrix; and
the determining the first channel estimation assistance matrix based on the $S_2$ orthogonal vectors comprises:
determining the first channel estimation assistance matrix based on the $S_2$ orthogonal vectors and the third coefficient matrix.

9. The method according to any one of claims 3, 5, 7, and 8, wherein the method further comprises:
sending a third coefficient matrix to the first device, wherein the third coefficient matrix is used by the first device to determine the first coefficient matrix.

10. The method according to any one of claims 1 to 9, wherein the method further comprises:

receiving a reference signal RS from the first device; and
determining a measured channel coefficient based on the RS; and
performing channel estimation based on the first channel estimation assistance matrix comprises: determining a target channel coefficient based on the measured channel coefficient and the first channel estimation assistance matrix.

**11.** The method according to any one of claims 1 to 9, wherein the method further comprises:

sending an RS to the first device; and
receiving a measured channel coefficient from the first device, wherein the measured channel coefficient is determined by the first device based on the RS; and
performing channel estimation based on the first channel estimation assistance matrix comprises: determining a target channel coefficient based on the measured channel coefficient and the first channel estimation assistance matrix.

**12.** The method according to claim 10 or 11, wherein the determining the target channel coefficient based on the measured channel coefficient and the first channel estimation assistance matrix comprises:

determining the target channel coefficient based on a first matrix, the measured channel coefficient, and the first channel estimation assistance matrix, wherein
the first matrix is a matrix comprising t vectors in the first channel estimation assistance matrix, t is a quantity of resources corresponding to the measured channel coefficient, and t is a positive integer.

**13.** The method according to any one of claims 1 to 12, wherein the method further comprises:

receiving third indication information from the first device, wherein the third indication information indicates a first bandwidth resource; and
the target channel coefficient obtained by performing channel estimation based on the first channel estimation assistance matrix is a target channel coefficient corresponding to the first bandwidth resource.

**14.** The method according to any one of claims 1 to 12, wherein the method further comprises:

receiving third indication information from the first device, wherein the third indication information indicates a first bandwidth resource; and
determining a second bandwidth resource based on the first bandwidth resource, wherein
the target channel coefficient obtained by performing channel estimation based on the first channel estimation assistance matrix is a target channel coefficient corresponding to the second bandwidth resource.

**15.** The method according to claim 13 or 14, wherein the method further comprises:

performing channel estimation based on a second channel estimation assistance matrix to obtain a target channel coefficient corresponding to a third bandwidth resource, wherein the third bandwidth resource is different from the first bandwidth resource, and the second channel estimation assistance matrix is determined based on $S_4$ orthogonal vectors; and
the second channel estimation assistance matrix is the same as or different from the first channel estimation assistance matrix, and the $S_4$ orthogonal vectors are the same as or different from orthogonal vectors used to determine the first channel estimation assistance matrix.

**16.** An information transmission method, wherein the method comprises:

determining $S_1$ orthogonal vectors, wherein $S_1$ is a positive integer; and
sending first indication information to a second device, wherein the first indication information indicates the $S_1$ orthogonal vectors, and the $S_1$ orthogonal vectors are used by the second device to determine a first channel estimation assistance matrix.

**17.** The method according to claim 16, wherein the method further comprises:

receiving second indication information from the second device, wherein the second indication information indicates $S_2$ orthogonal vectors, and $S_2$ is a positive integer; and
determining the $S_1$ orthogonal vectors comprises: determining the $S_1$ orthogonal vectors based on the $S_2$ orthogonal vectors.

**18.** The method according to claim 16 or 17, wherein the method further comprises:

sending a first coefficient matrix to the second device, wherein
the first channel estimation assistance matrix is determined by the second device based on the $S_1$ orthogonal vectors and the first coefficient matrix.

19. The method according to claim 16 or 17, wherein that the $S_1$ orthogonal vectors are used by the second device to determine the first channel estimation assistance matrix comprises:
the $S_1$ orthogonal vectors are used by the second device to determine $S_3$ orthogonal vectors, and the $S_3$ orthogonal vectors are used by the second device to determine the first channel estimation assistance matrix.

20. The method according to claim 19, wherein the method further comprises:

sending a first coefficient matrix to the second device, wherein the first coefficient matrix is used by the second device to determine a second coefficient matrix; and
the first channel estimation assistance matrix is determined by the second device based on the $S_3$ orthogonal vectors and the second coefficient matrix.

21. The method according to any one of claims 16 to 20, wherein the method further comprises:

if the $S_1$ orthogonal vectors are the same as the $S_2$ orthogonal vectors indicated by the second indication information from the second device, skipping sending the first indication information to the second device, wherein $S_2$ is a positive integer; and
the first channel estimation assistance matrix is determined by the second device based on the $S_2$ orthogonal vectors.

22. The method according to claim 21, wherein the method further comprises:
the first coefficient matrix is different from a third coefficient matrix from the second device, sending the first coefficient matrix to the second device, wherein the first channel estimation assistance matrix is determined by the second device based on the $S_2$ orthogonal vectors and the first coefficient matrix.

23. The method according to claim 21, wherein the method further comprises:
the first coefficient matrix is the same as a third coefficient matrix from the second device, skipping sending the first coefficient matrix to the second device, wherein the first channel estimation assistance matrix is determined by the second device based on the $S_2$ orthogonal vectors and the third coefficient matrix.

24. The method according to any one of claims 18, 20, 22, and 23, wherein the method further comprises:

receiving a third coefficient matrix from the second device; and
determining the first coefficient matrix based on the third coefficient matrix.

25. The method according to any one of claims 16 to 24, wherein the method further comprises:
sending a reference signal RS to the second device, wherein the RS is used by the second device to determine a measured channel coefficient, and the measured channel coefficient is used by the second device to perform channel estimation to obtain a target channel coefficient.

26. The method according to any one of claims 16 to 24, wherein the method further comprises:

receiving an RS from the second device;
determining a measured channel coefficient based on the RS; and
sending the measured channel coefficient to the second device, wherein the measured channel coefficient is used by the second device to perform channel estimation to obtain a target channel coefficient.

27. The method according to claim 25 or 26, wherein that the measured channel coefficient is used by the second device to perform channel estimation to obtain the target channel coefficient comprises:

the target channel coefficient is determined by the second device based on a first matrix, the measured channel coefficient, and the first channel estimation assistance matrix; and
the first matrix is a matrix comprising t vectors in the first channel estimation assistance matrix, t is a quantity of resources corresponding to the measured channel coefficient, and t is a positive integer.

**28.** The method according to any one of claims 16 to 27, wherein the method further comprises:

sending third indication information to the second device, wherein the third indication information indicates a first bandwidth resource; and

the first channel estimation assistance matrix is used by the second device to perform channel estimation on the first bandwidth resource.

**29.** The method according to any one of claims 16 to 27, wherein the method further comprises:

sending third indication information to the second device, wherein the third indication information indicates a first bandwidth resource; and

the third indication information is used by the second device to determine a second bandwidth resource, and the first channel estimation assistance matrix is used by the second device to perform channel estimation on the second bandwidth resource.

**30.** The method according to claim 28 or 29, wherein

a target channel coefficient corresponding to a third bandwidth resource is obtained by the second device by performing channel estimation based on a second channel estimation assistance matrix, the third bandwidth resource is different from the first bandwidth resource, and the second channel estimation assistance matrix is determined based on $S_4$ orthogonal vectors; and

the second channel estimation assistance matrix is the same as or different from the first channel estimation assistance matrix, and the $S_4$ orthogonal vectors are the same as or different from orthogonal vectors used by the second device to determine the first channel estimation assistance matrix.

**31.** The method according to any one of claims 1, 2, 16, and 17, wherein

$S_1$ is equal to 1, and the first channel estimation assistance matrix is the $S_1$ orthogonal vectors; or

$S_1$ is greater than 1, the $S_1$ orthogonal vectors correspond to a same resource, and the first channel estimation assistance matrix is a sub-unitary matrix comprising the $S_1$ orthogonal vectors; or

$S_1$ is greater than 1, the $S_1$ orthogonal vectors correspond to different resources, the first channel estimation assistance matrix is a Kronecker product of $M_1$ matrices, orthogonal vectors comprised in a same matrix in the $M_1$ matrices correspond to a same resource, orthogonal vectors comprised in different matrices in the $M_1$ matrices correspond to different resources, $M_1$ is an integer greater than 1, and $M_1$ is less than or equal to $S_1$.

**32.** The method according to claim 3 or 18, wherein

$S_1$ is equal to 1, and the first channel estimation assistance matrix is determined based on the $S_1$ orthogonal vectors and the first coefficient matrix; or

$S_1$ is greater than 1, the $S_1$ orthogonal vectors correspond to a same resource, and the first channel estimation assistance matrix is determined based on the first coefficient matrix and a sub-unitary matrix comprising the $S_1$ orthogonal vectors; or

$S_1$ is greater than 1, the $S_1$ orthogonal vectors correspond to different resources, the first channel estimation assistance matrix is determined based on a Kronecker product of $M_1$ matrices and the first coefficient matrix, orthogonal vectors comprised in a same matrix in the $M_1$ matrices correspond to a same resource, orthogonal vectors comprised in different matrices in the $M_1$ matrices correspond to different resources, $M_1$ is an integer greater than 1, and $M_1$ is less than or equal to $S_1$.

**33.** The method according to claim 31 or 32, wherein

$S_1$ is equal to 1, and a quantity of resources corresponding to the first channel estimation assistance matrix is equal to a quantity of resources corresponding to the $S_1$ orthogonal vectors; or

$S_1$ is greater than 1, the $S_1$ orthogonal vectors correspond to the same resource, and a quantity of resources corresponding to the first channel estimation assistance matrix is equal to a quantity of resources corresponding to any one of the $S_1$ orthogonal vectors; or

$S_1$ is greater than 1, the $S_1$ orthogonal vectors correspond to the different resources, a quantity of resources corresponding to the first channel estimation assistance matrix is equal to a product of $M_1$ values, and the $M_1$ values are quantities of resources corresponding to orthogonal vectors respectively comprised in the $M_1$

matrices.

34. The method according to claim 4 or 19, wherein

$S_3$ is equal to 1, and the first channel estimation assistance matrix is the $S_3$ orthogonal vectors; or
$S_3$ is greater than 1, the $S_3$ orthogonal vectors correspond to a same resource, and the first channel estimation assistance matrix is a sub-unitary matrix comprising the $S_3$ orthogonal vectors; or
$S_3$ is greater than 1, the $S_3$ orthogonal vectors correspond to different resources, the first channel estimation assistance matrix is a Kronecker product of $M_2$ matrices, orthogonal vectors comprised in a same matrix in the $M_2$ matrices correspond to a same resource, orthogonal vectors comprised in different matrices in the $M_2$ matrices correspond to different resources, $M_2$ is an integer greater than 1, and $M_2$ is less than or equal to $S_3$.

35. The method according to claim 5 or 20, wherein

$S_3$ is equal to 1, and the first channel estimation assistance matrix is determined based on the $S_3$ orthogonal vectors and the second coefficient matrix; or
$S_3$ is greater than 1, the $S_3$ orthogonal vectors correspond to a same resource, and the first channel estimation assistance matrix is determined based on the second coefficient matrix and a sub-unitary matrix comprising the $S_3$ orthogonal vectors; or
$S_3$ is greater than 1, the $S_3$ orthogonal vectors correspond to different resources, the first channel estimation assistance matrix is determined based on a Kronecker product of $M_2$ matrices and the second coefficient matrix, orthogonal vectors comprised in a same matrix in the $M_2$ matrices correspond to a same resource, orthogonal vectors comprised in different matrices in the $M_2$ matrices correspond to different resources, $M_2$ is an integer greater than 1, and $M_2$ is less than or equal to $S_3$.

36. The method according to claim 34 or 35, wherein

$S_3$ is equal to 1, and a quantity of resources corresponding to the first channel estimation assistance matrix is equal to a quantity of resources corresponding to the $S_3$ orthogonal vectors; or
$S_3$ is greater than 1, the $S_3$ orthogonal vectors correspond to the same resource, and a quantity of resources corresponding to the first channel estimation assistance matrix is equal to a quantity of resources corresponding to any one of the $S_3$ orthogonal vectors; or
$S_3$ is greater than 1, the $S_3$ orthogonal vectors correspond to the different resources, a quantity of resources corresponding to the first channel estimation assistance matrix is equal to a product of $M_2$ values, and the $M_2$ values are quantities of resources corresponding to orthogonal vectors respectively comprised in the $M_2$ matrices.

37. The method according to claim 6 or 21, wherein

$S_2$ is equal to 1, and the first channel estimation assistance matrix is the $S_2$ orthogonal vectors; or
$S_2$ is greater than 1, the $S_2$ orthogonal vectors correspond to a same resource, and the first channel estimation assistance matrix is a sub-unitary matrix comprising the $S_2$ orthogonal vectors; or
$S_2$ is greater than 1, the $S_2$ orthogonal vectors correspond to different resources, the first channel estimation assistance matrix is a Kronecker product of $M_3$ matrices, orthogonal vectors comprised in a same matrix in the $M_3$ matrices correspond to a same resource, orthogonal vectors comprised in different matrices in the $M_3$ matrices correspond to different resources, $M_3$ is an integer greater than 1, and $M_3$ is less than or equal to $S_2$.

38. The method according to claim 7 or 22, wherein

$S_2$ is equal to 1, and the first channel estimation assistance matrix is determined based on the $S_2$ orthogonal vectors and the first coefficient matrix; or
$S_2$ is greater than 1, the $S_2$ orthogonal vectors correspond to a same resource, and the first channel estimation assistance matrix is determined based on the first coefficient matrix and a sub-unitary matrix comprising the $S_2$ orthogonal vectors; or
$S_2$ is greater than 1, the $S_2$ orthogonal vectors correspond to different resources, the first channel estimation assistance matrix is determined based on a Kronecker product of $M_3$ matrices and the first coefficient matrix, orthogonal vectors comprised in a same matrix in the $M_3$ matrices correspond to a same resource, orthogonal vectors comprised in different matrices in the $M_3$ matrices correspond to different resources, $M_3$ is an integer

greater than 1, and $M_3$ is less than or equal to $S_2$.

39. The method according to claim 8 or 23, wherein

$S_2$ is equal to 1, and the first channel estimation assistance matrix is determined based on the $S_2$ orthogonal vectors and the third coefficient matrix; or

$S_2$ is greater than 1, the $S_2$ orthogonal vectors correspond to a same resource, and the first channel estimation assistance matrix is determined based on the third coefficient matrix and a sub-unitary matrix comprising the $S_2$ orthogonal vectors; or

$S_2$ is greater than 1, the $S_2$ orthogonal vectors correspond to different resources, the first channel estimation assistance matrix is determined based on a Kronecker product of $M_3$ matrices and the third coefficient matrix, orthogonal vectors comprised in a same matrix in the $M_3$ matrices correspond to a same resource, orthogonal vectors comprised in different matrices in the $M_3$ matrices correspond to different resources, $M_3$ is an integer greater than 1, and $M_3$ is less than or equal to $S_2$.

40. The method according to any one of claims 37 to 39, wherein

$S_2$ is equal to 1, and a quantity of resources corresponding to the first channel estimation assistance matrix is equal to a quantity of resources corresponding to the $S_2$ orthogonal vectors; or

$S_2$ is greater than 1, the $S_2$ orthogonal vectors correspond to the same resource, and a quantity of resources corresponding to the first channel estimation assistance matrix is equal to a quantity of resources corresponding to any one of the $S_2$ orthogonal vectors; or

$S_2$ is greater than 1, the $S_2$ orthogonal vectors correspond to the different resources, a quantity of resources corresponding to the first channel estimation assistance matrix is equal to a product of $M_3$ values, and the $M_3$ values are quantities of resources corresponding to orthogonal vectors respectively comprised in the $M_3$ matrices.

41. The method according to any one of claims 2, 6, 7, 17, 21 to 23, and 37 to 40, wherein

each of the $S_2$ orthogonal vectors corresponds to a resource of one or more of the following domains: time domain, frequency domain, and space domain; and

the space domain comprises one or more of the following domains: a receive horizontal direction antenna port, a receive vertical direction antenna port, a transmit horizontal direction antenna port, a transmit vertical direction antenna port, a receive antenna port, a transmit antenna port, a vertical direction antenna port, and a horizontal direction antenna port.

42. The method according to any one of claims 2, 6, 7, 17, 21 to 23, and 37 to 41, wherein
a dimension of each of the $S_2$ orthogonal vectors is equal to a quantity of resources corresponding to the orthogonal vector.

43. The method according to any one of claims 2, 6, 7, 17, 21 to 23, and 37 to 42, wherein
each of the $S_2$ orthogonal vectors is an orthogonal vector comprised in a discrete Fourier transform DFT matrix, a discrete cosine transform DCT matrix, or a Grassmannian.

44. The method according to any one of claims 4, 5, 19, 20, and 34 to 36, wherein

each of the $S_3$ orthogonal vectors corresponds to a resource of one or more of the following domains: time domain, frequency domain, and space domain; and

the space domain comprises one or more of the following domains: a receive horizontal direction antenna port, a receive vertical direction antenna port, a transmit horizontal direction antenna port, a transmit vertical direction antenna port, a receive antenna port, a transmit antenna port, a vertical direction antenna port, and a horizontal direction antenna port.

45. The method according to any one of claims 4, 5, 19, 20, 34 to 36, and 44, wherein
a dimension of each of the $S_3$ orthogonal vectors is equal to a quantity of resources corresponding to the orthogonal vector.

46. The method according to any one of claims 4, 5, 19, 20, 34 to 36, 44, and 45, wherein

each of the $S_3$ orthogonal vectors is an orthogonal vector comprised in a DFT matrix, a DCT matrix, or a Grassmannian.

47. The method according to any one of claims 1 to 46, wherein

each of the $S_1$ orthogonal vectors corresponds to a resource of one or more of the following domains: time domain, frequency domain, and space domain; and
the space domain comprises one or more of the following domains: a receive horizontal direction antenna port, a receive vertical direction antenna port, a transmit horizontal direction antenna port, a transmit vertical direction antenna port, a receive antenna port, a transmit antenna port, a vertical direction antenna port, and a horizontal direction antenna port.

48. The method according to any one of claims 1 to 47, wherein
a dimension of each of the $S_1$ orthogonal vectors is equal to a quantity of resources corresponding to the orthogonal vector.

49. The method according to any one of claims 1 to 48, wherein
each of the $S_1$ orthogonal vectors is an orthogonal vector comprised in a DFT matrix, a DCT matrix, or a Grassmannian.

50. The method according to any one of claims 2, 17, and 21 to 23, wherein that the second indication information indicates the $S_2$ orthogonal vectors comprises:

the second indication information comprises the $S_2$ orthogonal vectors; or
the second indication information comprises an index corresponding to each of the $S_2$ orthogonal vectors; or
the second indication information comprises a second moment, and the second moment is used to indicate the $S_2$ orthogonal vectors.

51. The method according to any one of claims 2, 17, 21 to 23, and 50, wherein
the second indication information further indicates a dimension of each of the $S_2$ orthogonal vectors.

52. The method according to any one of claims 1 to 51, wherein that the first indication information indicates the $S_1$ orthogonal vectors comprises:

the first indication information comprises the $S_1$ orthogonal vectors; or
the first indication information comprises an index corresponding to each of the $S_1$ orthogonal vectors; or
the first indication information comprises a first moment, and the first moment is used to indicate the $S_1$ orthogonal vectors.

53. The method according to any one of claims 1 to 52, wherein
the first indication information further indicates a dimension of each of the $S_1$ orthogonal vectors.

54. The method according to any one of claims 10, 11, 25, and 26, wherein
the target channel coefficient is obtained by performing linear transformation on the measured channel coefficient based on the first channel estimation assistance matrix.

55. The method according to claim 12 or 27, wherein
the target channel coefficient is obtained by performing linear transformation on the measured channel coefficient based on the first matrix and the first channel estimation assistance matrix.

56. The method according to any one of claims 10 to 12, 25 to 27, 54, and 55, wherein

a resource corresponding to the target channel coefficient is the same as a resource corresponding to the first channel estimation assistance matrix; and
a resource corresponding to the measured channel coefficient is comprised in the resource corresponding to the target channel coefficient.

57. A communication apparatus, wherein the apparatus comprises a module or a unit configured to implement the method according to any one of claims 1 to 15 and claims 31 to 56, or the apparatus comprises a module or a unit configured to implement the method according to any one of claims 16 to 56.

58. A communication apparatus, comprising a processor, wherein

the processor is configured to execute a computer program or instructions in a memory, to enable the communication apparatus to perform the method according to any one of claims 1 to 15 and claims 31 to 56, or to enable the communication apparatus to perform the method according to any one of claims 16 to 56.

59. A computer-readable storage medium, wherein the computer-readable storage medium stores a computer program, and when the computer program is run, the method according to any one of claims 1 to 15 and claims 31 to 56 is implemented, or the method according to any one of claims 16 to 56 is implemented.

60. A computer program product, wherein the computer program product comprises computer program code, and when the computer program code is run, the method according to any one of claims 1 to 15 and claims 31 to 56 is implemented, or the method according to any one of claims 16 to 56 is implemented.

First device → ← Second device

FIG. 1

Base station

Terminal device

FIG. 2

Terminal device

Base station

Core network

External network

FIG. 3

Terminal device

Base station

Radio resource control RRC

RRC

Service data adaptation protocol SDAP

SDAP

Packet data convergence protocol PDCP

PDCP

Radio link control RLC

RLC

Medium access control MAC

MAC

Physical layer PHY

PHY

User plane | Control plane

User plane | Control plane

FIG. 4

FIG. 5

Information transmission method 100

```
┌─────────────┐                              ┌──────────────┐
│ First device│                              │ Second device│
└──────┬──────┘                              └──────┬───────┘
       │                                            │
┌──────┴──────────────┐                             │
│ S101: The first     │                             │
│ device              │                             │
│ determines S₁       │                             │
│ orthogonal          │                             │
│ vectors, where S₁   │                             │
│ is a                │                             │
│ positive integer    │                             │
└──────┬──────────────┘                             │
       │  S102: First indication information, where │
       │  the first indication information indicates│
       │         the S₁ orthogonal vectors          │
       ├───────────────────────────────────────────▶│
       │                               ┌─────────────┴──────────────┐
       │                               │ S103: The second device    │
       │                               │ determines a first channel │
       │                               │ estimation assistance      │
       │                               │ matrix based               │
       │                               │ on the S₁ orthogonal vectors│
       │                               └─────────────┬──────────────┘
       │                               ┌─────────────┴──────────────┐
       │                               │ S104: The second device    │
       │                               │ performs                   │
       │                               │ channel estimation based   │
       │                               │ on the                     │
       │                               │ first channel estimation   │
       │                               │ assistance                 │
       │                               │ matrix                     │
       │                               └─────────────┬──────────────┘
       │                                            │
```

FIG. 6a

First device

Second device

The second device determines $S_2$ orthogonal vectors

Second indication information, where the second indication information indicates the $S_2$ orthogonal vectors

S101: The first device determines $S_1$ orthogonal vectors based on the $S_2$ orthogonal vectors

S102: First indication information, where the first indication information indicates the $S_1$ orthogonal vectors

S103: The second device determines a first channel estimation assistance matrix based on the $S_1$ orthogonal vectors

S104: The second device performs channel estimation based on the first channel estimation assistance matrix

FIG. 6b

$F_{n \times s}$

n=3

SC #0

SC #1

SC #2

$G_{m \times l}$

m=4

Port #0

Port #1

Port #2

Port #3

SC: subcarrier
Port: port

FIG. 7a

$$\boldsymbol{F}_{\text{n}\times\text{s}} \otimes \boldsymbol{G}_{\text{m}\times l} = \begin{bmatrix} \text{F}_{11}\boldsymbol{G}_{\text{m}\times l} & \cdots & \text{F}_{1\text{s}}\boldsymbol{G}_{\text{m}\times l} \\ \vdots & \ddots & \vdots \\ \text{F}_{\text{n}1}\boldsymbol{G}_{\text{m}\times l} & \cdots & \text{F}_{\text{ns}}\boldsymbol{G}_{\text{m}\times l} \end{bmatrix}$$

$n \times m = 12$

Port #0
Port #1
Port #2 — SC #0
Port #3
Port #0
Port #1
Port #2 — SC #1
Port #3
Port #0
Port #1
Port #2 — SC #2
Port #3

SC: subcarrier
Port: port

FIG. 7b

$$\boldsymbol{G}_{\text{m}\times l} \otimes \boldsymbol{F}_{\text{n}\times\text{s}} = \begin{bmatrix} \text{G}_{11}\boldsymbol{F}_{\text{n}\times\text{s}} & \cdots & \text{G}_{1l}\boldsymbol{F}_{\text{n}\times\text{s}} \\ \vdots & \ddots & \vdots \\ \text{G}_{\text{m}1}\boldsymbol{F}_{\text{n}\times\text{s}} & \cdots & \text{G}_{\text{m}l}\boldsymbol{F}_{\text{n}\times\text{s}} \end{bmatrix}$$

$n \times m = 12$

SC #0
SC #1 — Port #0
SC #2
SC #0
SC #1 — Port #1
SC #2
SC #0
SC #1 — Port #2
SC #2
SC #0
SC #1 — Port #3
SC #2

SC: subcarrier
Port: port

FIG. 7c

Information transmission method 200

| First device | | Second device |

S201: Second indication information, where the second indication information indicates $S_2$ orthogonal vectors

S202: The first device determines $S_1$ orthogonal vectors

S203: First indication information, where the first indication information indicates the $S_1$ orthogonal vectors

S204a: If the second device receives the first indication information from the first device, the second device determines a first channel estimation assistance matrix based on the $S_1$ orthogonal vectors indicated by the first indication information

S204b: If the second device fails to receive the first indication information from the first device, the second device determines a first channel estimation assistance matrix based on the $S_2$ orthogonal vectors

S205: The second device performs channel estimation based on the first channel estimation assistance matrix

FIG. 8

```
┌──────────────┐                                    ┌─────────────────┐
│ Base station │                                    │ Terminal device │
└──────┬───────┘                                    └────────┬────────┘
       │                                                     │
       │  S301: Channel state information reference signal    │
       │    CSI-RS or demodulation reference signal DMRS       │
       │ ───────────────────────────────────────────────────▶ │
       │                                                     │
       │                            ┌────────────────────────┴────────────┐
       │                            │ S302: The terminal device determines │
       │                            │ a measured channel coefficient based │
       │                            │    on the CSI-RS or the DMRS          │
       │                            └────────────────────────┬────────────┘
 ┌─────┴────────────────────┐                                │
 │ S303: The base station   │                                │
 │ determines S₁ orthogonal │                                │
 │ vectors                  │                                │
 └─────┬────────────────────┘                                │
       │                                                     │
       │  S304: First indication information, where the first │
       │  indication information indicates the S₁ orthogonal  │
       │  vectors                                             │
       │ ───────────────────────────────────────────────────▶ │
       │                                                     │
```

S302: The terminal device determines a measured channel coefficient based on the CSI-RS or the DMRS

S303: The base station determines $S_1$ orthogonal vectors

S304: First indication information, where the first indication information indicates the $S_1$ orthogonal vectors

S305: The terminal device determines a first channel estimation assistance matrix based on the $S_1$ orthogonal vectors

S306: The terminal device determines a target channel coefficient based on the first channel estimation assistance matrix and the measured channel coefficient

FIG. 9

```
┌──────────────┐                              ┌──────────────────┐
│ Base station │                              │ Terminal device  │
└──────┬───────┘                              └─────────┬────────┘
       │ S401: Channel state information reference signal CSI-RS
       │─────────────────────────────────────────────▶ │
       │                              ┌──────────────────────────┐
       │                              │ S402: The terminal device │
       │                              │ determines a measured channel│
       │                              │ coefficient based on the CSI-RS│
       │                              └──────────────────────────┘
       │       S403: Measured channel coefficient          │
       │ ◀────────────────────────────────────────────────│
       │                                                   │
       │                                                   │
       │                              ┌──────────────────────────┐
       │                              │ S404: The terminal device │
       │                              │ determines S₁ orthogonal vectors│
       │                              └──────────────────────────┘
       │  S405: First indication information, where the first │
       │  indication information indicates the S₁ orthogonal vectors│
       │ ◀────────────────────────────────────────────────│
┌────────────────────────────────┐                        │
│ S406: The base station determines S₃│                    │
│ orthogonal vectors based on the S₁ │                     │
│ orthogonal vectors             │                         │
└────────────────────────────────┘                        │
┌────────────────────────────────┐                        │
│ S407: The base station determines a first│                │
│ channel estimation assistance matrix│                     │
│ based on the S₃ orthogonal vectors│                       │
└────────────────────────────────┘                        │
┌────────────────────────────────┐                        │
│ S408: The base station determines a│                     │
│ target channel coefficient based on the│                 │
│ first channel estimation assistance matrix│              │
│ and the measured channel coefficient│                    │
└────────────────────────────────┘                        │
       │                                                   │
```

FIG. 10

Base station

Terminal device

S501: Sounding reference signal SRS

S502: The base station determines a measured channel coefficient based on the SRS

S503: The terminal device determines $S_1$ orthogonal vectors

S504: First indication information, where the first indication information indicates the $S_1$ orthogonal vectors

S505: The base station determines $S_3$ orthogonal vectors based on the $S_1$ orthogonal vectors

S506: The base station determines a first channel estimation assistance matrix based on the $S_3$ orthogonal vectors

S507: The base station determines a target channel coefficient based on the first channel estimation assistance matrix and the measured channel coefficient

FIG. 11

Base station          Terminal device

S601: Channel state information reference signal CSI-RS or demodulation reference signal DMRS

S602: The terminal device determines a measured channel coefficient based on the CSI-RS or the DMRS

S603: The terminal device determines $S_2$ orthogonal vectors

S604: Second indication information, where the second indication information indicates the $S_2$ orthogonal vectors

S605: The base station determines $S_1$ orthogonal vectors based on the $S_2$ orthogonal vectors

S606: First indication information, where the first indication information indicates the $S_1$ orthogonal vectors

S607a: If the terminal device receives the first indication information from the base station, the terminal device determines a first channel estimation assistance matrix based on the $S_1$ orthogonal vectors indicated by the first indication information

S607b: If the terminal device fails to receive the first indication information from the base station, the terminal device determines a first channel estimation assistance matrix based on the $S_2$ orthogonal vectors

S608: The terminal device determines a target channel coefficient based on the first channel estimation assistance matrix and the measured channel coefficient

FIG. 12

```
┌──────────────┐                    ┌──────────────┐
│  Bandwidth   │ ─ ─ ┐       ┌──────────────┐      │  Bandwidth   │ ─ ─ ┐   ┌──────────────┐
│ resource #a  │      ─ ─ ─  │ First channel│      │ resource #a  │      ─  │First channel │
└──────────────┘             │  estimation  │      └──────────────┘         │ estimation   │
                             │  assistance  │                               │ assistance   │
┌──────────────┐             │  matrix #1   │      ┌──────────────┐         │ matrix #1    │
│  Bandwidth   │ ─ ─ ─ ─ ─ ─ │              │      │  Bandwidth   │         └──────────────┘
│ resource #b  │             └──────────────┘      │ resource #b  │ ─ ─ ┐
└──────────────┘                                   └──────────────┘      ─  ┌──────────────┐
                                                                            │First channel │
                                                                            │ estimation   │
                                                                            │ assistance   │
                                                                            │ matrix #2    │
                                                                            └──────────────┘
```

(A)                                                    (B)

## FIG. 13a

Bandwidth part BWP —
| |
|---|
| Bandwidth resource #1 |
| Bandwidth resource #2 |
| Bandwidth resource #3 |
| $\vdots$ |
| Bandwidth resource #$N_{unitBWP}$ |

## FIG. 13b

Communication apparatus 1400

Processing unit — 1401

Communication unit — 1402

Storage unit — 1403

## FIG. 14

Communication apparatus 1500

Processor 1501

Instructions 1503

Memory 1502

Instructions 1504

Transceiver 1505

Antenna 1506

FIG. 15

## INTERNATIONAL SEARCH REPORT

| International application No. |
| --- |
| **PCT/CN2023/113412** |

| A. | CLASSIFICATION OF SUBJECT MATTER |
| --- | --- |

H04L5/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L H04B H04W

Documentation searched other than minimum documentation to the extent that such documents are included in the fields searched

Electronic data base consulted during the international search (name of data base and, where practicable, search terms used)

CNTXT, ENTXT, ENTXTC, WPABSC, VEN: 基站, 终端, 信道, 估计, 测量, 正交基, 矩阵, 系数, 辅助, 指示, 参考信号, 资源, 频域, 时域, 空域, 天线, 端口, 波束, 载波, 时隙, 帧, base station, BS, terminal, UE, channel, estimation, measurement, orthogonal basis, matrix, coefficient, assistant, indicate, reference signal, resource, frequency, time, slot, frame, antenna, port, beam, carrier

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2023239028 A1 (HUAWEI TECHNOLOGIES CO., LTD.) 27 July 2023 (2023-07-27) description, paragraphs 49-70 and 98-221 | 1-60 |
| A | US 2017244580 A1 (FUJITSU LIMITED) 24 August 2017 (2017-08-24) entire document | 1-60 |
| A | WO 2018027813 A1 (HUAWEI TECHNOLOGIES CO., LTD.) 15 February 2018 (2018-02-15) entire document | 1-60 |
| A | CN 111344955 A (SONY CORP.) 26 June 2020 (2020-06-26) entire document | 1-60 |
| A | WO 2022021443 A1 (HUAWEI TECHNOLOGIES CO., LTD.) 03 February 2022 (2022-02-03) entire document | 1-60 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 April 2024** | **24 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/113412**

| Patent document cited in search report | | | Publication date (day/month/year) | Patent family member(s) | | | Publication date (day/month/year) |
|---|---|---|---|---|---|---|---|
| US | 2023239028 | A1 | 27 July 2023 | EP | 4187812 | A1 | 31 May 2023 |
| | | | | WO | 2022022216 | A1 | 03 February 2022 |
| | | | | CN | 114070436 | A | 18 February 2022 |
| US | 2017244580 | A1 | 24 August 2017 | JP | 2017152926 | A | 31 August 2017 |
| WO | 2018027813 | A1 | 15 February 2018 | CN | 109478955 | A | 15 March 2019 |
| CN | 111344955 | A | 26 June 2020 | WO | 2019096138 | A1 | 23 May 2019 |
| | | | | US | 2023064870 | A1 | 02 March 2023 |
| | | | | US | 2024048317 | A1 | 08 February 2024 |
| | | | | US | 2020235875 | A1 | 23 July 2020 |
| | | | | EP | 3703272 | A1 | 02 September 2020 |
| | | | | CN | 109787664 | A | 21 May 2019 |
| | | | | CN | 115242272 | A | 25 October 2022 |
| WO | 2022021443 | A1 | 03 February 2022 | CN | 115244864 | A | 25 October 2022 |

Form PCT/ISA/210 (patent family annex) (July 2022)